# EUROPÄISCHE PATENTSCHRIFT

(11) **EP 0 774 493 B1**
(45) Veröffentlichungstag und Bekanntmachung des Hinweises auf die Patenterteilung: **04.04.2001**
(21) Anmeldenummer: 96117738.3
(22) Anmeldetag: 06.11.1996
(51) Int. Cl.: C09B 62/507, C09B 62/026, C09B 62/08, C09B 62/24, C09B 62/40

(54) **Faserreaktive Azofarbstoffe, Verfahren zu ihrer Herstellung und ihre Verwendung**
Fiber-reactive azo dyestuffs, process for their preparation and use thereof
Colorants azoiques réactifs sur la fibre, procédé pour leur préparation et leur utilisation

(30) Priorität: 15.11.1995 DE 19542547
(43) Veröffentlichungstag der Anmeldung: 21.05.1997
(73) Patentinhaber: DyStar Textilfarben GmbH & Co. Deutschland KG, 60318 Frankfurt am Main (DE)
(72) Erfinder: Russ, Werner Hubert, Dr., 65439 Flörsheim (DE); Schumacher, Christian, Dr., 65779 Kelkheim (DE); Reddig, Wolfram, Dr., 51373 Leverkusen (DE)

(56) Entgegenhaltungen:
- EP-A- 0 167 490
- EP-A- 0 581 733
- EP-A- 0 627 471
- EP-A- 0 646 629
- EP-A- 0 652 262

## Beschreibung

Die Erfindung liegt auf dem technischen Gebiet der faserreaktiven Farbstoffe.

Faserreaktive Farbstoffe sind bereits aus zahlreichen Veröffentlichungen bekannt, wie beispielsweise aus den U.S.-Patentschriften Nrs. 3 718 641, 4 515 598, 4 649 193, 4 746 732, 4 935 501 und 4 996 304, der deutschen Offenlegungsschrift Nr. 1 922 940 und den europäischen Patentanmeldungs-Veröffentlichungen Nrs. 0 040 806 , 0 652 262 und 0 167 490 sowie des weiteren aus den deutschen Offenlegungsschriften Nrs. 4 318 620 und 4 333 777.

Der vorliegenden Erfindung lag die Aufgabe zugrunde, verbesserte faserreaktive Farbstoffe zur Verfügung zu stellen.

Mit der vorliegenden Erfindung wurden neue faserreaktive Farbstoffe gefunden, die der allgemeinen Formel **(1)** 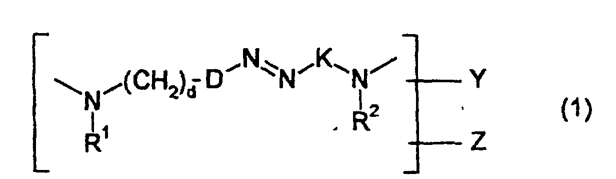 entsprechen, in welcher bedeuten:
- D: ist der Rest einer Diazokomponente der Benzol- oder Naphthalinreihe;
- d: ist die Zahl Null oder 1;
- K: ist der Rest einer Kupplungskomponente der allgemeinen Formel (2) 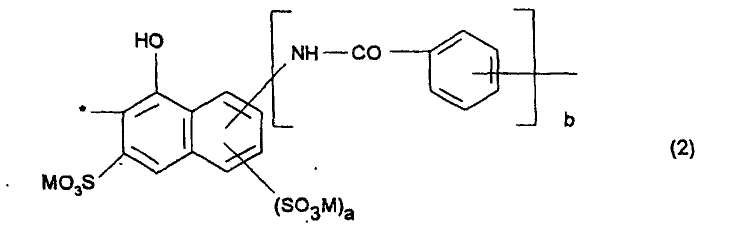 in welcher
- M: Wasserstoff oder ein Alkalimetall bedeutet,
- a: die Zahl Null oder 1 bedeutet (wobei im Falle von a gleich Null diese Gruppierung Wasserstoff bedeutet),
- b: die Zahl Null oder 1 ist und die mit ^{*} markierte Bindung an die Azogruppe gebunden ist;
- R¹: ist Wasserstoff oder Alkyl von 1 bis 6 C-Atomen, das substituiert sein kann;
- R²: ist Wasserstoff oder Alkyl von 1 bis 6 C-Atomen, das substituiert sein kann;
- Y: ist an den Aminorest -NR¹- oder -NR²- gebunden und ist ein Rest der allgemeinen Formel (3) 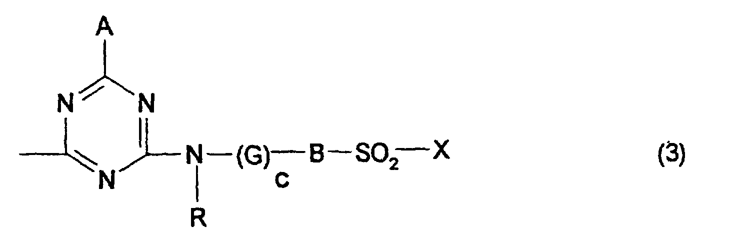 in welcher
- R: Wasserstoff, Alkyl von 1 bis 4 C-Atomen ist, das substituiert sein kann, oder Phenyl ist, das substituiert sein kann, und
- A: Amino, Cyanoamino, Alkoxy von 1 bis 4 C-Atomen, Phenoxy, der Rest eines N-haltigen und gegebenenfalls ein weiteres Heteroatom enthaltenden Heterocyclus, wie Pyridinyl oder durch Carboxy oder Aminocarbonyl substituiertes Pyridinyl, ist oder der Rest eines N-haltigen und gegebenenfalls eine weitere Heterogruppe oder Heteroatom enthaltenden gesättigten Heterocyclus, wie Morpholino, Piperidino, Pyrrolidino und Piperazino, ist oder Alkylamino mit einem Alkyl vonl bis 4 C-Atomen, das durch Substituenten aus der Gruppe Sulfo, Carboxy, Methyl, Ethyl und Ethoxy substituiert sein kann Dialkylamino mit Alkylresten von 1 bis 4 C-Atomen, die durch Substituenten aus der Gruppe Sulfo, Carboxy, Methyl, Ethyl und Ethoxy substituiert sein können, oder gegebenenfalls im Phenylrest substituiertes Phenylamino ist,
- c: die Zahl Null oder 1 ist,
- G: Phenylen ist, das substituiert sein kann,
- B: Alkylen von 1 bis 6 C-Atomen oder Ethylen-oxy-ethylen ist und
- X: β-Hydroxyethyl, Vinyl oder Ethyl ist, das in β-Stellung durch einen alkalisch eliminierbaren Substituenten substituiert ist;
- Z: ist an den Aminorest -NR¹- oder -NR²- gebunden und ist ein heterocyclischer faserreaktiver Rest, der von Y verschieden ist.

In den oben angegebenen allgemeinen Formeln sowie in den nachfolgenden allgemeinen Formeln können die einzelnen Formelglieder bei sowohl verschiedener als auch gleicher Bezeichnung innerhalb einer allgemeinen Formel im Rahmen ihrer Bedeutung zueinander gleiche oder voneinander verschiedene Bedeutungen haben.

Alkalisch abspaltbare Substituenten in β-Stellung der für den Formelrest X stehenden Ethylgruppe sind beispielsweise Sulfato, Thiosulfato, Alkanoyloxy von 2 bis 5 C-Atomen, wie Propionyloxy und Acetyloxy, Phosphato, Methylsulfonyloxy, Rhodanido, Methylsulfonylamino, Chlor, Brom, Fluor, Benzoyloxy, Phenylsulfonyloxy, Toluolsulfonyloxy, Trimethylammonium mit einem farblosen Anion, wie beispielsweise einem Chlorid-, Hydrogensulfat- oder Hydrogencarbonat-Anion, oder ein gegebenenfalls substituierter Pyridiniumrest, wie beispielsweise ein durch gegebenenfalls substituiertes Alkyl von 1 bis 4 C-Atomen, Carboxy, Sulfo, Cyano oder Carbamoyl substituierter Pyridiniumrest.

Die Gruppen Sulfo-, Carboxy-, Phosphato-, Thiosulfato- und Sulfato- schließen sowohl deren Säureform als auch deren Salzform ein. Demgemäß bedeuten Sulfogruppen Gruppen entsprechend der allgemeinen Formel -SO₃M, Carboxygruppen Gruppen entsprechend der allgemeinen Formel -COOM, Phosphatogruppen Gruppen entsprechend der allgemeinen Formel -OPO₃M₂, Thiosulfatogruppen Gruppen entsprechend der allgemeinen Formel -S-SO₃M und Sulfatogruppen Gruppen entsprechend der allgemeinen Formel -OSO₃M, in welchen M die obengenannte Bedeutung hat.

Bevorzugte β-ständige Substituenten sind Chlor, Acetyloxy und insbesondere Thiosulfato und besonders bevorzugt Sulfato.

Faserreaktive Reste sind Gruppen, die mit den Hydroxy- oder Aminogruppen einer Faser unter Färbebedingungen unter Ausbildung kovalenter Bindungen reagieren. Faserreaktive Reste Z sind beispielsweise solche, die mindestens einen reaktiven Substituenten an einen 5- oder 6-gliedrigen aromatischheterocyclischen Ring gebunden enthalten, beispielsweise an einen Monoazin-, Diazin- oder Triazinring, insbesondere einen Pyridin-, Pyrimidin-, Pyridazin-, Pyrazin-, Thiazin-, Oxazin- oder asymmetrischen oder symmetrischen Triazinring oder an ein derartiges Ringsystem, welches einen oder mehrere ankondensierte aromatisch-carbocyclische Ringe aufweist, beispielsweise ein Chinolin-, Phthalazin-, Cinnolin-, Chinazolin-, Chinoxalin-, Acridin-, Phenazin- oder Phenanthridin-Ringsystem, und die an kein weiteres Chromophor gebunden sind.

Unter den reaktiven Substituenten am Heterocyclus sind beispielsweise zu erwähnen Halogen (Cl, Br oder F), Ammonium einschließlich Hydrazinium, Pyridinium, Picolinium, Carboxypyridinium, Sulfonium, Sulfonyl, Azido (-N₃), Rhodanido, Thioether, Oxyether, Sulfinsäure und Sulfonsäure.

Im einzelnen können beispielsweise folgende Reste für Z genannt werden: 2,4-Difluortriazinyl-6, 2,4-Dichlortriazinyl-6, Mono-halogen-sym.-triazinyl-Reste, insbesondere Monochlor- oder Monofluortriazinyl-Reste, die durch Alkyl, Aryl, Amino, Monoalkylamino, Dialkylamino, Aralkylamino, Arylamino, Morpholino, Piperidino, Pyrrolidino, Piperazino, Alkoxy, Aryloxy, Alkylthio, Arylthio substituiert sind, wobei Alkyl vorzugsweise gegebenenfalls substituiertes C₁-C₄-Alkyl, Aralkyl vorzugsweise gegebenenfalls substituiertes Phenyl-C₁-C₄-alkyl und Aryl vorzugsweise gegebenenfalls substituiertes Phenyl oder Naphthyl bedeutet (wobei bevorzugte Substituenten für Alkyl Halogen, Hydroxy, Cyano, Dialkylamino, Morpholino, C₁-C₄-Alkoxy, Carboxy, Sulfo oder Sulfato und für Phenyl und Naphthyl Sulfo, C₁-C₄-Alkyl, C₁-C₄-Alkoxy, Carboxy, Halogen, Acylamino, Hydroxy und Amino sind), weiterhin die Reste 2-Amino-4-fluortriazinyl-6, 2-Methylamino-4-fluortriazinyl-6, 2-Ethylamino-4-fluortriazinyl-6, 2-lsopropylamino-4-fluor-triazinyl-6, 2-Dimethylamino-4-fluortriazinyl-6, 2-Diethylamino-4-fluor-triazinyl-6, 2-ß-Methoxy-ethylamino-4-fluor-triazinyl-6, 2-β-Hydroxyethylamino-4-fluor-triazinyl-6, 2-Di-(β-hydroxyethylamino)-4-fluortriazinyl-6, 2-Carboxymethylamino-4-fluor-triazinyl-6, 2-Di-(carboxymethylamino)-4-fluor-triazinyl-6, 2-Sulfomethyl-methylamino-4-fluortriazinyl-6, 2-β-Cyanethylamino-4-fluor-triazinyl-6, 2-Benzylamino-4-fluortriazinyl-6, 2-β-Phenylethylamino-4-fluor-triazinyl-6, 2-Benzyl-methylamino-4-fluor-triazinyl-6, 2-(4'-Sulfobenzyl)-amino-4-fluor-triazinyl-6, 2-Cyclohexylamino-4-fluor-triazinyl-6, 2-(o-, m- und p-Methylphenyl)-amino-4-fluor-triazinyl-6, 2-(o-, m- und p-Sulfophenyl)-amino-4-fluor-triazinyl-6, 2-(2',5'-Disulfophenyl)-amino-4-fluor-triazinyl-6, 2-(o-, m- und p-Chlorphenyl)-amino-4-fluor-triazinyl-6, 2-(o-, mund p-Methoxyphenyl)-amino-4-fluor-triazinyl-6, 2-(2'-Methyl-4'-sulfophenyl)-amino-4-fluor-triazinyl-6, 2-(2'-Methyl-5'-sulfophenyl)-amino-4-fluor-triazinyl-6, 2-(2'-Chlor-4'-sulfophenyl)-amino-4-fluor-triazinyl-6, 2-(2'-Chlor-5'-sulfophenyl)-amino-4-fluor-triazinyl-6, 2-(2'-Methoxy-4'-sulfophenyl)-amino-4-fluor-triazinyl-6, 2-(o-, m- und p-Carboxyphenyl)-amino-4-fluor-triazinyl-6, 2-(2',4'-Disulfophenyl)-amino-4-fluor-triazinyl-6, 2-(3',5'-Disulfophenyl)-amino-4-fluortriazinyl-6, 2-(2'-Carboxy-4'-sulfophenyl)-amino-4-fluor-triazinyl-6, 2-(2'-Carboxy-5'-sulfophenyl)-amino-4-fluor-triazinyl-6, 2-(6'-Sulfonaphthyl-(2'))-amino-4-fluor-triazinyl-6, 2-(4',6'-Disulfonaphthyl-(2'))-amino-4-fluor-triazinyl-6, 2-(6',8'-Disulfonaphthyl-(2'))-amino-4-fluor-triazinyl-6, 2-(N-Methyl-N-phenyl)-amino-4-fluor-triazinyl-6, 2-(N-Ethyl-N-phenyl)-amino-4-fluor-triazinyl-6, 2-(N-β-Hydroxyethyl-N-phenyl)-amino-4-fluor-triazinyl-6, 2-(N-iso-Propyl-N-phenyl)-amino-4-fluor-triazinyl-6, 2-Morpholino-amino-4-fluor-triazinyl-6, 2-Piperidino-4-fluor-triazinyl-6, 2-(4',6',8'-Trisulfonaphthyl-(2'))-amino-4-fluor-triazinyl-6, 2-(3',6',8'-Trisulfonaphthyl-(2'))-amino-4-fluor-triazinyl-6, 2-(3',6'-Disulfonaphthyl-(1'))-amino-4-fluor-triazinyl-6, N-Methyl-N-(2,4-dichlortriazinyl-6)-carbamyl, N-Methyl-N-(2-dimethylamino-4-chlortriazinyl-6)-carbarnyl, N-Methyl- und N-Ethyl-N-(2,4-dichlortriazinyl-6)-aminoacetyl, 2-Methoxy-4-fluor-triazinyl-6, 2-Ethoxy-4-fluor-triazinyl-6, 2-Phenoxy-4-fluor-triazinyl-6, 2-(o-, mund p-Sulfophenoxy)-4-fluor-triazinyl-6, 2-(o-, m- und p-Methyl- oder -Methoxy-phenoxy)-4-fluor-triazinyl-6, 2-ß-Hydroxyethylmercapto-4-fluor-triazinyl-6, 2-Phenylmercapto-4-fluor-triazinyl-6, 2-(4'-Methylphenyl)-mercapto-4-fluortriazinyl-6, 2-(2',4'-Dinitrophenyl)-mercapto-4-fluor-triazinyl-6, 2-Methyl-4-fluor-triazinyl-6, 2-Phenyl-4-fluor-triazinyl-6 sowie deren entsprechenden 4-Chlor- bzw. 4-Brom-triazinyl-Derivate und die entsprechenden durch Halogenaustausch mit tertiären Basen, wie Trimethylamin, Triethylamin, Dimethyl-ß-hydroxyethylamin, Triethanolamin, N,N-Dimethylhydrazin, Pyridin, α-, ß- oder γ-Picolin, Nicotinsäure oder Isonicotinsäure, und mit Sulfinaten, insbesondere Benzolsulfinsäure oder Hydrogensulfit, erhältlichen Reste, des weiteren Di- oder Trihalogenpyrimidinyl-Reste, wie 2,4-Dichlorpyrimidinyl-6, 2,4,5-Trichlor-pyrimidinyl-6, 4,5-Dichlorpyrimidinyl-6, 2,4-Difluorpyrimidinyl-6, 4,5-Difluor-pyrimidinyl-6, 4-Fluor-5-chlorpyrimidinyl-6, 2,4-Difluor-5-chlorpyrimidinyl, weiterhin 2,3-Dichlorchinoxalin-5-carbonyl und 2,3-Dichlorchinoxalin-6-carbonyl.

Von den faserreaktiven Farbstoffen der allgemeinen Formel (1) sind diejenigen Farbstoffe bevorzugt, in welchen
D der Rest einer allgemeinen Formel (4a), (4b), (4c) oder (4d) 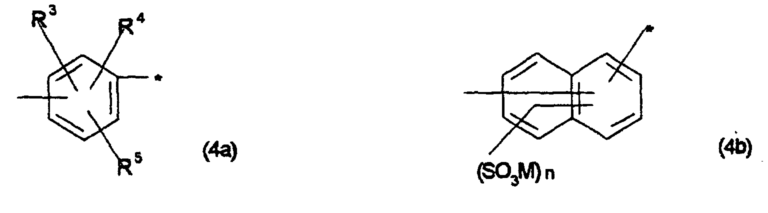 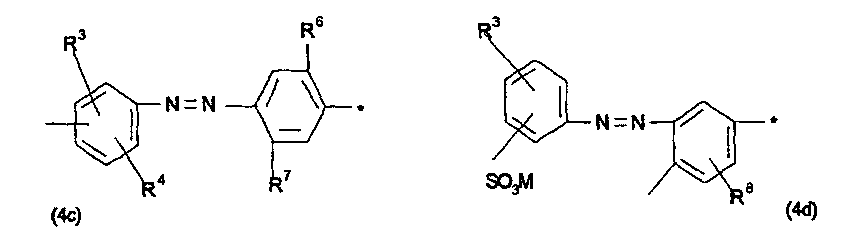 ist, in welchen
- R³: Wasserstoff oder Sulfo ist,
- R⁴: Wasserstoff oder Sulfo ist,
- R⁵: Wasserstoff, Methyl, Ethyl oder Methoxy ist,
- n: die Zahl Null, 1, 2 oder 3 ist (wobei im Falle von n gleich Null diese Gruppe für Wasserstoff steht),
- M: die obengenannte Bedeutung besitzt,
- R⁶: Wasserstoff, Alkyl von 1 bis 4 C-Atomen, wie Methyl und Ethyl, Alkoxy von 1 bis 4 C-Atomen, wie Methoxy und Ethoxy, Hydroxy oder Sulfo ist,
- R⁷: Wasserstoff, Alkyl von 1 bis 4 C-Atomen, wie Methyl und Ethyl, Alkoxy von 1 bis 4 C-Atomen, wie Methoxy und Ethoxy, Acylamino, wie insbesondere Alkanoylamino von 2 bis 5 C-Atomen, wie Acetylamino und Propionylamino, Alkylsulfonylamino von 1 bis 4 C-Atomen, wie Methylsulfonylamino und Ethylsulfonylamino, oder Ureido ist und
- R⁸: Wasserstoff, Methyl, Ethyl oder Methoxy ist,
Y, Z, R¹ und R² eine der oben angegebenen Bedeutung haben und
- K: ein Rest der allgemeinen Formel (2a) oder (2b) 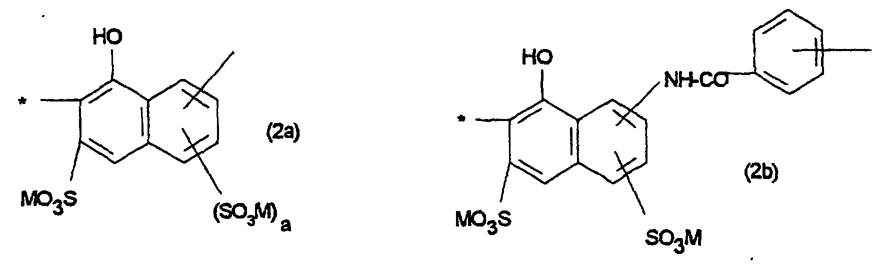 ist, in welchen M, a und ^{*} die obengenannten Bedeutungen haben, im Falle von a gleich 1 in Formel (2a) die Gruppe -SO₃M bevorzugt in 6-Stellung und die freie Bindung bevorzugt in 8-Stellung und im Falle von a gleich Null die freie Bindung bevorzugt in 6- oder 7-Stellung des 1-Hydroxy-naphthalin-Restes steht und in Formel (2b) die eine Sulfogruppe bevorzugt in 6-Stellung und die Phenylencarbonylamino-Gruppe bevorzugt in 8-Stellung des 1-Hydroxy-naphthalin-Restes gebunden ist.

In den Farbstoffen der allgemeinen Formel (1) ist der Rest Y bevorzugt ein Rest der allgemeinen Formel (3a) 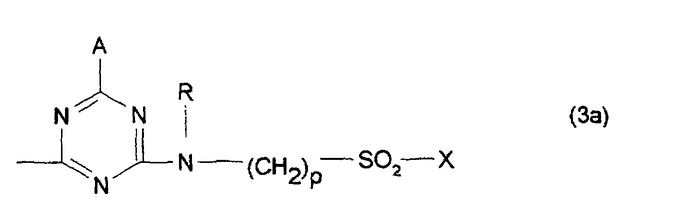 in welcher
- A: Amino, Cyanoamino, Phenoxy, Methoxy, Ethoxy, Morpholino, Pyrrolidino, Piperazino, Piperidino, 3-Carboxy-pyridinyl, 3-Aminocarbonyl-pyridinyl, Alkylamino von 1 bis 4 C-Atomen, das durch 1 oder 2 Substituenten aus der Gruppe Sulfo, Carboxy, Methyl, Ethyl, Methoxy und Ethoxy substituiert sein kann, Dialkylamino mit Alkylresten von 1 bis 4 C-Atomen, von denen eines durch 1 oder 2 Substituenten aus der Gruppe Sulfo, Carboxy, Methyl, Ethyl, Methoxy und Ethoxy substituiert sein kann, wie (β-Sulfoethyl)-amino und N-Methyl-N-(β-sulfoethyl)-amino, Phenylamino oder durch 1 oder 2 Substituenten aus der Gruppe Sulfo, Carboxy, Methyl, Ethyl, Methoxy und Ethoxy substituiertes Phenylamino ist,
- R: Wasserstoff, Methyl, Ethyl, Phenyl oder durch 1 oder 2 Substituenten aus der Gruppe Methyl, Ethyl und Sulfo substituiertes Phenyl, bevorzugt Wasserstoff, Methyl oder Phenyl, ist,
- p: für die Zahl 2 oder 3 steht und
- X: Vinyl, β-Chlorethyl oder β-Sulfatoethyl ist.

Bevorzugt sind insbesondere faserreaktive Azofarbstoffe der allgemeinen Formel (1), in welcher Y ein Rest der allgemeinen Formel (3b) 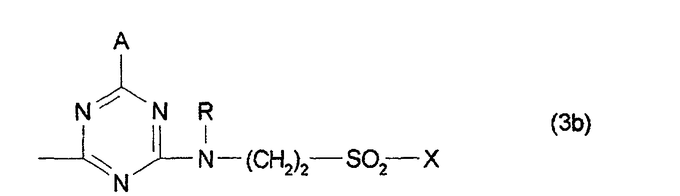 ist, in welcher
- A: Methoxy, Cyanoamino, Morpholino, 3-Carboxy-pyridinyl oder (β-Sulfoethyl)-amino ist,
- R: Phenyl ist und
- X: Vinyl oder β-Sulfatoethyl bedeutet.

Von den erfindungsgemäßen faserreaktiven Azofarbstoffen sind weiterhin solche bevorzugt, in welchen Z ein faserreaktiver fluorhaltiger Pyrimidinyl-6-Rest oder ein Rest der allgemeinen Formel (5) 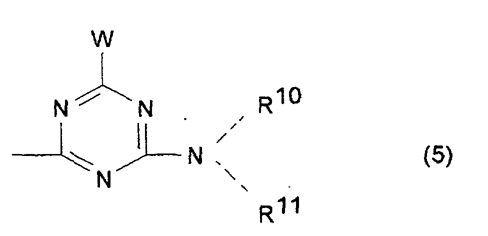 ist, in welcher bedeuten:
- W: ist Chlor, Fluor oder ein gegebenenfalls substituierter, wie beispielsweise durch Carboxy oder Sulfo substituierter, Pyridiniumrest;
- R¹⁰: ist Wasserstoff, Alkyl von 1 bis 4 C-Atomen, substituiertes Alkyl von 1 bis 4 C-Atomen (wie beispielsweise durch Halogen, Cyano, Alkoxy von 1 bis 4 C-Atomen, Carboxy, Sulfo, Sulfato, Hydroxy, Phenyl oder durch Phenyl, das durch Substituenten aus der Gruppe Chlor, Methyl, Ethyl, Methoxy, Ethoxy, Sulfo und Carboxy substituiert ist), wie Benzyl und Phenethyl, Cycloalkyl mit 5 oder 6 C-Atomen, wie Cyclohexyl, Phenyl, Naphthyl oder substituiertes Phenyl oder Naphthyl, wie beispielsweise durch Substituenten aus der Gruppe Halogen, Nitro, Cyano, Trifluormethyl, Sulfamoyl, Carbamoyl, Alkyl von1 bis 4 C-Atomen, Alkoxy von 1 bis 4 C-Atomen, Alkanoylamino von 2 bis 5 C-Atomen, Benzoylamino, Ureido, Hydroxy, Carboxy, Sulfomethyl und Sulfo, bevorzugt aus der Gruppe Chlor, Methyl, Ethyl, Methoxy, Ethoxy, Sulfo und Carboxy substituiertes Phenyl oder Naphthyl;
- R¹¹: hat eine der für R¹⁰ angegebenen Bedeutungen, oder die Gruppe -NR¹⁰R¹¹ bildet den N-Morpholino-, N-Piperidino- oder N-Piperazino-Rest.

Bevorzugt von den Farbstoffen der allgemeinen Formel (1) sind insbesondere solche entsprechend der allgemeinen Formel (1a) 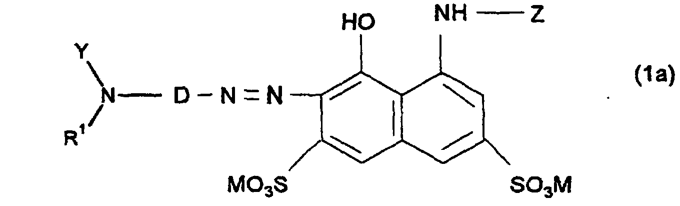 in welcher Y, D, M und Z eine der obengenannten, insbesondere bevorzugten, Bedeutungen besitzen und Z insbesondere bevorzugt der 2-Fluor-4-(N-morpholino)-1,3,5-triazin-6-yl-Rest ist.

Von den erfindungsgemäßen faserreaktiven Azofarbstoffen der allgemeinen Formel (1) können weiterhin diejenigen hervorgehoben werden, die den allgemeinen Formeln (1A) bis (1N) 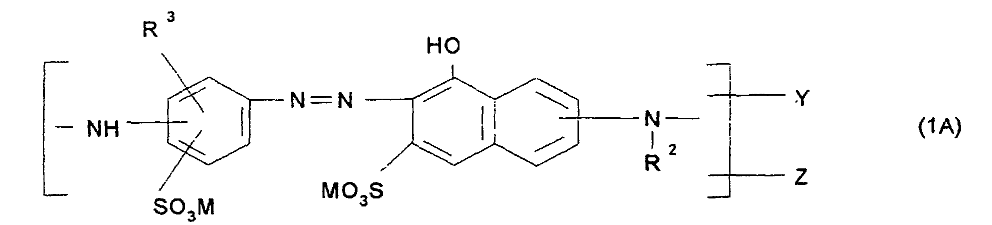 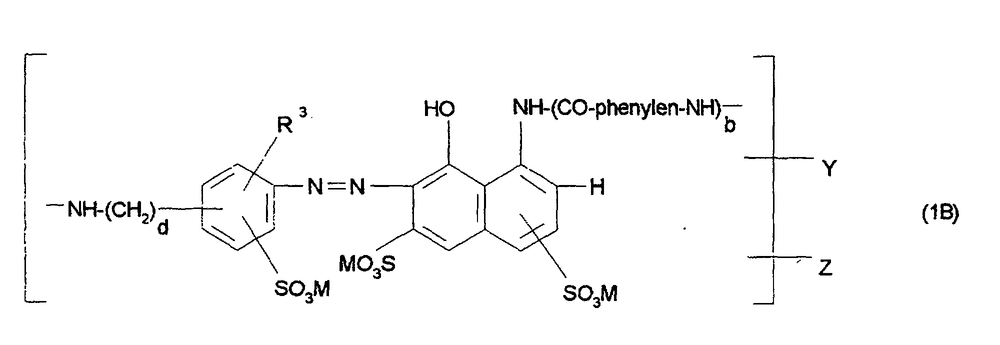 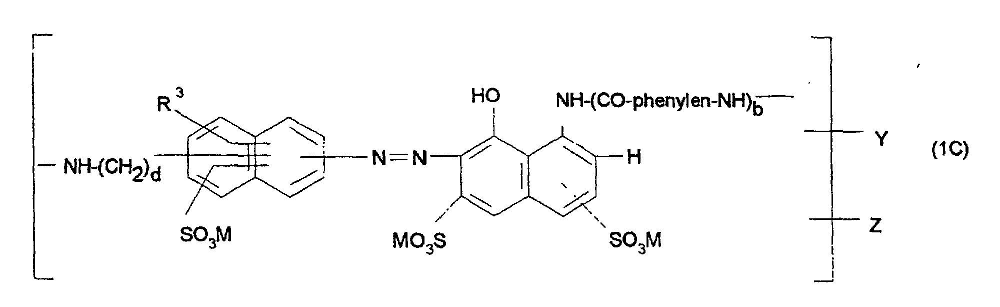 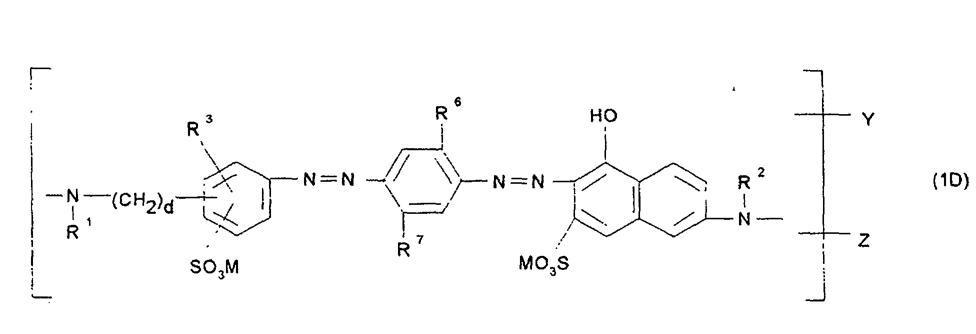 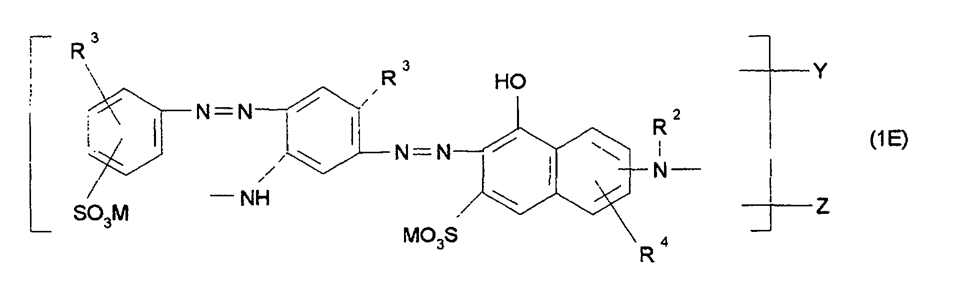 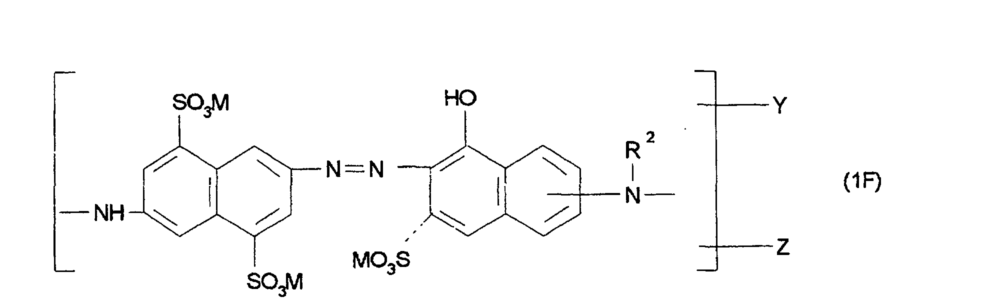 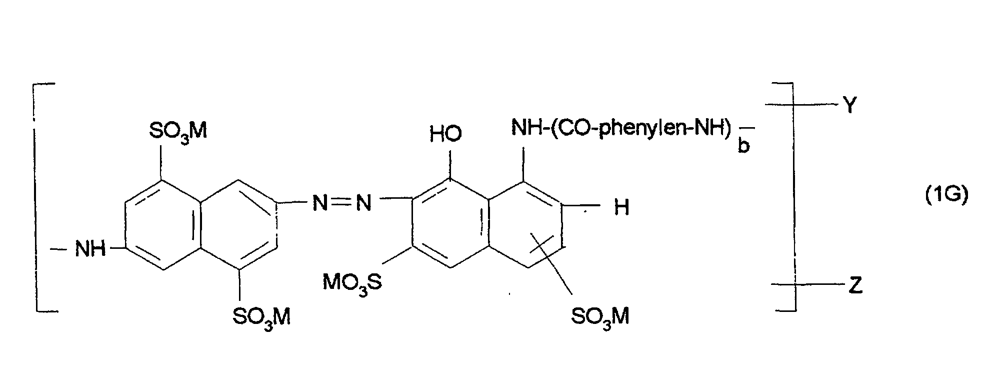 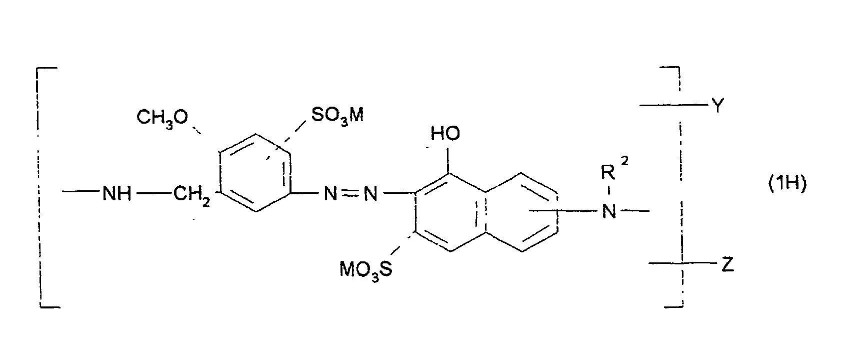 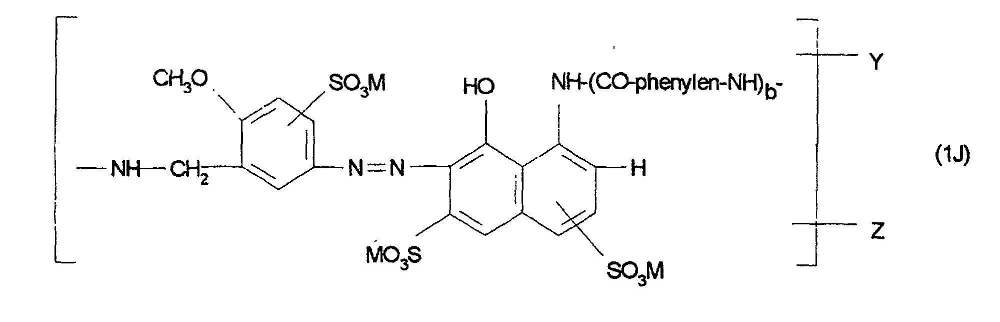 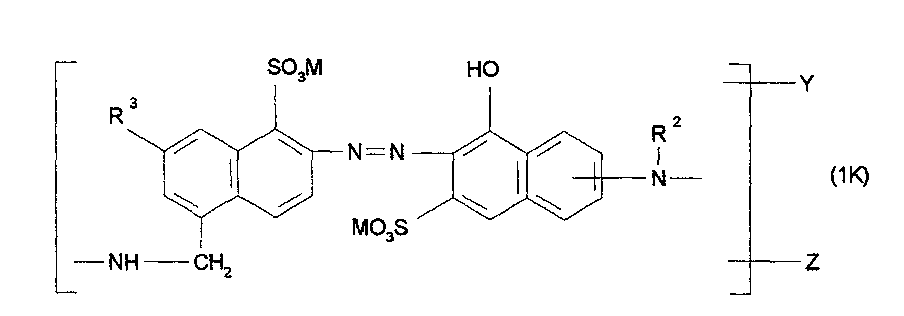 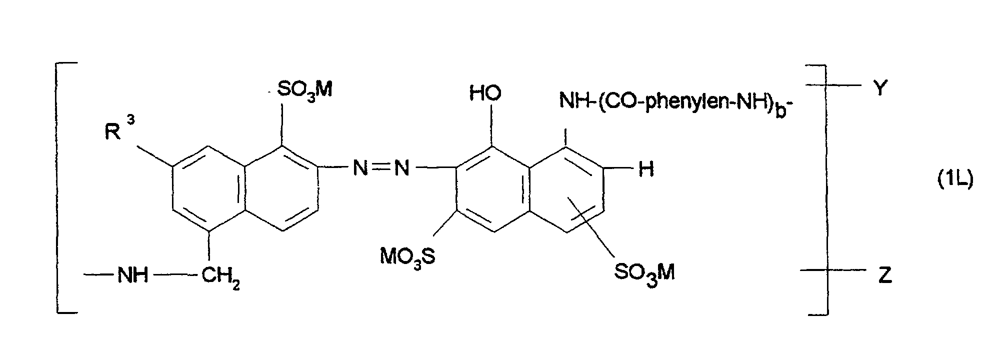 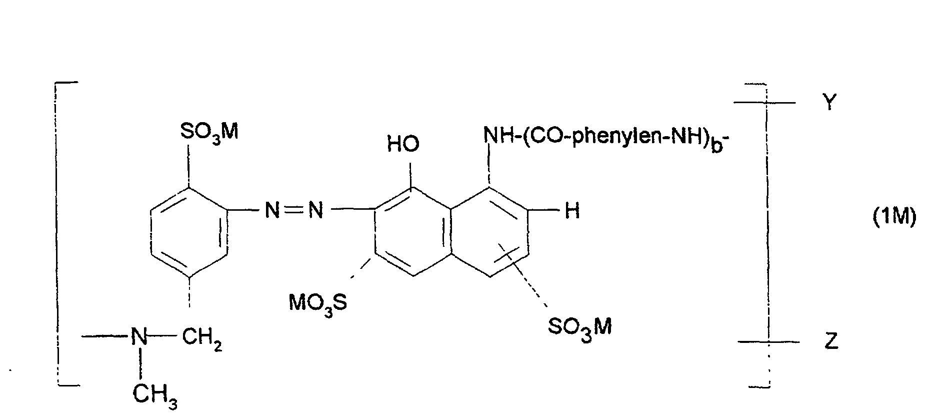 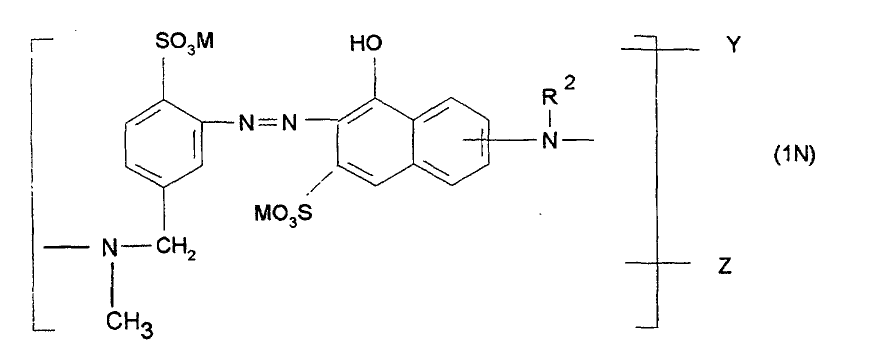 entsprechen, in welchen bedeuten:
- Y und Z: sind alternativ an die die freie Bindung enthaltenden Aminogruppen gebunden und haben eine der obengenannten, insbesondere bevorzugten, Bedeutungen;
- R²: ist Wasserstoff, Methyl oder Ethyl;
- M, R³, b, d, R¹, R⁶ und R⁷: haben die obengenannten, insbesondere bevorzugten, Bedeutungen.

Von den erfindungsgemäßen Azofarbstoffen sind insbesondere diejenigen als bevorzugt hervorzuheben, die den allgemeinen Formeln (6) und (7) 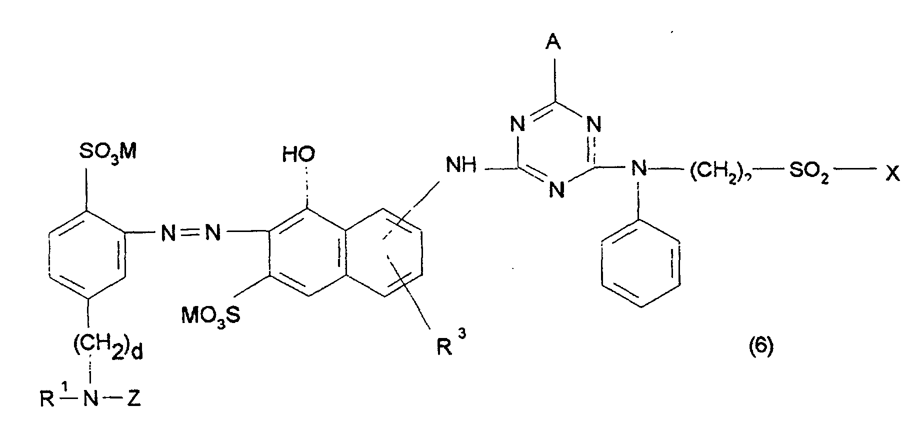 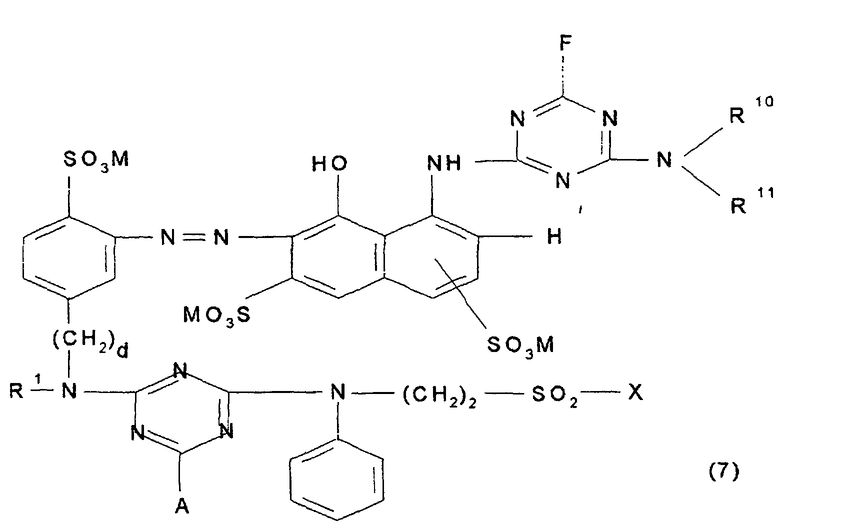 entsprechen, worin bedeuten:
- M, d, R³, R¹⁰ und R¹¹: haben die obengenannten, insbesondere bevorzugten, Bedeutungen;
- X: ist Vinyl und bevorzugt β-Sulfatoethyl;
- R¹: ist Wasserstoff, Methyl oder Ethyl;
- A: ist Amino, Cyanoamino, Methoxy, Phenoxy, Sulfophenyl-amino, (β-Sulfatoethyl)-amino, 3-Carboxy-pyridinyl oder 3-Aminocarbonyl-pyridinyl.

Von den erfindungsgemäßen Verbindungen sind weiterhin diejenigen bevorzugt, in welchen Z ein Triazinrest der allgemeinen Formel (3b) ist, in welcher W für Fluor steht und die Aminogruppe -NR¹⁰R¹¹ die folgende Bedeutung besitzt: Amino, N-Morpholino, N-(β-Hydroxyethyl)-amino, N,N-Di-(β-hydroxyethyl)-amino, β-Sulfoethyl-amino, Phenylamino, am Phenylkern durch 1 oder 2 Substituenten aus der Gruppe Chlor, Methyl, Ethyl, Methoxy, Ethoxy, Acetylamino, Hydroxy, Carboxy, Sulfomethyl und Sulfo substituiertes Phenylamino, N-(C₁-C₄-Alkyl)-phenylamino, am Phenylkern durch 1 oder 2 Substituenten aus der Gruppe Chlor, Methyl und Ethyl substituiertes N-(C₁-C₄-Alkyl)-phenylamino, N-(Sulfo-C₁-C₄-alkyl)-phenylamino, am Phenylkern durch 1 oder 2 Substituenten aus der Gruppe Chlor, Methyl und Ethyl substituiertes N-(Sulfo-C₁-C₄-alkyl)-phenylamino, N-(Hydroxy-C₁-C₄-alkyl)-phenylamino und Sulfonaphthylamino.

Die Erfindung betrifft weiterhin Verfahren zur Herstellung der faserreaktiven Azofarbstoffe der allgemeinen Formel (1), die dadurch gekennzeichnet sind, daß man eine Azoverbindung der allgemeinen Formel (8) 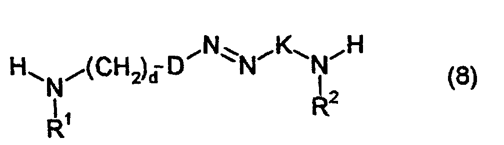 in welcher R¹, R², D, d und K die obengenannten Bedeutungen haben, in beliebiger Reihenfolge mit je einem Moläquivalent einer Verbindung der allgemeinen Formel Z-Hal, in welcher Z die obengenannte Bedeutung besitzt und Hal Halogen, wie Brom und insbesondere Chlor oder Fluor bedeutet, und mit einer Verbindung der allgemeinen Formel (9) 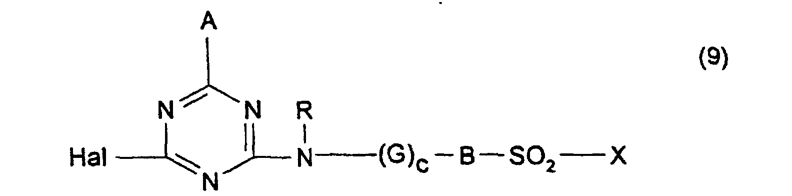 in welcher A, Hal, R, G, c, B und X die obengenannten Bedeutungen haben, miteinander umsetzt,
oder daß man eine Verbindung der allgemeinen Formel (8) in beliebiger Reihenfolge mit je einem Moläquivalent einer Verbindung der oben definierten allgemeinen Formel Z-Hal und einer Verbindung der allgemeinen Formel (10) 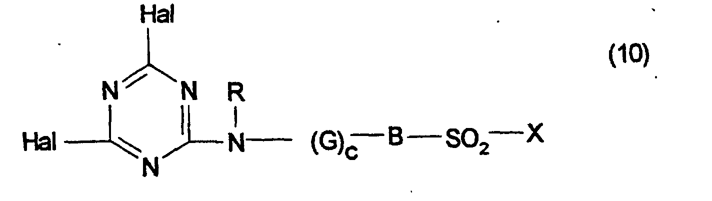 in welcher Hal, R, G, c, B und X die obengenannten Bedeutungen haben, miteinander umsetzt und die so erhaltene Verbindung der allgemeinen Formel (11) 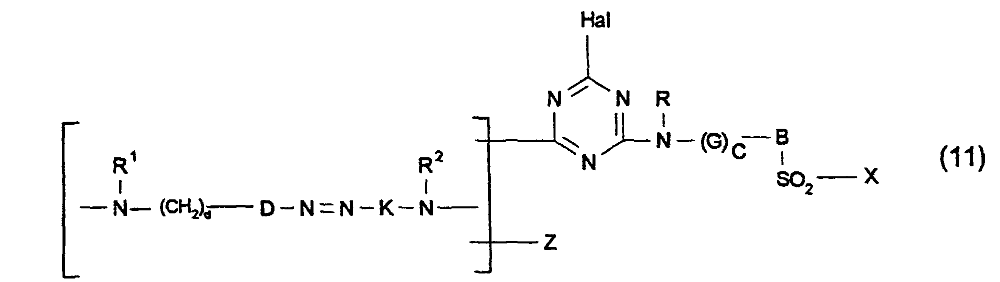 in welcher R¹, R², D, K, Hal, R, G, c, d, B, X und Z die obengenannten Bedeutungen haben, mit einer Verbindung der allgemeinen Formel H-A mit A der obengenannten Bedeutung umsetzt,
oder daß man Verbindungen der allgemeinen Formeln (12) und (13) 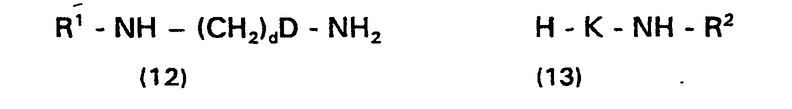 in welchen R¹, D, K, d und R² die obengenannten Bedeutungen haben, alternativ mit je einem Moläquivalent einer Verbindung der allgemeinen Formel (9) und einer Verbindung der allgemeinen Formel Z-Hal umsetzt und die so erhaltene Verbindung der allgemeinen Formel (14a) oder (14b) 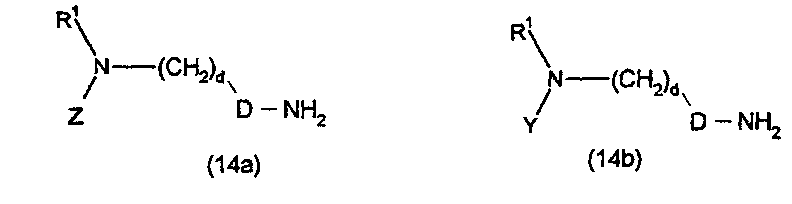 in welchen Z, Y, R¹ und D die obengenannten Bedeutungen haben, diazotiert und die erhaltene Diazoniumsalzverbindung mit der Verbindung der allgemeinen Formel (15a) bzw. (15b) 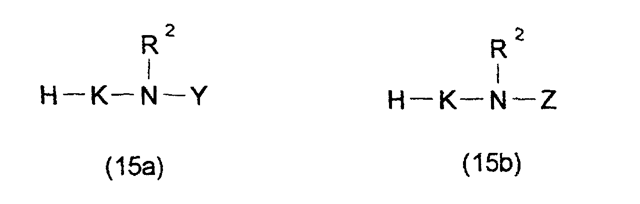 in welcher K, R², Y und Z die obengenannten Bedeutungen haben, in üblicher Weise kuppelt und gegebenenfalls anschließend weitere Umwandlungsreaktionen in den erhaltenen erfindungsgemäßen Azofarbstoffen der allgemeinen Formel (1) in andere erfindungsgemäße Azofarbstoffe der allgemeinen Formel (1) durchführt.

Die Ausgangsverbindungen der allgemeinen Formel (12) können am Aminorest der Formel R¹-NH- zunächst auch als Schutzgruppe eine Acylgruppe enthalten, wie beispielsweise Acetylgruppe, die nach der Diazotierung und Kupplung in üblicher Weise zwecks Umsetzung mit einem Halogentriazin, Halogenpyrimidin oder dergleichen zur Gruppe R¹ -NH- hydrolysiert werden kann.

Da die einzelnen oben angegebenen Verfahrensschritte in unterschiedlicher Reihenfolge ausgeführt werden können, sind verschiedene Verfahrensvarianten möglich. Im allgemeinen führt man die Umsetzungen schrittweise nacheinander aus, wobei die Reihenfolge der einfachen Reaktionen zwischen den einzelnen Reaktionskomponenten vorteilhafterweise sich nach den besonderen Bedingungen richtet.

Da unter bestimmten Voraussetzungen Hydrolyse eines Halogentriazin- oder Halogenpyrimidinrestes etc. eintritt, muß ein Zwischenprodukt, welches Acetylaminogruppen enthält, zwecks Abspaltung der Acetylgruppen verseift werden, bevor mit einem Aminofluortriazin oder Trifluortriazin etc. kondensiert wird. Als weitere Umwandlungsreaktion kommt z.B. die nachträgliche Umsetzung eines Dihalogentriazinylrestes mit einem Amin in Betracht. Welche Reaktion bei der Herstellung eines sekundären Kondensationsproduktes aus einem Amin HNR¹⁰R¹¹, 2,4,6-Trihalogen-s-triazin und Diaminobenzolsulfonsäure zweckmäßigerweise zuerst ausgeführt wird, die des Trihalogentriazins mit dem Amin oder mit der Diaminobenzolsulfonsäure, ist von Fall zu Fall verschieden und richtet sich vor allem nach der Löslichkeit der beteiligten Aminoverbindungen und der Basizität der zu acylierenden Aminogruppen. Die wichtigsten Verfahrensvarianten sind in den Ausführungsbeispielen dargestellt.

Geeignete Ausgangsverbindungen der allgemeinen Formel (12) für die Herstellung der erfindungsgemäßen Azofarbstoffe sind beispielsweise: 1,3-Diaminobenzol, 1,4-Diaminobenzol, 1,3-Diamino-4-methylbenzol,1,3-Diamino-4-ethylbenzol, 1,3-Diamino-4-methoxybenzol, 1,3-Diamino-4-ethoxybenzol, 1,4-Diamino-2-methylbenzol, 1,4-Diamino-2-methoxybenzol, 1,4-Diamino-2-ethoxybenzol, 1,4-Diamino-2,5-dimethylbenzol, 1,4-Diamino-2,5-diethylbenzol, 1,4-Diamino-2-methyl-5-methoxybenzol, 1 ,4-Diamino-2, 5-dimethoxybenzol, 1,4-Diamino-2,5-diethoxybenzol, 2,6-Diamino-naphthalin,1,3-Diamino-2,4,6-trimethylbenzol, 1,4-Diamino-2,3,5,6-tetramethylbenzol, 1,3-Diamino-4-nitrobenzol, 4,4'-Diaminostilben, 4,4'-Diaminodiphenylmethan, 2,6-Diaminonaphthalin-4,8-disulfonsäure, 1,4-Diaminobenzol-2-sulfonsäure, 1,4-Diaminobenzol-2,5-disulfonsäure, 1,4-Diaminobenzol-2,6-disulfonsäure, 1,3-Diaminobenzol-4-sulfonsäure, 1,3-Diaminobenzol-4,6-disulfonsäure, 1,4-Diamino-2-methylbenzol-5-sulfonsäure, 1,5-Diamino-6-methylbenzol-3-sulfonsäure, 1,3-Diamino-6-methylbenzol-4-sulfonsäure, 3-(3'- und 4'-Aminobenzoylamino)-1-aminobenzol-6-sulfonsäure, 1-(4'-Aminobenzoylamino)-4-aminobenzol-2,5-disulfonsäure, 1,4-Diaminobenzol-2-carbonsäure, 1,3-Diaminobenzol-4-carbonsäure, 1,2-Diaminobenzol-4-carbonsäure, 1,3-Diaminobenzol-5-carbonsäure, 1,4-Diamino-2-methylbenzol, 4,4'-Diaminodiphenyloxid, 4,4'-Diaminodiphenylharnstoff-2,2'-disulfonsäure, 4,4'-Diaminodiphenyloxyethan-2,2'-disulfonsäure, 4,4'-Diaminostilben-2,2'-disulfonsäure, 4,4'-Diaminodiphenylethan-2,2'-disulfonsäure, 2-Amino-5-aminomethylnaphthalin-1-sulfonsäure, 2-Amino-5-amino-methylnaphthalin-1,7-disulfonsäure, 1-Amino-4-methoxy-5-aminomethylbenzol-6-sulfonsäure, 1-Amino-3-(N-methyl)-amino-methylbenzol-6-sulfonsäure, 1-Amino-4-(N-methyl)-amino-methylbenzol-3-sulfonsäure, 1-Amino-4-amino-methylbenzol-3-sulfonsäure, 1,3-Diaminobenzol-4-(azophenyl-4'-sulfonsäure), 1,3-Diaminobenzol-4-(azophenyl-2'.4'-disulfonsäure), 1,3-Diaminobenzol-6-sulfonsäure-4-(azophenyl-4'-sulfonsäure) und 1,3-Diaminobenzol-6-sulfonsäure4-(azophenyl-3',6'-disulfonsäure).

Geht man statt von solchen Diaminoverbindungen von einer Aminoacetylamino-Verbindung aus, deren Acetylgruppe nachträglich durch Verseifen wieder abgespalten wird, wie oben erwähnt, kommen die Monoacetylverbindungen der Diaminoverbindungen der Formel (12) in Frage, wie beispielsweise 1-Acetylamino-3-aminobenzol-4-sulfonsäure oder 1-Acetylamino-4-aminobenzol-3-sulfonsäure.

Ausgangsverbindungen der allgemeinen Formel (13) sind beispielsweise: 1-Amino-8-hydroxynaphthalin-6-sulfonsäure, 1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure, 1-Hydroxy-8-acetylamino-naphthalin-3-sulfonsäure, 2-Amino-5-hydroxynaphthalin-7-sulfonsäure, 2-Methyl- bzw. 2-Ethylamino-5-hydroxynaphthalin-7-sulfonsäure, 2-(N-Acetyl-N-methylamino)-5-hydroxynaphthalin-7-sulfonsäure, 2-Acetylamino-5-hydroxynaphthalin-7-sulfonsäure, 2-Amino-5-hydroxynaphthalin-1,7-disulfonsäure, 2-Amino-8-hydroxynaphthalin-6-sulfonsäure, 2-Methyl- bzw. 2-Ethyl-amino-8-hydroxynaphthalin-6-sulfonsäure, 2-(N-Acetyl-N-methylamino)-8-hydroxynaphthalin-6-sulfonsäure, 2-Acetylamino-8-hydroxynaphthalin-6-sulfonsäure, 2-Amino-8-hydroxynaphthalin-3,6-disulfonsäure, 2-Acetylamino-8-hydroxynaphthalin-3,6-disulfonsäure, 1-Amino-5-hydroxynaphthalin-7-sulfonsäure, 1-Amino-8-hydroxynaphthalin-3,6- und -4,6-disulfonsäure, 1-Acetylamino-8-hydroxynaphthalin-3,6- und -4,6-disulfonsäure, 1-(4'-Aminobenzoylamino)-8-hydroxynaphthalin-3,6- und -4,6-disulfonsäure, 1-(4'-Nitrobenzoylamino)-8-hydroxynaphthalin-3,6- und -4,6-disulfonsäure, 1-(3'-Aminobenzoylamino)-8-hydroxynaphthalin-3,6- bzw. -4,6-disulfonsäure, 1-(3'-Nitrobenzoylamino)-8-hydroxynaphthalin-3,6- und -4,6-disulfonsäure sowie 1-Amino-8-hydroxynaphthalin-4-sulfonsäure.

Die Diazotierung der Diazokomponenten bzw. der eine diazotierbare Aminogruppe enthaltenden Zwischenprodukte erfolgt in der Regel durch Einwirkung salpetriger Säure in wäßrig-mineralsaurer Lösung bei tiefer Temperatur, wie bei -10°C bis + 10°C. Die Kupplung auf die Kupplungskomponente erfolgt bei schwach sauren, neutralen bis schwach alkalischen pH-Werten, wie bei einem pH-Wert zwischen 4 und 8, und bei einer Temperatur von etwa 10 bis 30°C.

Die Kondensation der Reaktivkomponenten mit den Diazokomponenten und den Kupplungskomponenten und mit den Aminen bzw. mit acylierbaren Monoazooder Disazo-Zwischenprodukten bzw. mit den aminogruppenhaltigen Farbstoffen erfolgt vorzugsweise in wäßriger Lösung oder Suspension bei 0°C bis 80°C und bei schwach saurem, neutralem bis schwach alkalischem pH-Wert, wie beispielsweise bei einem pH-Wert zwischen 4 und 8. Vorteilhaft wird der bei der Kondensation freiwerdende Halogenwasserstoff laufend durch Zugabe wäßriger Alkalihydroxide, -carbonate oder -bicarbonate neutralisiert.

Die erfindungsgemäßen Azofarbstoffe der allgemeinen Formel (1) eignen sich zum Färben und Bedrucken von natürlichen oder synthetischen hydroxy- oder carbonamidgruppenhaltigen Materialien, wie Seide, Leder, Wolle, synthetischen Polyamidfasern, insbesondere aber cellulosehaltigen Materialien faseriger Struktur, wie Leinen, Zellstoff, regenerierter Cellulose, chemisch modifizierter Cellulose, wie aminierter Cellulose, und vor allem Baumwolle. Sie eignen sich sowohl für das Ausziehverfahren als auch zum Färben nach den üblichen Foulardfärbeverfahren, wonach die Ware mit wäßrigen und gegebenenfalls auch salzhaltigen Farbstofflösungen imprägniert wird, um die Farbstoffe mittels einer Alkalibehandlung oder in Gegenwart von Alkali, gegebenenfalls unter Wärmeeinwirkung, auf dem Fasermaterial zu fixieren.

Die Farbstoffe der Formel (1) zeichnen sich durch hohe Reaktivität und ausgezeichnete Fixiervermögen aus. Aufgrund ihrer Multifunktionalität ergeben sie auch aus langer Flotte hohe Fixierausbeuten. Sie sind charakterisiert durch relative Unabhängigkeit der Ergiebigkeit von der Färbetemperatur und können daher nach dem Ausziehverfahren bei niedrigen bis mittleren Färbetemperaturen eingesetzt werden. Beim Klotz-Dämpf-Verfahren erfordern sie nur kurze Dämpfzeiten. Sie ergeben Färbungen hoher Farbstärke mit guten Licht- und Naßechtheiten.

Die nachfolgenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in den Beispielen formelmäßig beschriebenen Verbindungen sind in Form der freien Säuren angegeben; im allgemeinen werden sie in Form ihrer Alkalimetallsalze, wie Lithium-, Natrium- oder Kaliumsalze, hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.

Die für die erfindungsgemäßen Verbindungen angegebenen Absorptionsmaxima (λₘₐₓ) im sichtbaren Bereich wurden anhand derer Alkalimetallsalze in wäßriger Lösung ermittelt. In den Tabellenbeispielen sind die λₘₐₓ-Werte bei der Farbtonangabe in Klammern gesetzt; die Wellenlängenangabe bezieht auf nm.

### Beispiel 1

A) 0,15 Mol der Verbindung der Formel 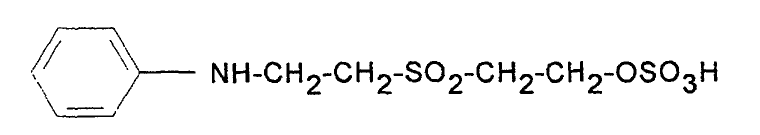 werden in 100 g Wasser und 100 g Eis verrührt und neutral gelöst. Innerhalb von 10 Minuten gibt man langsam bei etwa 0°C und einem pH von 4 bis 4,5 0,165 Mol 2,4,6-Trifluor-1,3-5-triazin zu. Man erhält ca. 250 g einer wäßrigen Lösung (Lösung A) des Kondensationsproduktes folgender Struktur: 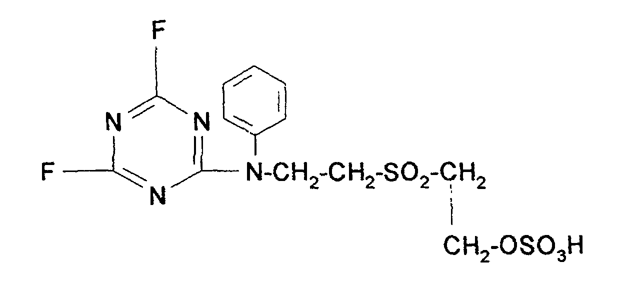
B) 0,13 Mol 2,4-Diaminobenzolsulfonsäure werden in 150 ml Wasser suspendiert und mit Sodalösung bei pH 7 bis 8 gelöst. Diese Lösung läßt man zur obigen Kondensationslösung (Lösung A) bei pH 6 bis 6,5 tropfen, hierbei steigt die Temperatur auf 15 bis 18°C an. Man setzt sodann 0,2 Mol Cyanamin hinzu und rührt einige Zeit bei einem pH-Wert von 6,5 und bei 40 bis 45°C, bis die Umsetzung beendet ist. Man erhält ca. 450 g einer wäßrigen Lösung (Lösung B) des Kondensationsproduktes folgender Struktur: 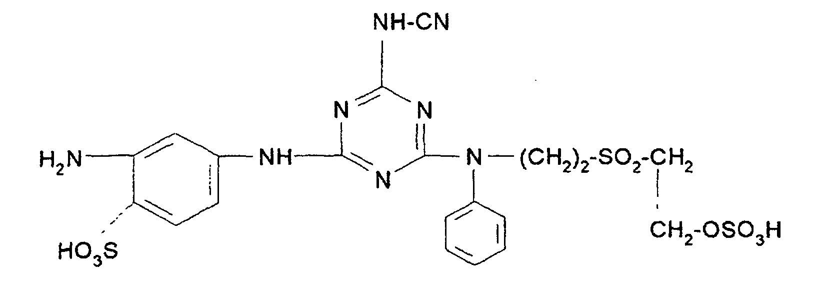
C) 0,15 Mol 1-Amino-8-hydroxynaphthalin-3,6-disulfonsäure werden in 250 ml Wasser bei pH 6,5 gelöst und mit 250 g Eis auf 0°C abgekühlt. 0,16 Mol 2,4,6-Trifluor-1,3,5-triazin (Cyanurfluorid) werden zugegeben und der pH mit Na₂CO₃-Lösung zwischen 3,5 und 4 gehalten. Nach 5 Minuten setzt man 0,15 Mol Morpholin zu und stellt den pH mit Sodalösung auf 7 ein. Die Temperatur steigt dabei auf ca. 10°C an.
D) Das Kondensationsprodukt aus B) (Lösung B) wird bei 0°C und pH 3 bis 3,5 diazotiert und zur Lösung der Kupplungskomponente C) gegeben. Mit Sodalösung wird ein pH von 6 bis 7 eingestellt. Nach beendeter Kupplung wird der Farbstoff ausgesalzen, isoliert, getrocknet und gemahlen.

Er besitzt, in Form der freien Säure geschrieben, die Formel 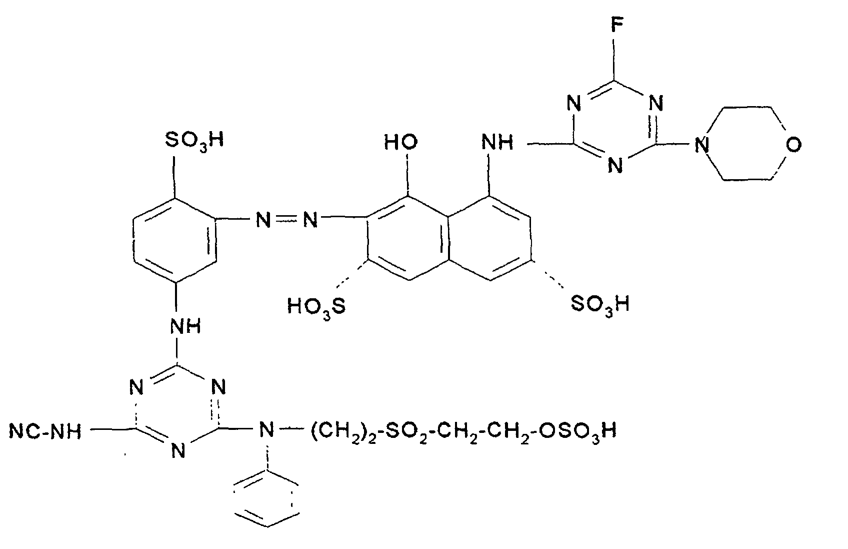 besitzt im sichtbaren Bereich Absorptionsmaxima bei 514 und 533 nm und färbt Baumwolle in klaren roten Tönen.

### Beispiel 2

A) 0,15 Mol der Verbindung N-Phenyl-N-[β-(β'-sulfatoethylsulfonyl)-ethyl]-amin werden in 150 g Wasser und 150 g Eis verrührt und neutral gelöst. Innerhalb von 10 Minuten tropft man bei 0°C und einem pH-Wert zwischen 5 und 5,5 0,155 Mol 2,4,6-Trichlor-1,3,5-triazin (Cyanurchlorid) hinzu. Man erhält etwa 350 g einer wäßrigen Lösung der Verbindung 2,4-Dichlor-6-{N-phenyl-N-[β-(β'-sulfatoethylsulfonyl)-ethyl]}-amino-1,3,5-triazin.
B) Zu dieser Kondensationslösung gibt man langsam eine neutrale Lösung von 0,13 Mol 2,4-Diamino-benzolsulfonsäure und hält mit einer wäßrigen Natriumcarbonat-Lösung einen pH-Wert zwischen 6,5 und 7. Sodann gibt man 0,18 Mol 3-Carboxy-pyridin hinzu und rührt den Ansatz einige Zeit bei 80 bis 90°C und einem pH-Wert zwischen 4 und 5, bis die Umsetzung beendet ist.
C) Die erhaltene Verbindung der Formel (in Form der freien Säure geschrieben) 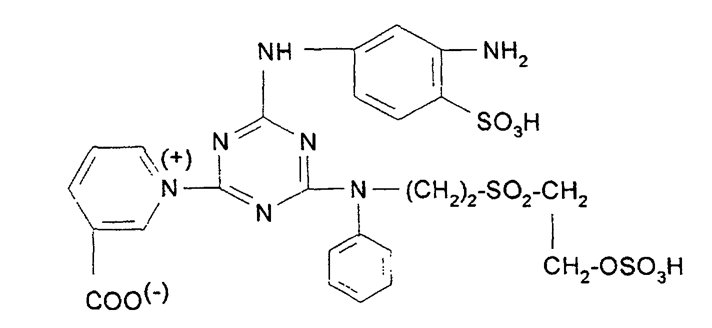 wird in üblicher Verfahrensweise bei 0°C und einem pH-Wert zwischen 3 und 3,5 diazotiert und zu der im Beispiel 1C beschriebenen Lösung der Kupplungskomponente gegeben und unter Einhaltung eines pH-Wertes zwischen 6 und 7 zur erfindungsgemäßen Azoverbindung der Formel (in Form der freien Säure geschrieben) 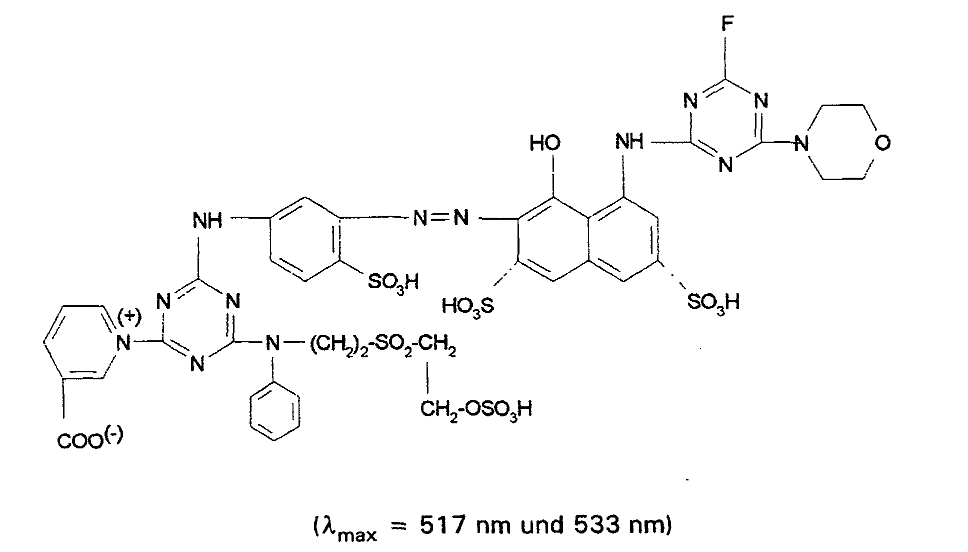 gekuppelt. Der Farbstoff wird durch Ausfällen mit etwa 15 Vol.-% Natriumchlorid, bezogen auf das Volumen der Syntheselösung, ausgesalzen, isoliert und getrocknet. Er liefert nach den für faserreaktive Farbstoffe üblichen Anwendungsverfahren beispielsweise auf Baumwolle klare, rote Färbungen.

### Beispiel 3

a) 0,15 Mol 1-Amino-8-hydroxynaphthalin-3,6-disulfonsäure werden in 250 ml Wasser bei pH 6,5 gelöst und mit 200 g Eis auf 0 bis 5°C abgekühlt. Die Lösung wird auf eine Suspension von 0,16 Mol 2,4,6-Trichlor-1,3,5-triazin in 50 ml Wasser und 50 g Eis gegeben und der pH mit NaHCO₃-Lösung zwischen 3,5 und 4 gehalten. Anschließend setzt man 0,15 Mol Morpholin hinzu und stellt mit Sodalösung einen pH von 7 ein.
b) Zu dieser Lösung gibt man 0,14 Mol einer Lösung, die durch direkte Diazotierung des Kondensationsproduktes aus Beispiel 2B hergestellt wird, und kuppelt bei pH 7 bis 7,5. Nach Aussalzen, Isolieren und Trocknen erhält man einen salzhaltigen Farbstoff der Formel (in Form der freien Säure geschrieben) 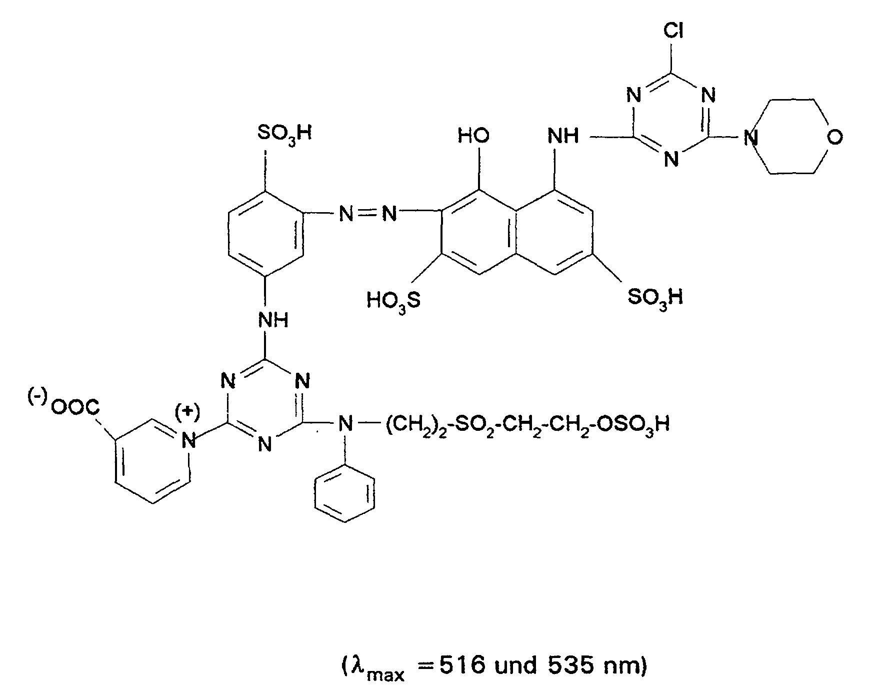
der beispielsweise Baumwolle in klaren roten Tönen färbt.

### Beispiel 4

Zur Herstellung einer erfindungsgemäßen Azoverbindung verfährt man gemäß der Verfahrensweise des Beispieles 3a), um die Lösung der Kupplungskomponente zu erhalten.
Zur Herstellung der Lösung der Diazokomponente geht man von der gemäß Beispiel 2A) hergestellten Lösung des 2,4-Dichlor-6-{N-phenyl-N-[β-(β'-sulfatoethylsulfonyl)-ethyl]}-amino-1,3,5-triazin aus und setzt diese mit 0,13 Mol 2,4-Diaminobenzol-sulfonsäure unter Einhaltung eines pH-Wertes zwischen 5 und 6 um. Anschließend gibt man 0,5 Mol Methanol hinzu und führt die dritte Kondensationsreaktion bei einem pH-Wert von 7 und einer Temperatur zwischen 40 und 50°C zu Ende.

Die so erhaltene Diazokomponente der Formel (in Form der freien Säure geschrieben) 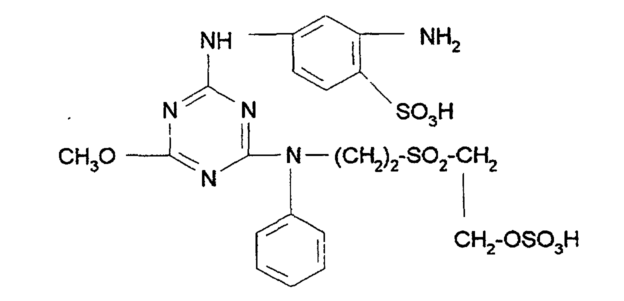 wird in üblicher Weise diazotiert und die erhaltene Diazoniumsalzlösung zu der gemäß Beispiel 3a hergestellten Lösung der Kupplungskomponente gegeben; die Kupplungsreaktion wird bei einem pH-Wert zwischen 7 und 7,5 und einer Temperatur zwischen 20 und 25°C durchgeführt.

Der erfindungsgemäße Azofarbstoff wird in üblicher Weise durch Aussalzen isoliert. Er besitzt, in Form der freien Säure geschrieben, die Formel 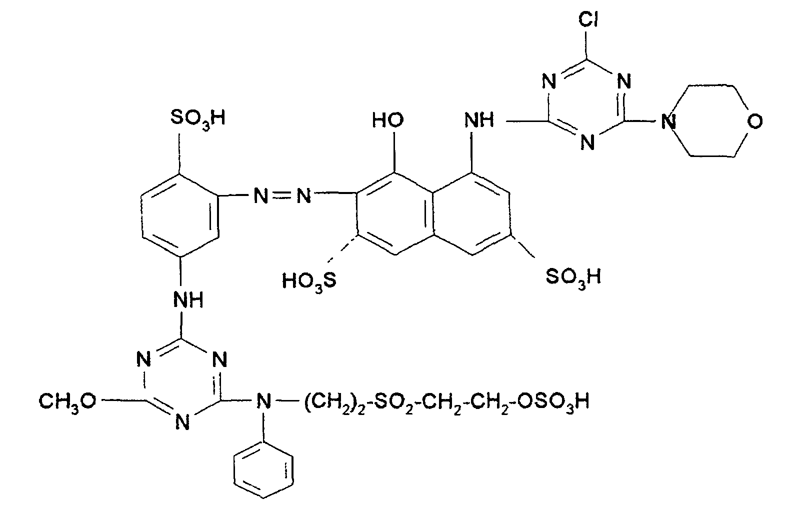 zeigt im sichtbaren Bereich Absorptionsmaxima bei 516 nm und 535 nm und liefert nach den in der Technik für faserreaktive Farbstoffe üblichen Anwendungsverfahren beispielsweise auf Baumwolle klare rote Färbungen.

### Beispiel 5

0,2 Mol 1 Amino-8-hydroxy-naphthalin-3,6-disulfonsäure werden in 450 ml Wasser mit Natronlauge bei einem pH-Wert zwischen 8 und 9 gelöst und mit 0,22 Mol 2,4,6-Trifluorpyrimidin versetzt. Die Kondensationsreaktion erfolgt bei einer Temperatur zwischen 35 und 40°C unter Einhaltung eines pH-Wertes zwischen 4 und 5 mittels wäßriger Natriumcarbonatlösung.
Zu der so hergestellten Lösung der Kupplungskomponente gibt man die entsprechende äquivalente Menge der nach dem Beispiel 1B hergestellten Diazoniumsalzlösung und führt die Kupplungsreaktion bei einem pH-Wert zwischen 6 und 7 und einer Temperatur von etwa 15 bis 20°C durch.

Man erhält den erfindungsgemäßen Azofarbstoff der Formel (in Form der freien Säure geschrieben) 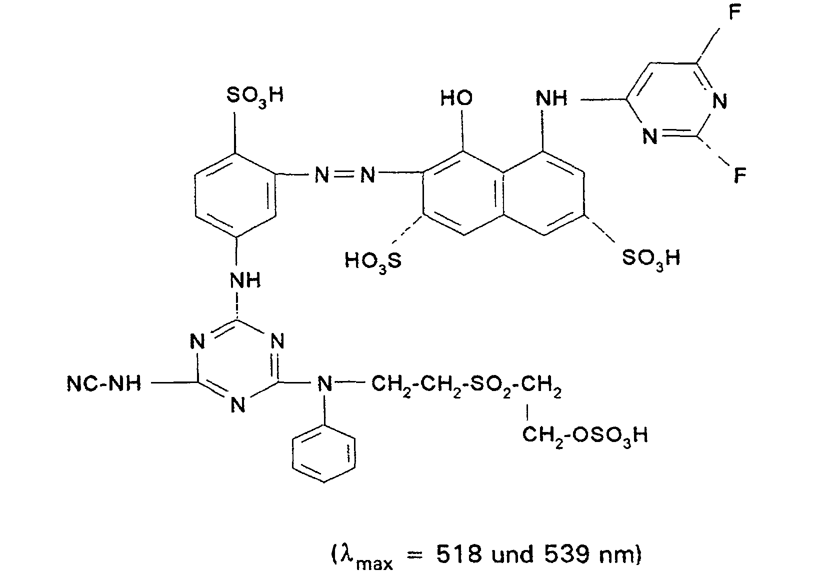 der beispielsweise Baumwolle nach den in der Technik üblichen Anwendungsverfahren für faserreaktive Farbstoffe in roten Tönen färbt.

### Beispiel 6

Etwa 850 ml einer wäßrigen Lösung mit einem pH-Wert von 7 von etwa 0,2 Mol 8-(4'-Amino-benzoylamino)-1-hydroxy-naphthalin-3,6-disulfonsäure werden mit 10 %iger wäßriger Salzsäure auf einen pH-Wert von 4,5 eingestellt. 0,2 Mol 2,4,6-Trifluorpyrimidin werden hinzugegeben und die Umsetzung bei einer Temperatur von 30°C und unter Einhaltung eines pH-Wertes von 4,5 bis 6 mittels wäßriger Natriumcarbonatlösung durchgeführt.
Zu der so hergestellten Lösung der Kupplungskomponente gibt man 0,2 Mol der gemäß Beispiel 1B hergestellten Diazoniumsalzlösung und führt die Kupplungsreaktion unter Einhaltung eines pH-Wertes zwischen 7,5 und 8 mittels wäßriger Natriumcarbonatlösung bei 15 bis 20°C durch. Der erhaltene erfindungsgemäße Azofarbstoff, der, in Form der freien Säure geschrieben, die Formel 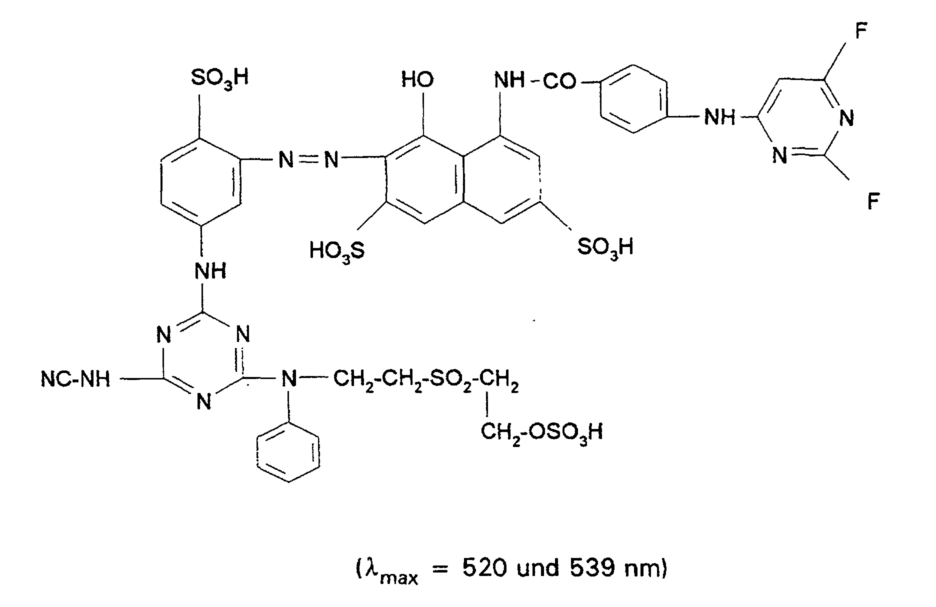 besitzt, wird in üblicher Weise mit Natriumchlorid ausgesalzen und isoliert. Er färbt beispielsweise Baumwolle in roten Tönen.

### Beispiel 7

Man versetzt 700 ml einer wäßrigen Lösung mit einem pH-Wert von 6,5 von 0,2 Mol 1-Amino-8-hydroxy-naphthalin-3,6-disulfonsäure bei 35°C mit 0,21 Mol 2,3-Dichlor-chinoxalin-6-carbonsäurechlorid und führt die Umsetzung bei dieser Temperatur und bei einem pH-Wert zwischen 6 und 7 durch.
Zu dieser Lösung der Kupplungskomponente gibt man die äquivalente Menge der gemäß Beispiel 1B hergestellten Diazoniumsalzlösung und führt die Kupplungsreaktion bei einem pH-Wert zwischen 6,5 und 7 und einer Temperatur zwischen 15 und 20°C durch.

Der erfindungsgemäße Azofarbstoff der Formel (in Form der freien Säure geschrieben) 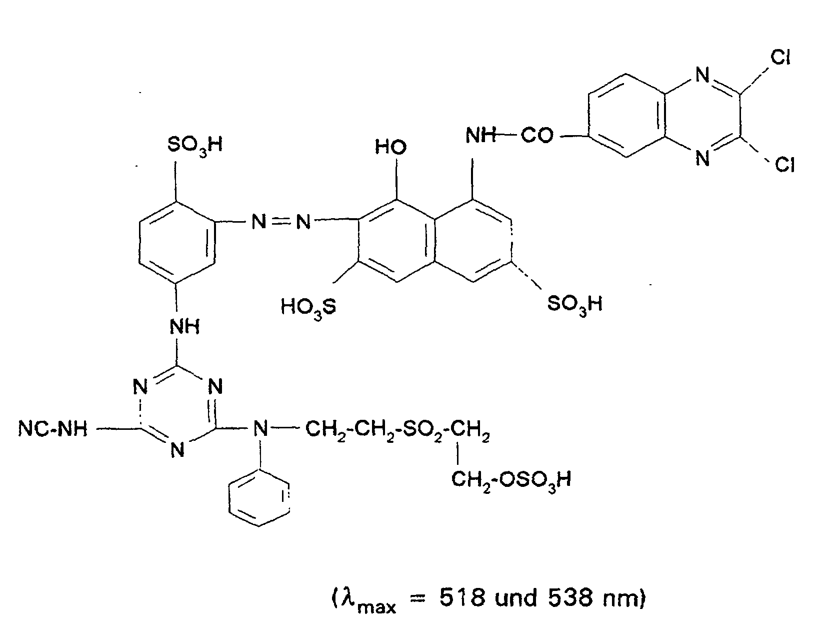 wird in üblicher Weise durch Aussalzen isoliert. Er färbt beispielsweise Baumwolle in roten Tönen.

### Beispiel 8

a) 500 ml einer Lösung von 0 bis 5°C mit einem pH-Wert zwischen 6 und 7 von 0,3 Mol N-Phenyl-N-[β-(β'-sulfatoethylsulfonyl)-ethyl]-amin werden in eine Suspension aus 0,3 Mol Cyanurchlorid, 150 g Wasser und 100 g Eis unter Einhaltung eines pH-Wertes zwischen 5 und 6 mittels einer wäßrigen 20 %igen Natriumcarbonatlösung eingerührt. Durch portionsweise Zugabe von Eis wird eine Temperatur von 0 bis 1°C eingehalten. Nach etwa zwei Stunden ist die Reaktion beendet und das Kondensationsprodukt vollständig ausgefallen.
   Die Suspension wird zu einer Lösung aus 0,2 Mol 1-Amino-8-hydroxy-naphthalin-3,6-disulfonsäure in 500 ml Wasser (mit einer 10 %igen wäßrigen Lithiumhydroxydlösung auf einen pH-Wert zwischen 5,5 und 6 eingestellt) eingerührt. Der Ansatz wird auf 40°C erwärmt und mittels 20%iger wäßriger Natriumcarbonatlösung auf einem pH-Wert von 4,5 gehalten. Nach etwa zwei Stunden ist die Umsetzung beendet. Man gibt sodann 0,25 Mol Cyanamin hinzu und führt die Kondensationsreaktion bei 50°C und einem pH-Wert zwischen 6 und 7 durch.
b) 0,2 Mol 3-Amino-benzolsulfonsäure werden in 280 ml Wasser mit Lithiumhydroxid bei einem pH-Wert von 7 gelöst. Nach Zugabe von 250 g Eis gibt man 0,21 Mol Cyanurfluorid hinzu und führt die Umsetzung unter Einhaltung eines pH-Wertes von 4 durch. Zu der so entstandenen Suspension gibt man eine neutrale wäßrige Lösung von 2,4-Diaminobenzolsulfonsäure und führt die Umsetzung bei einem pH-Wert zwischen 7 und 7,5 und bei 20°C durch. Anschließend kühlt man den Reaktionsansatz auf 0°C und diaziotiert das erhaltene Produkt in üblicher Weise nach Zugabe von wäßriger Salzsäure bei einem pH-Wert zwischen 2 und 2,2 mittels einer wäßrigen Natriumnitritlösung. Überschüssiges Nitrit wird nach Beendigung der Diazotierungsreaktion in üblicher Weise mittels Amidosulfonsäure zerstört.
c) Die gemäß Abschnitt b) hergestellte Diazoniumsalzlösung wird zu der gemäß Abschnitt a) hergestellten Lösung der Kupplungskomponente unter Rühren einfließen lassen. Man führt die Kupplungsreaktion bei einem pH-Wert von 5 bis 6 und einer Temperatur zwischen 10 und 15°C durch und isoliert den erfindungsgemäßen Farbstoff anschließend in üblicher Weise durch Aussalzen mit Natriumchlorid.

Er besitzt, in Form der freien Säure geschrieben, die Formel 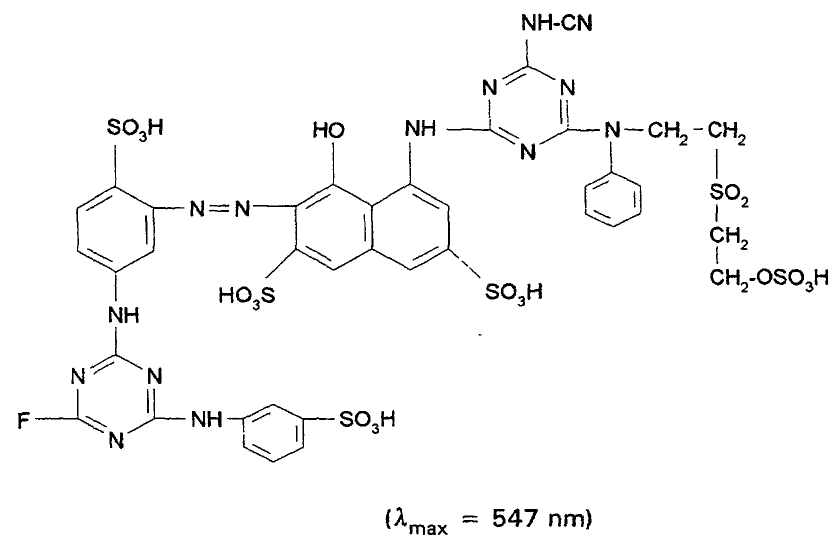 und färbt beispielsweise Baumwolle in roten Tönen.

### Beispiel 9

450 ml einer wäßrigen Lösung von 0°C mit einem pH-Wert von 7 von 0,22 Mol N-Ethyl-anilin werden langsam mit 0,2 Mol Cyanurchlorid unter gutem Rühren und unter Einhaltung eines pH-Wertes zwischen 6 und 7 mittels einer 20 %igen wäßrigen Natriumcarbonatlösung versetzt. Die Umsetzung ist nach etwa einer Stunde beendet. Man rührt sodann 350 ml einer wäßrigen alkalischen Lösung von 0,2 Mol 2,4-Diaminobenzolsulfonsäure ein und führt die Umsetzung bei einem pH-Wert zwischen 6 und 7 und einer Temperatur zwischen25 und 35°C durch. Nach beendeter Umsetzung kühlt man den Ansatz auf 0°C ab, gibt 56 ml einer 30 %igen Salzsäure hinzu und führt die Diazotierungsreaktion in üblicher Weise nach Zugabe von 56 ml einer 30 %igen wäßrigen Salzsäure mittels einer 30 %igen wäßrigen Natriumnitritlösung durch. Nach Beendigung der Diazotierungsreaktion wird überschüssige salpetrige Säure mittels Amidosulfonsäure zerstört.
Die erhaltene Diazoniumsalzlösung wird in die äquivalente Menge einer gemäß Beispiel 8 hergestellten Lösung der Kupplungskomponente eingerührt; die Kupplungsreaktion erfolgt bei einem pH-Wert zwischen 7 und 8 und einer Temperatur zwischen 10 und 15°C. Nach beendeter Kupplungsreaktion wird der erfindungsgemäße Azofarbstoff in üblicher Weise durch Aussalzen isoliert. Er besitzt, in Form der freien Säure geschrieben, die Formel 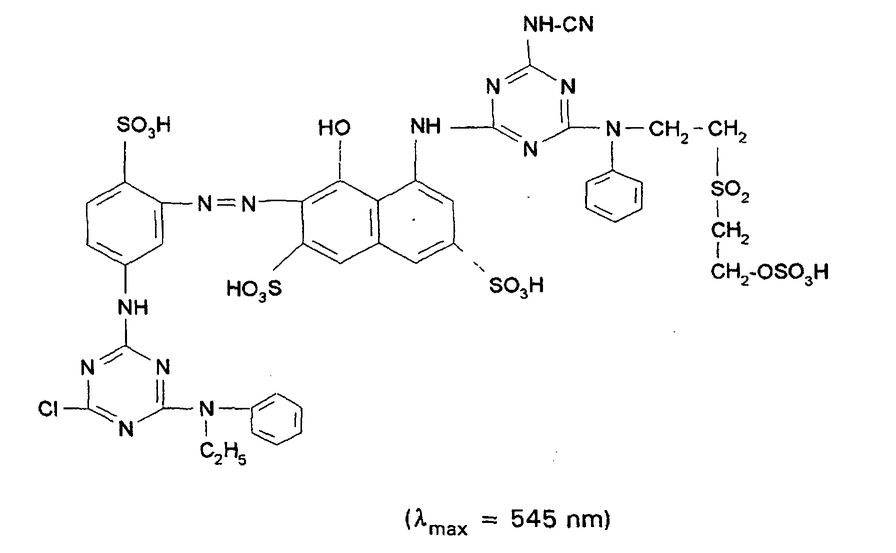 und färbt beispielsweise Baumwolle in roten Tönen.

### Beispiel 10

0,2 Mol 6-Fluor-5-chlor-4-(3'-amino-4'-sulfophenyl)-amino-pyrimidin (in bekannter Weise aus 2,4-Diaminobenzolsulfonsäure und 4,6-Difluor-5-chlor-pyrmidin hergestellt) werden in 1000 ml Wasser suspendiert und mit 65 ml einer 30 %igen wäßrigen Salzsäure und 300 g Eis versetzt. Sodann gibt man 46 ml einer 30 %igen wäßrigen Natriumnitritlösung unter gutem Rühren hinzu und rührt noch eine Stunde bei 0°C weiter. Überschüssige salpetrige Säure wird anschließend mit Amidosulfonsäure zerstört.
Die so erhaltene Diazoniumsalzlösung gibt man zu der gemäß Beispiel 8 hergestellten Lösung der Kupplungskomponente und führt die Kupplungsreaktion unter Einhaltung eines pH-Wertes zwischen 7 und 8 bei 10 bis 15°C zu Ende. Der erfindungsgemäße Farbstoff wird in üblicher Weise isoliert. Er besitzt, in Form der freien Säure geschrieben, die Formel 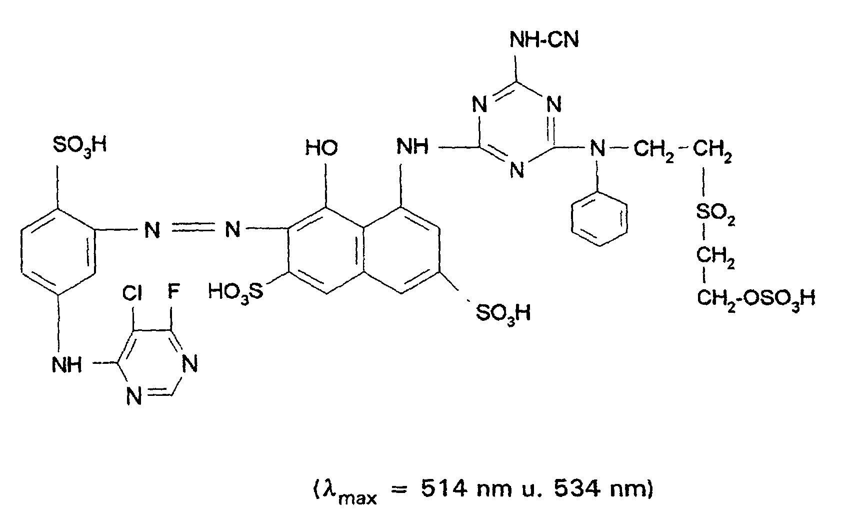 und färbt beispielsweise Baumwolle in roten Tönen.

### Beispiele 11 bis 129

In den nachfolgenden Tabellenbeispielen werden weitere erfindungsgemäße Azofarbstoffe entsprechend der allgemeinen Formel D^{o}-N = N-K^{o} mit Hilfe der in der Tabelle und der nachstehend angegebenen Formelkomponenten beschrieben. Sie lassen sich in erfindungsgemäßer Weise, beispielsweise analog einem der obigen Ausführungsbeispiele, mit Hilfe der aus diesen Komponenten ersichtlichen Verbindungen herstellen. Sie eignen sich zum Färben der in der Beschreibung genannten Fasermaterialien, wie insbesondere Cellulosefasermaterialien, und liefern nach den in der Technik für faserreaktive Farbstoffe üblichen Färbe- und Druckverfahren farbstarke, echte Färbungen in dem in dem jeweiligen Tabellenbeispiel angegebenen Farbton (hier auf Baumwolle).

Die in den Tabellenbeispielen angegebenen Formelreste D¹⁰ bis D²⁸ und K¹⁰ bis K²⁴ haben folgende Bedeutungen:

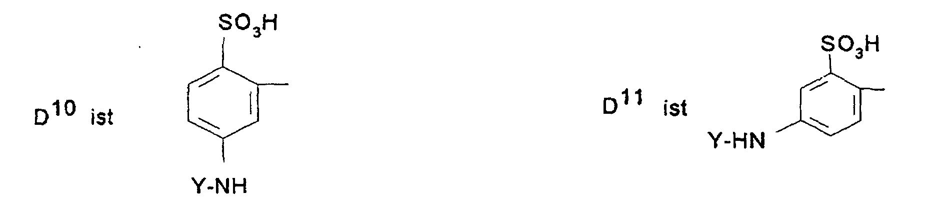

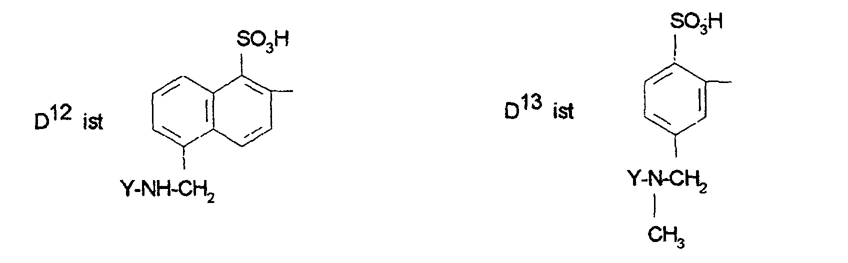

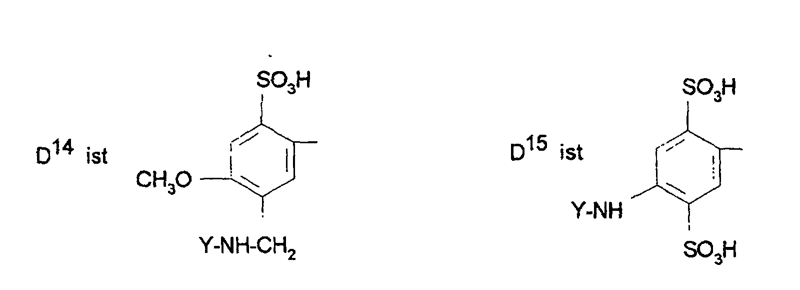

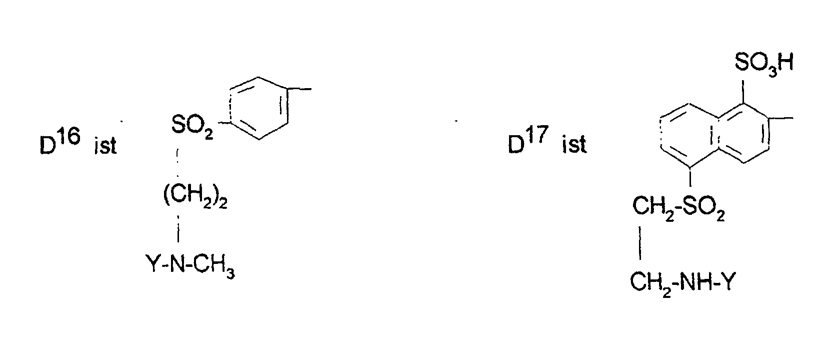

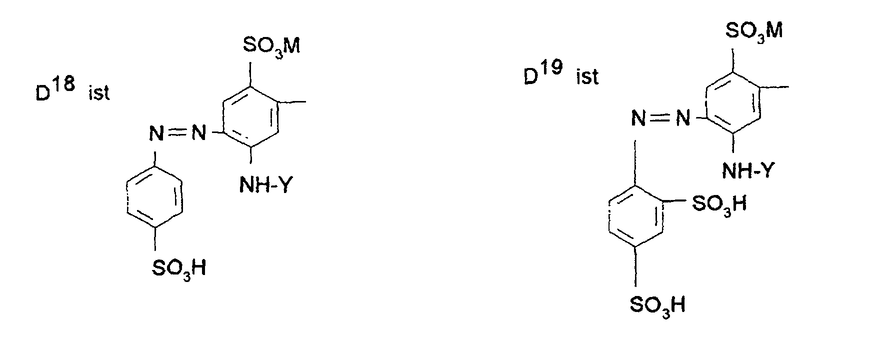

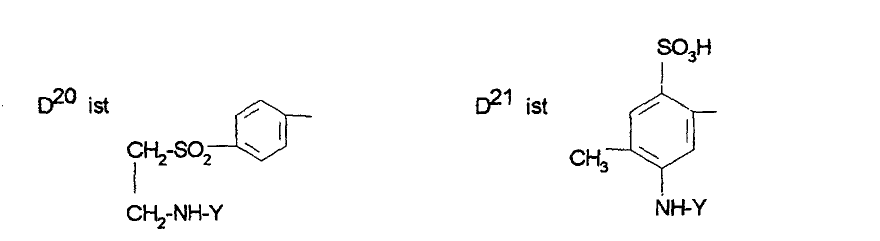

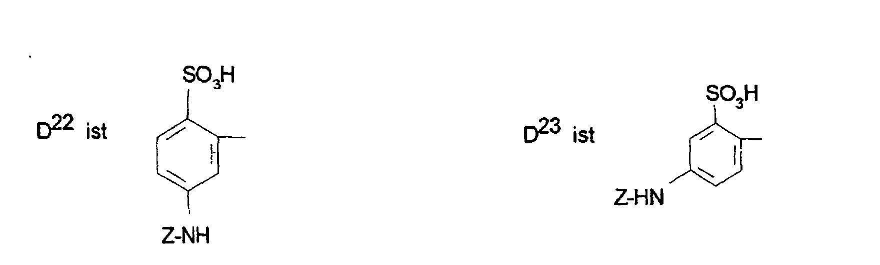

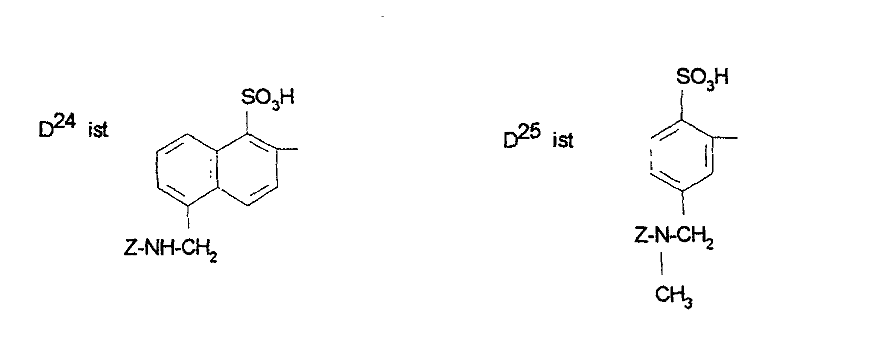

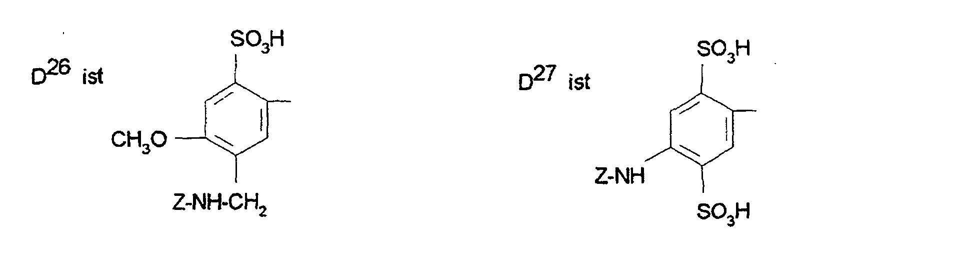

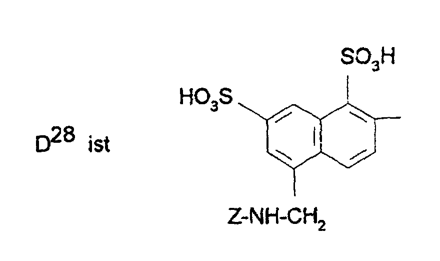

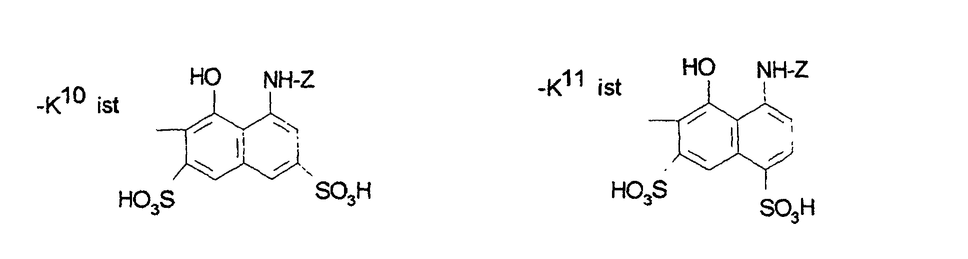

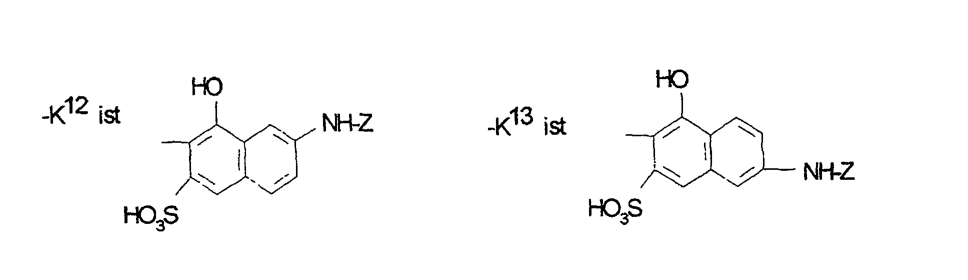

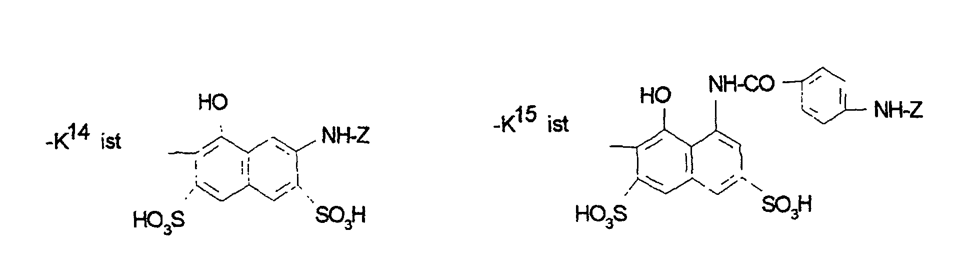

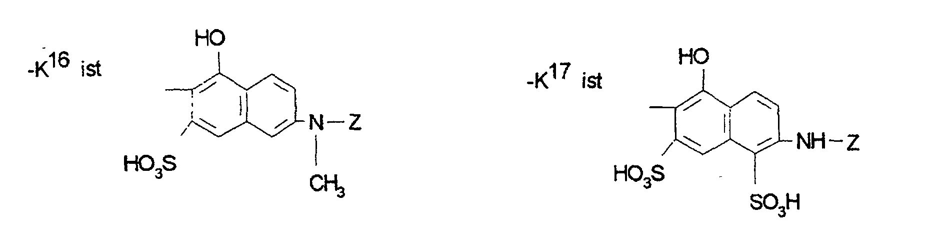

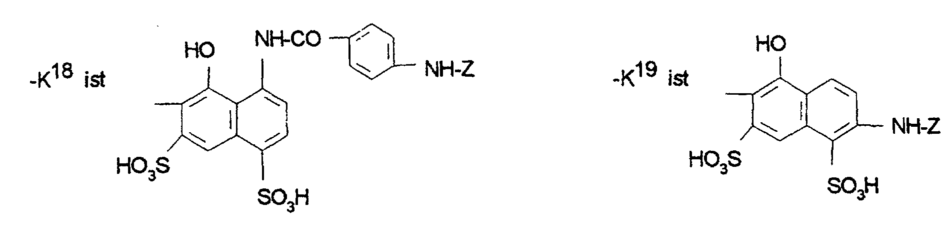

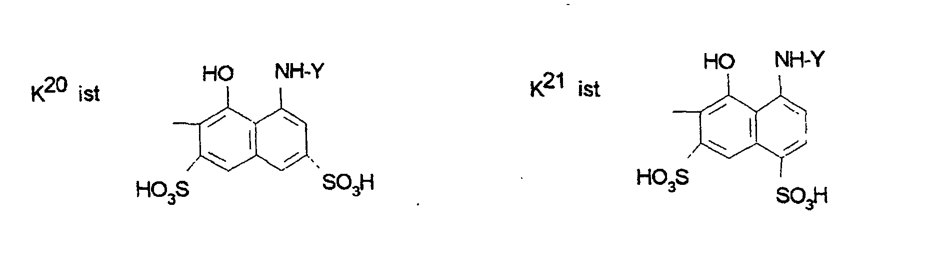

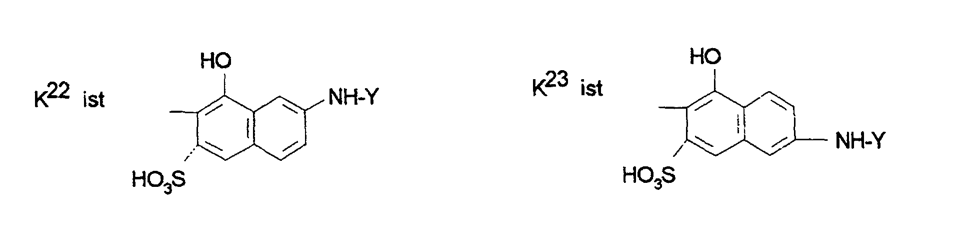

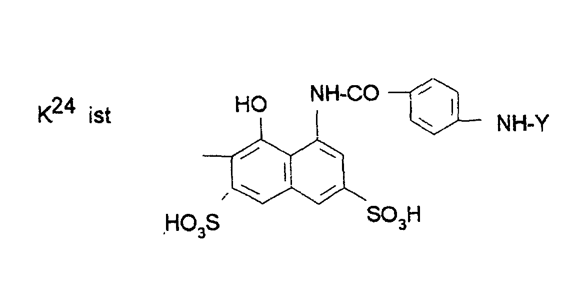

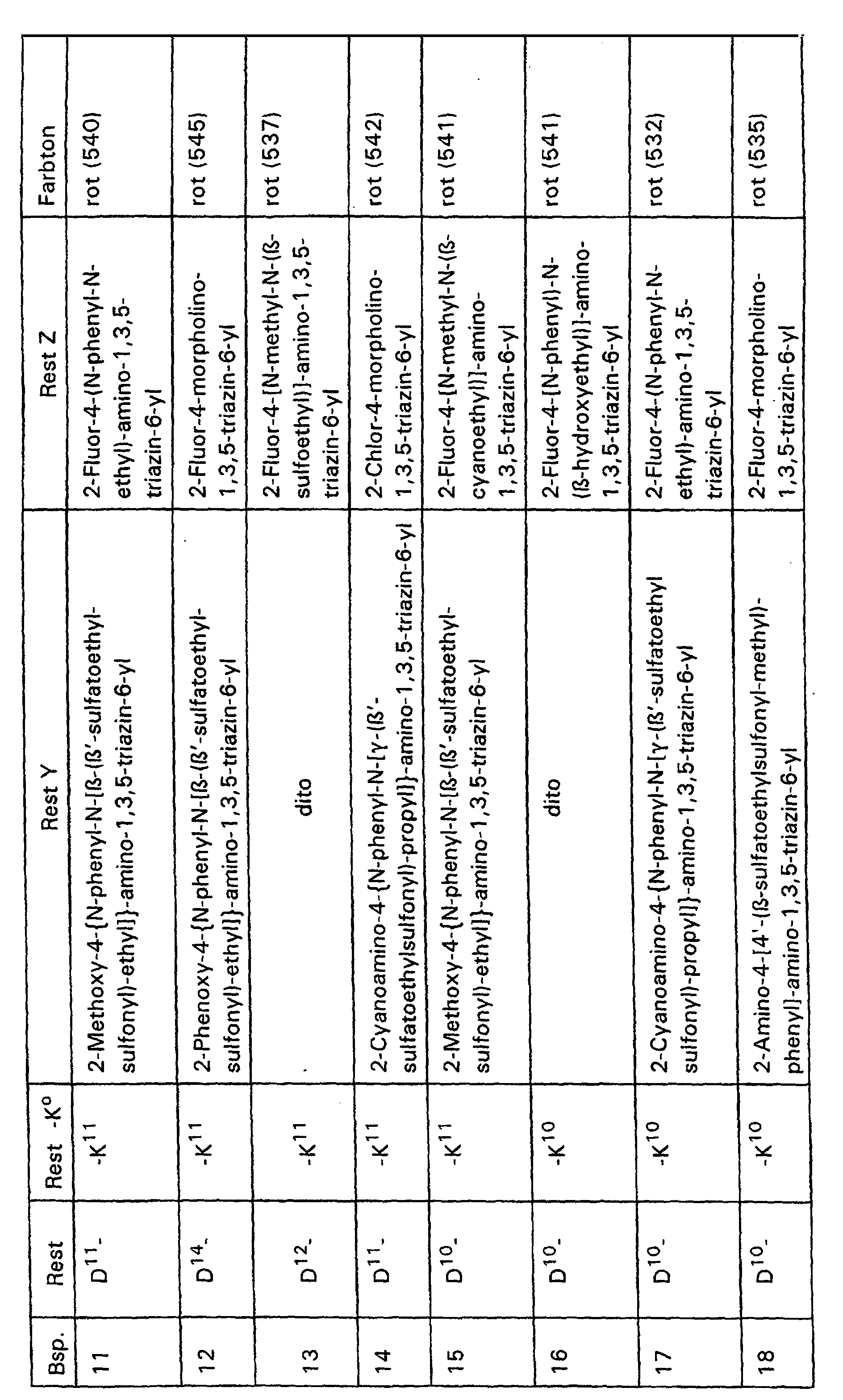

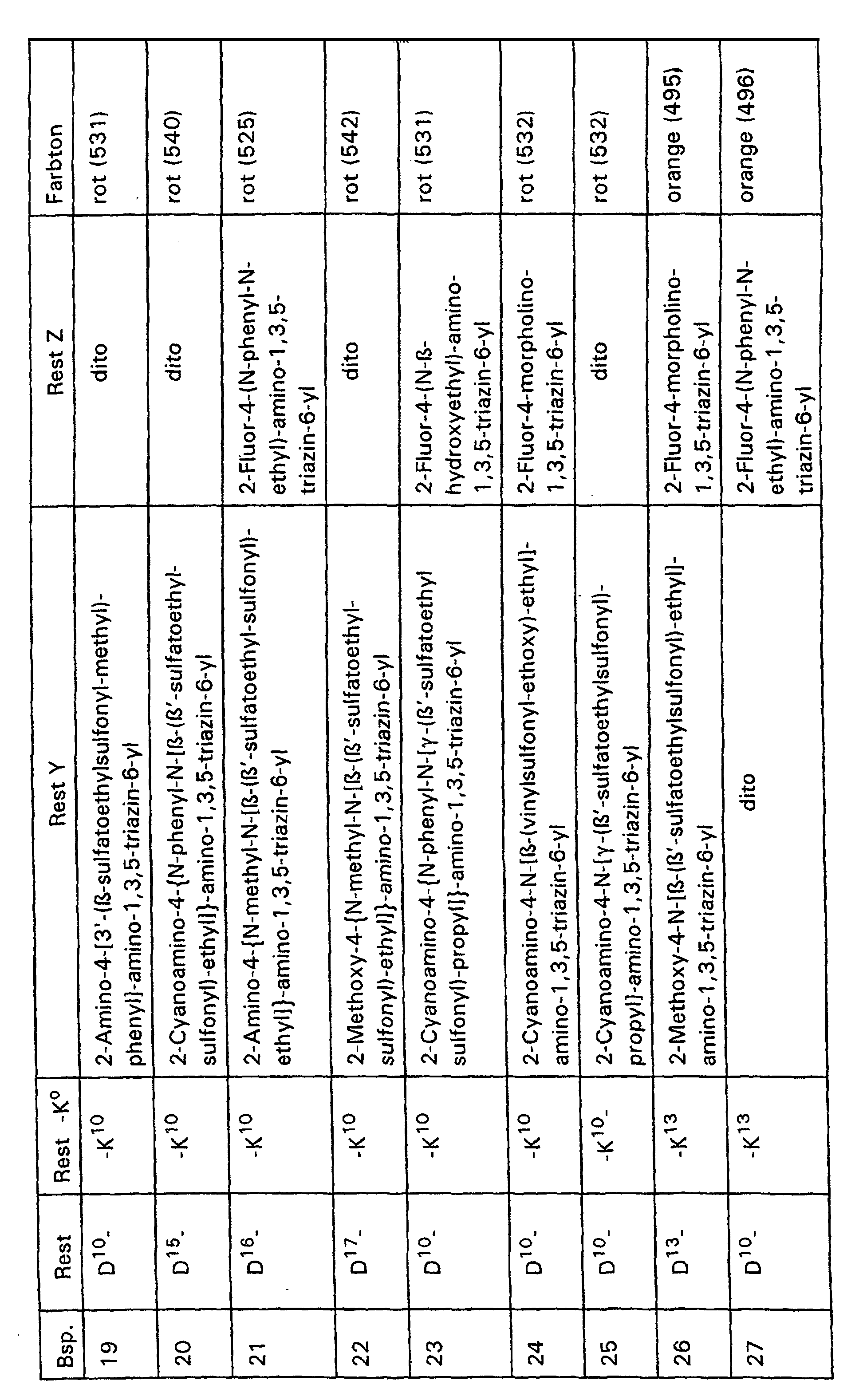

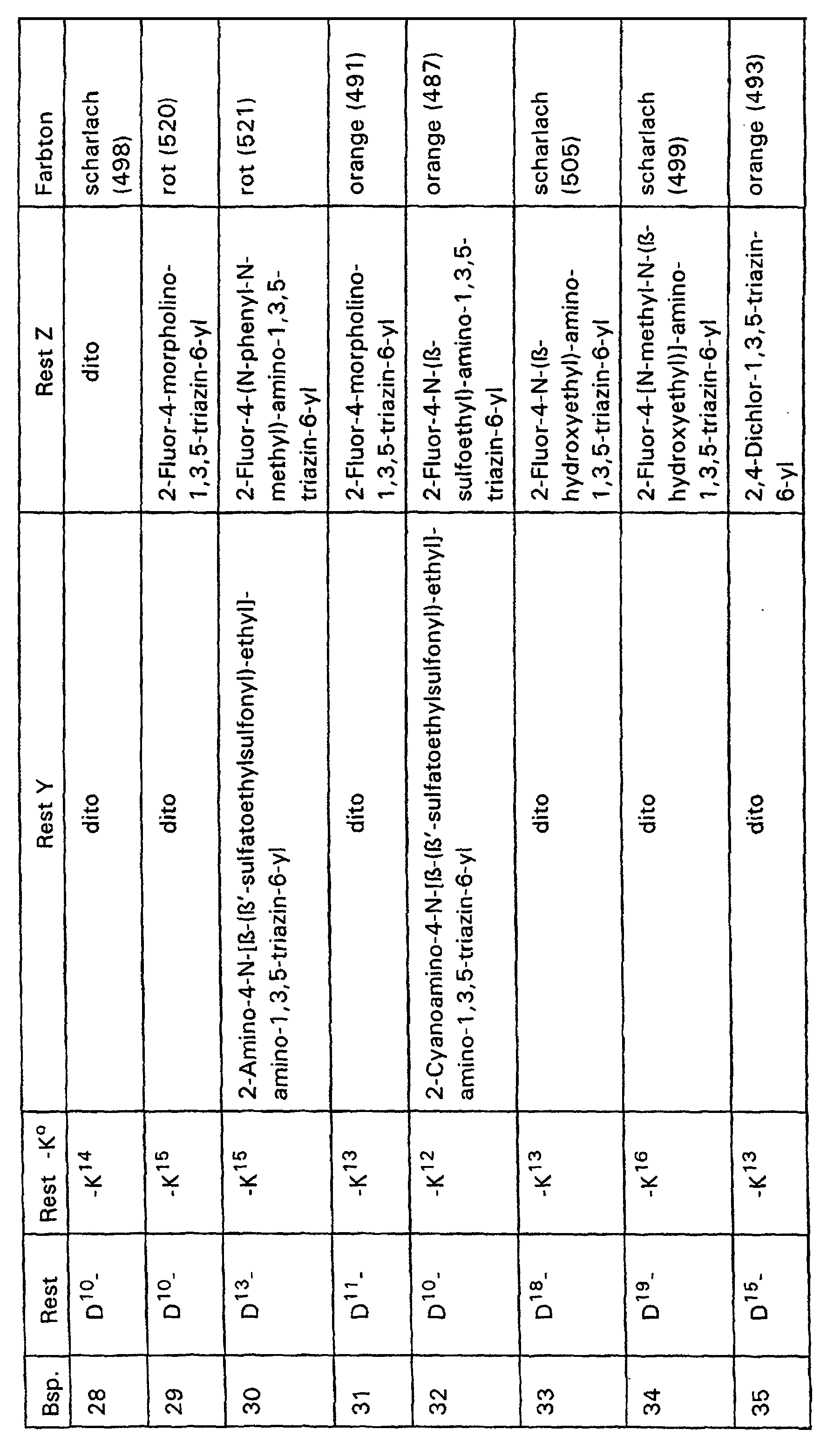

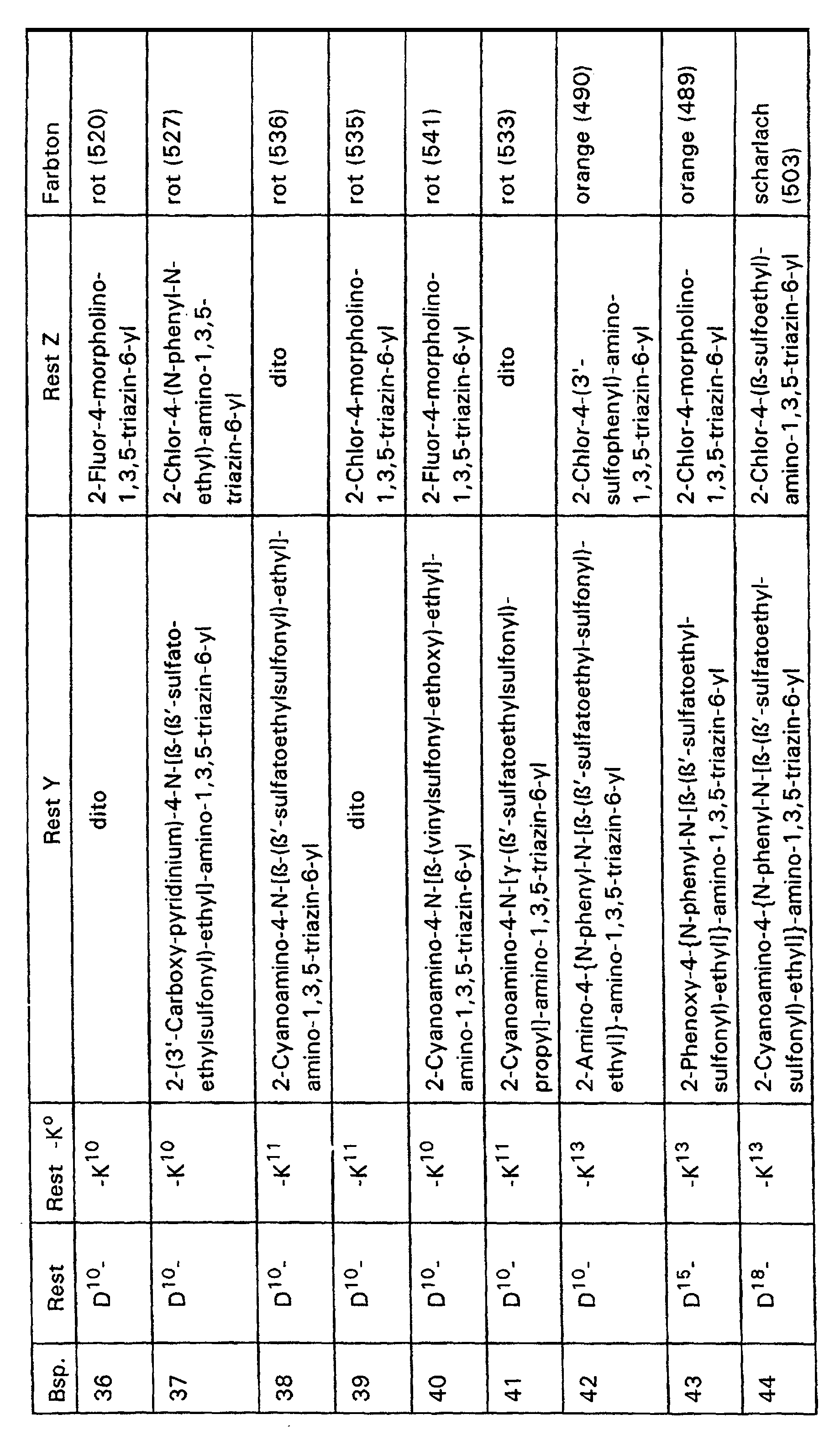

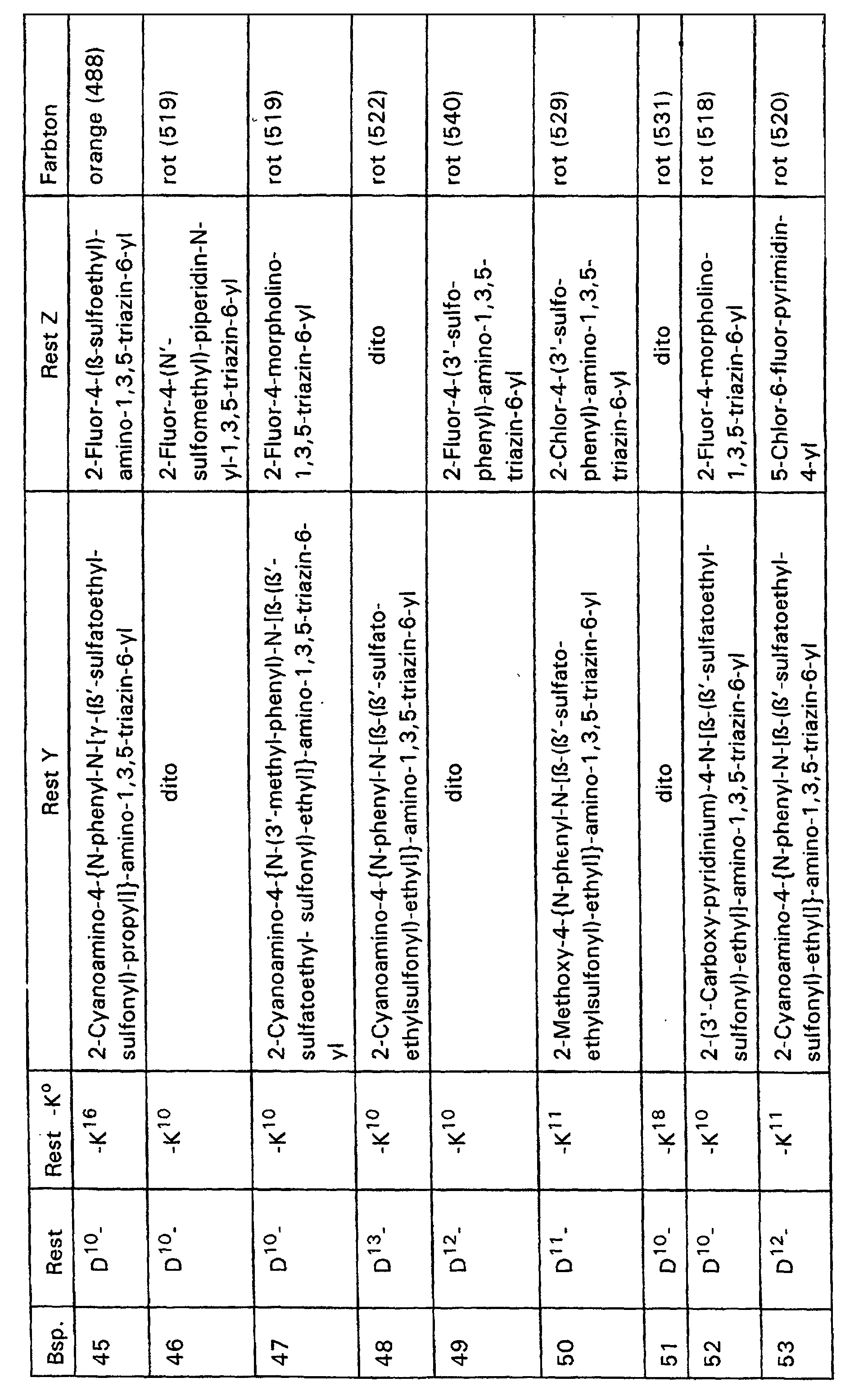

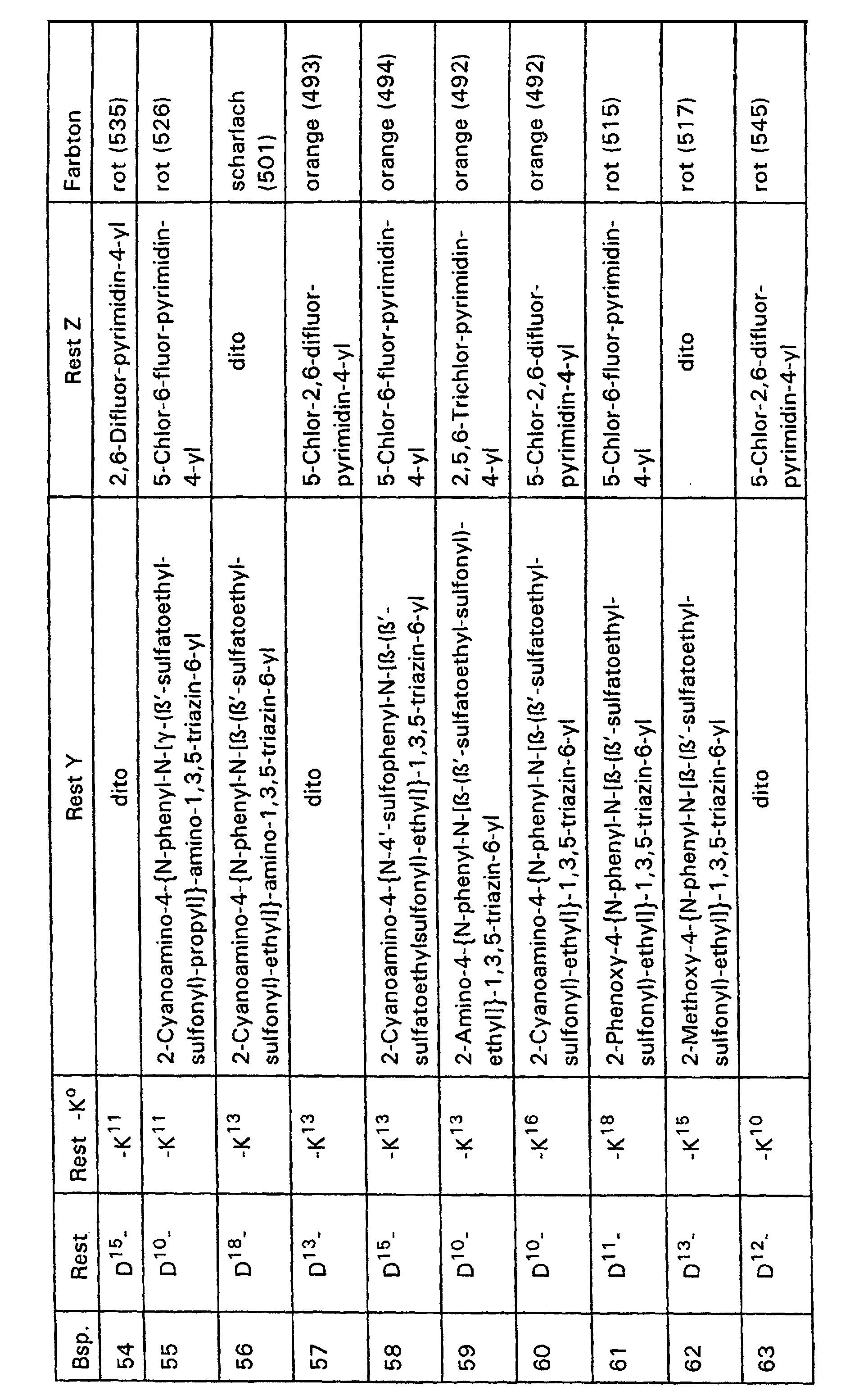

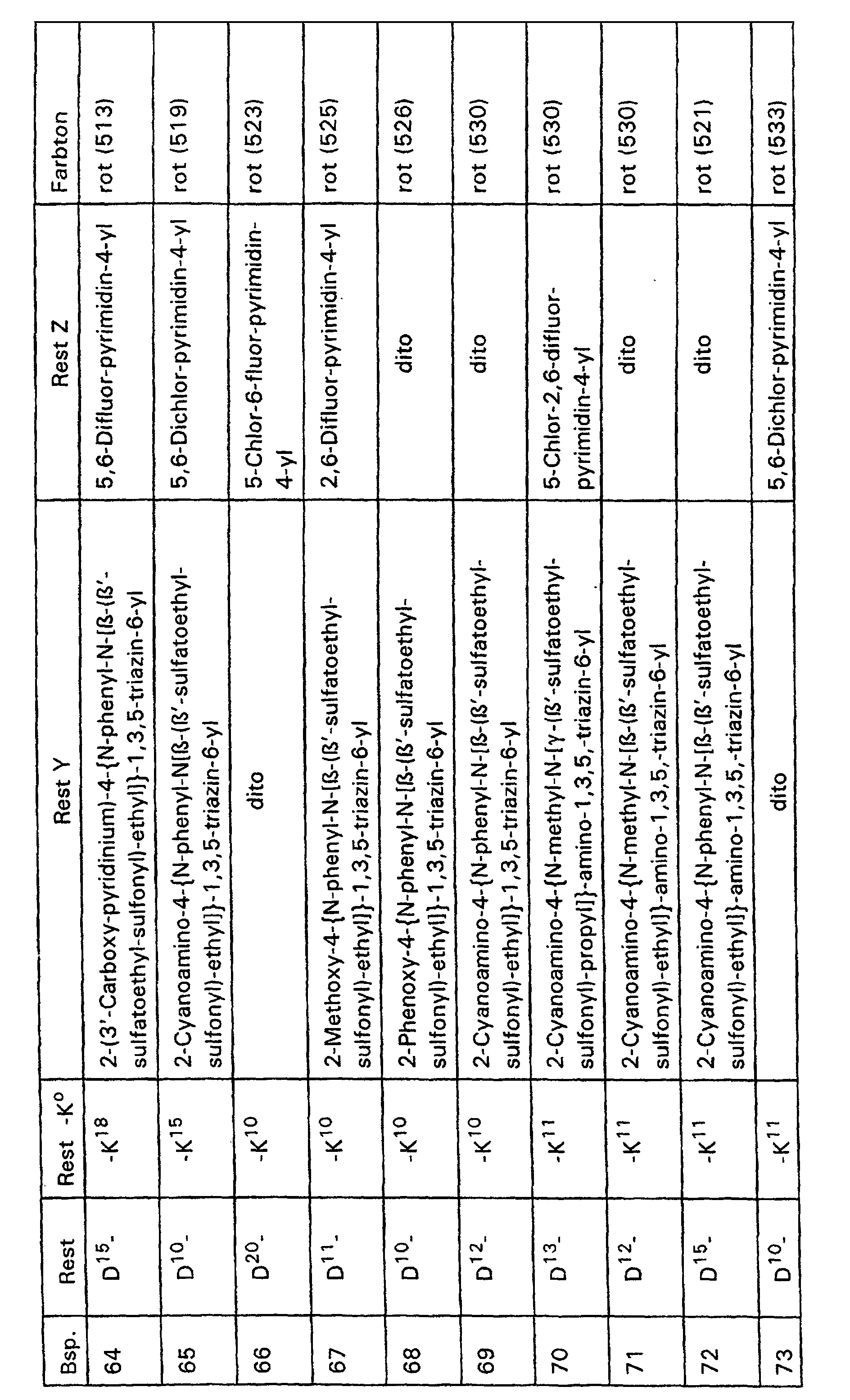

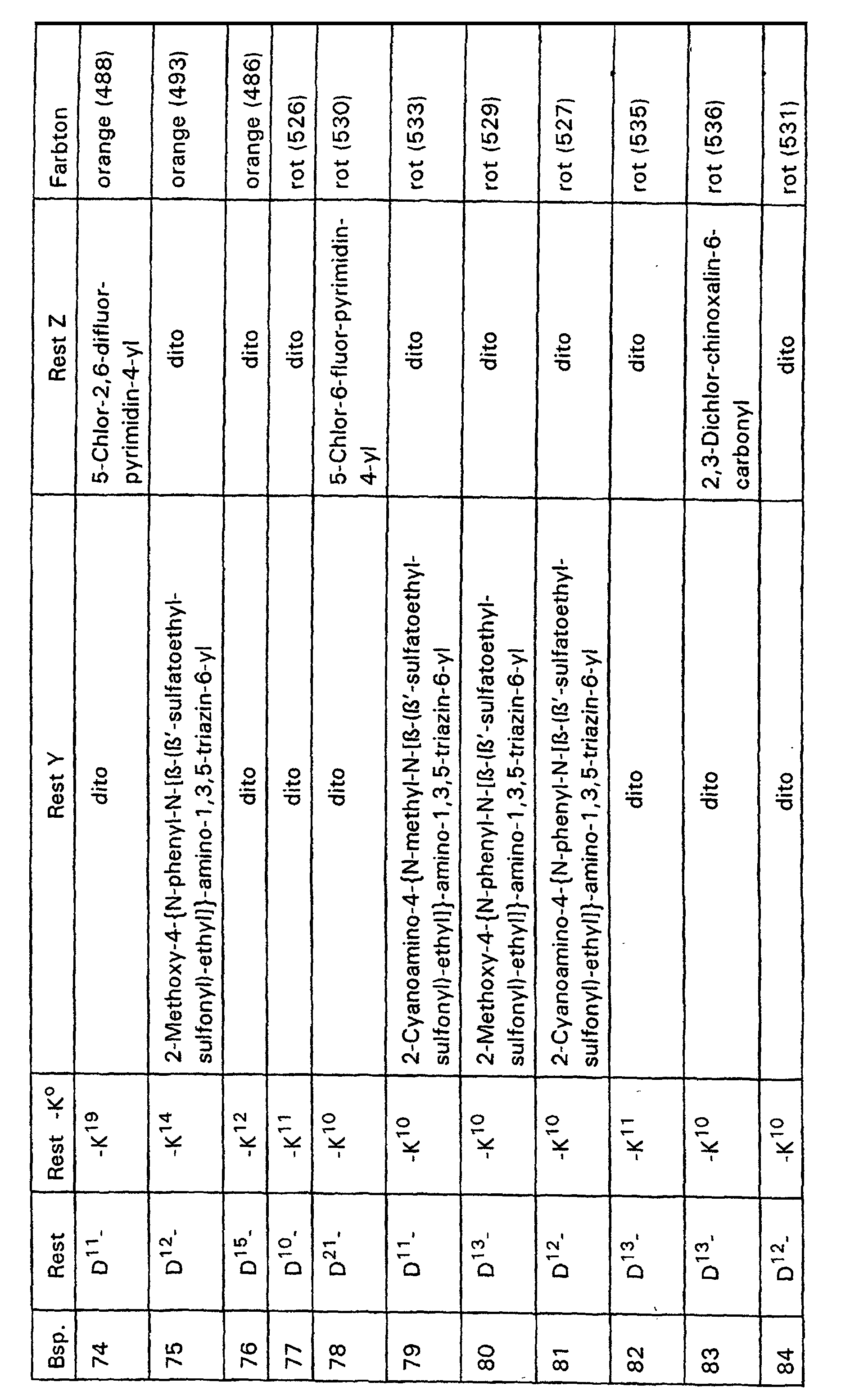

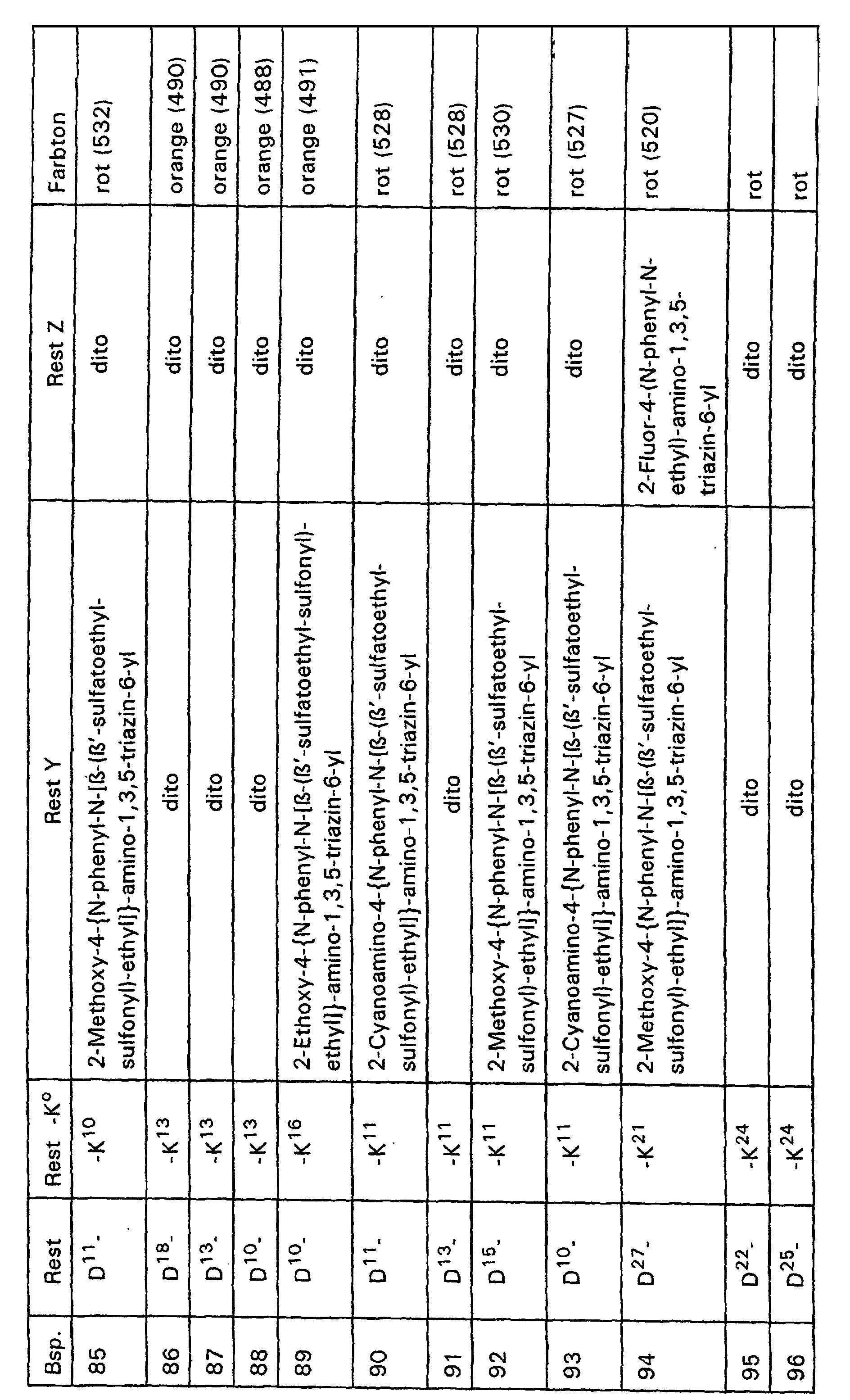

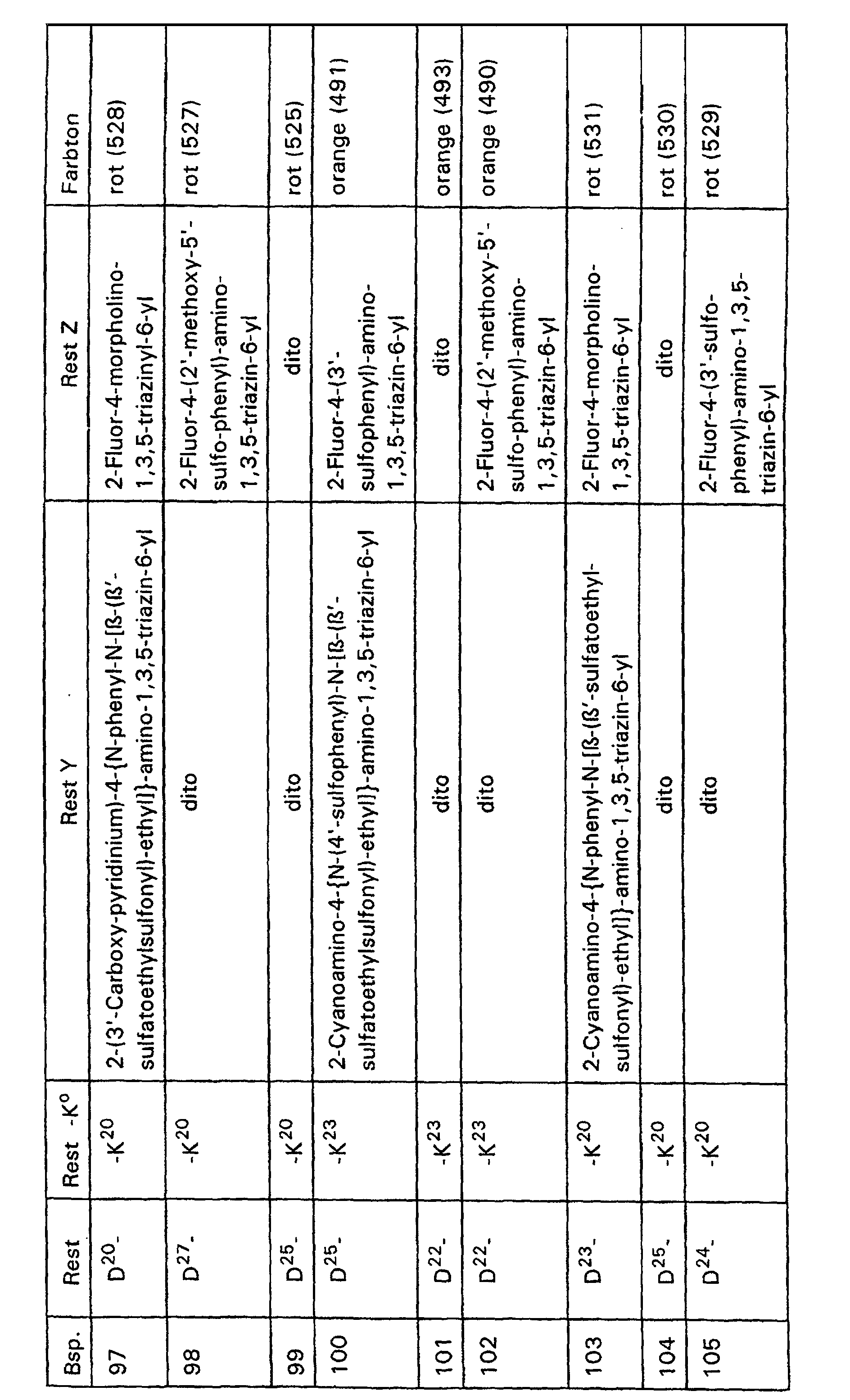

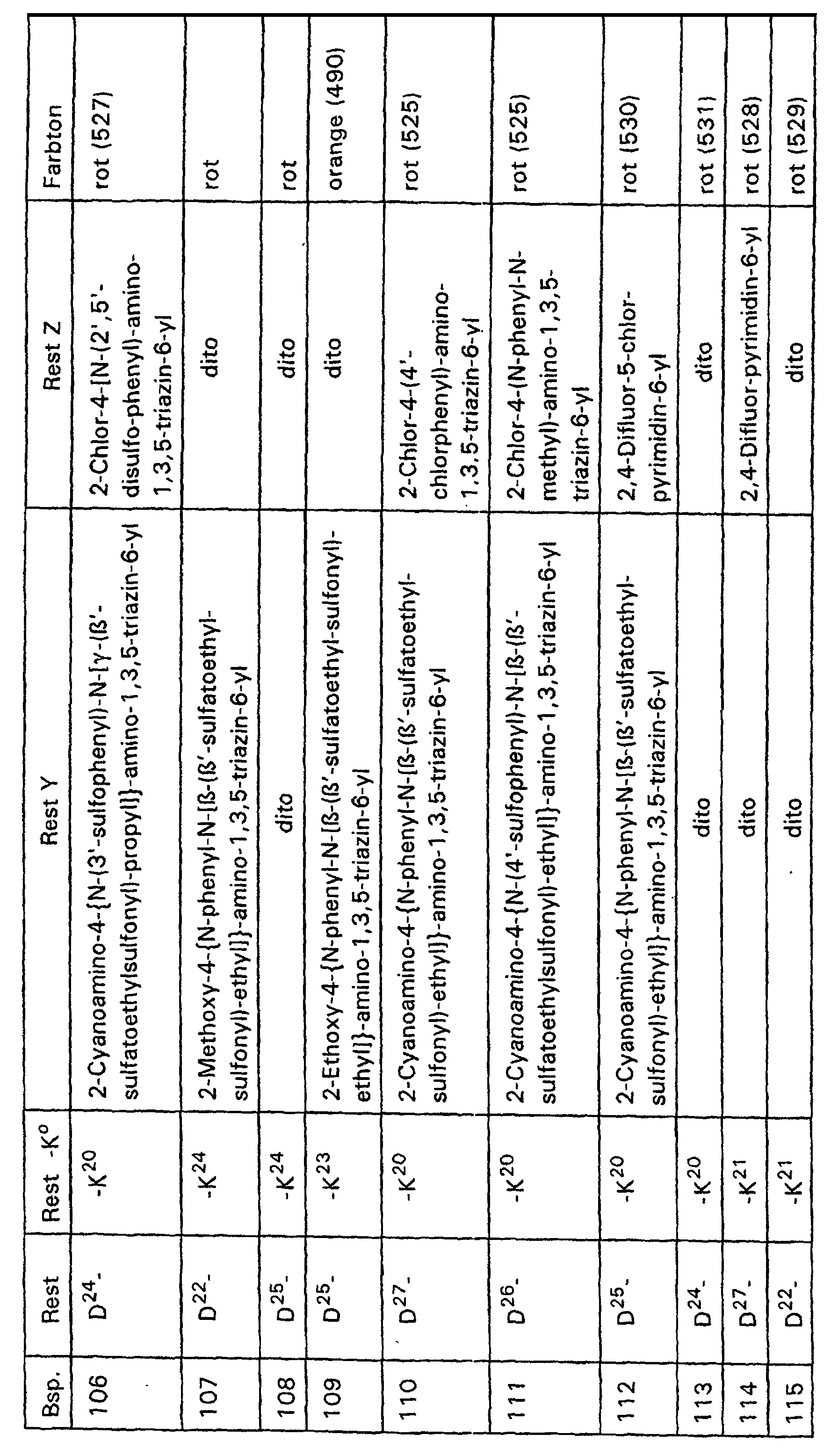

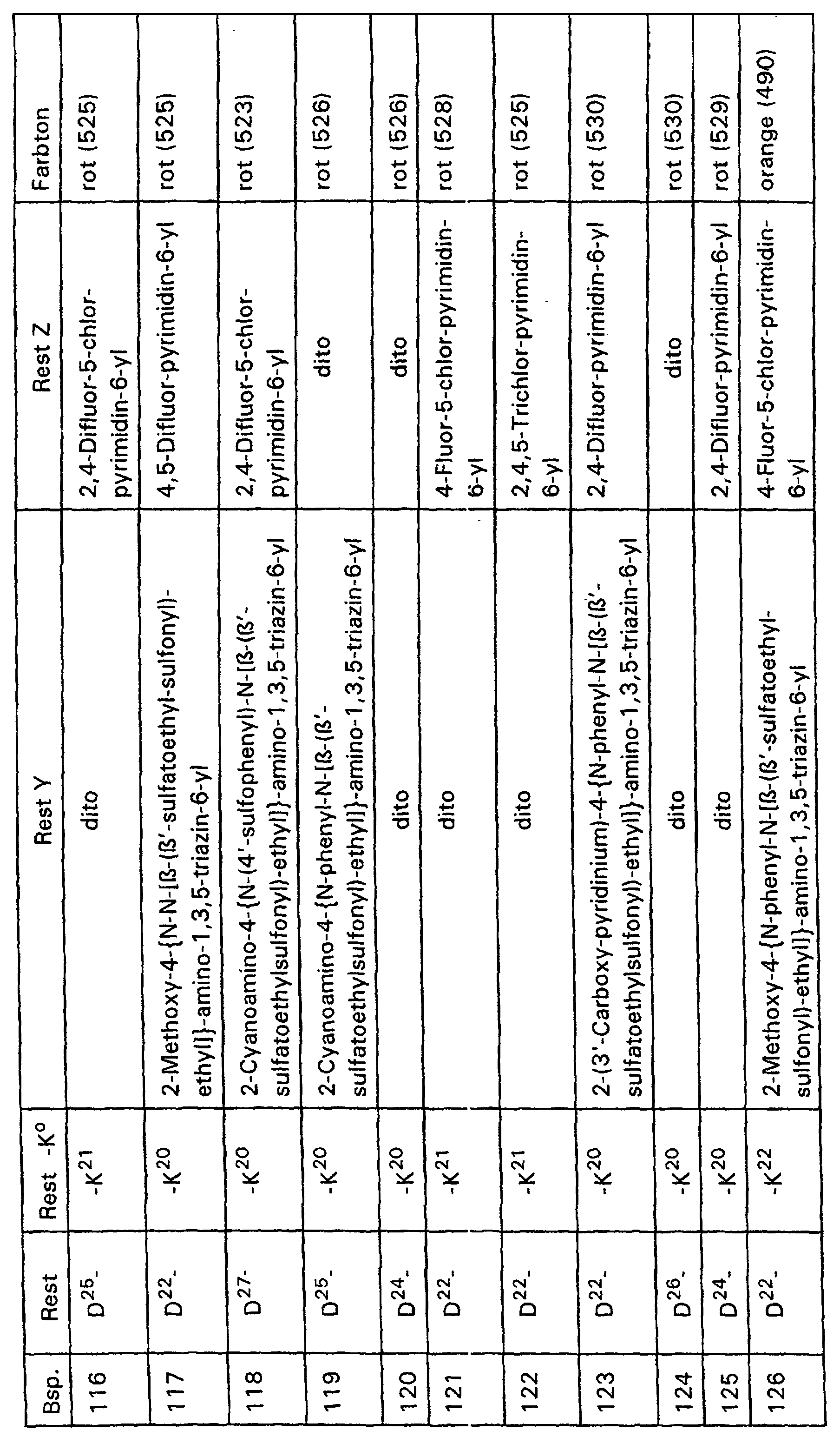

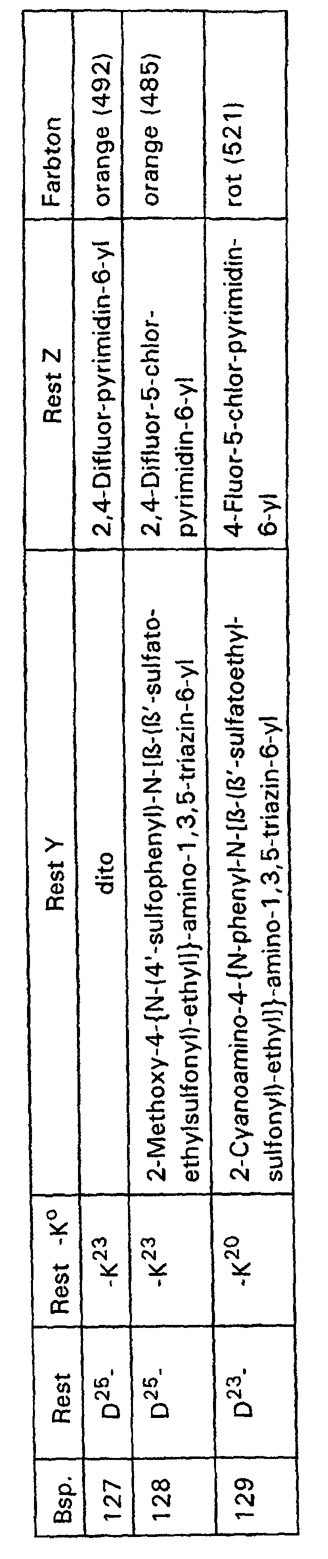

## Patentansprüche

1. Azofarbstoff entsprechend der allgemeinen Formel (1) 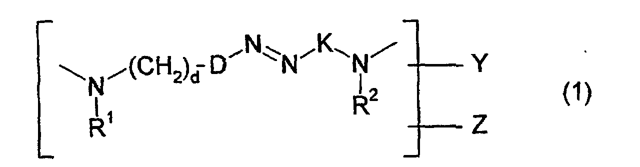 in welcher bedeuten:
D ist der Rest einer Diazokomponente der Benzol- oder Naphthalinreihe;
d ist die Zahl Null oder 1;
K ist der Rest einer Kupplungskomponente der allgemeinen Formel (2) 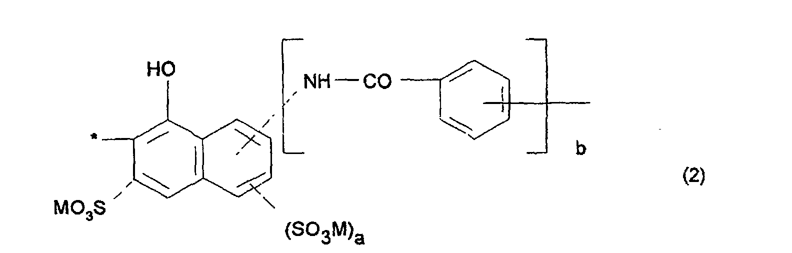
in welcher
M Wasserstoff oder ein Alkalimetall bedeutet,
a die Zahl Null oder 1 bedeutet (wobei im Falle von a gleich Null diese Gruppierung Wasserstoff bedeutet),
b die Zahl Null oder 1 ist und
die mit ^{*} markierte Bindung an die Azogruppe gebunden ist;
R¹ ist Wasserstoff oder Alkyl von 1 bis 6 C-Atomen, das substituiert sein kann;
R² ist Wasserstoff oder Alkyl von 1 bis 6 C-Atomen, das substituiert sein kann;
Y ist an den Aminorest -NR¹- oder -NR²- gebunden und ist ein Rest der allgemeinen Formel (3) 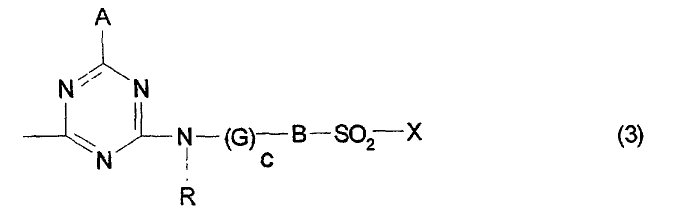 in welcher
R Wasserstoff, Alkyl von 1 bis 4 C-Atomen ist, das substituiert sein kann, oder Phenyl ist, das substituiert sein kann, und
A Amino, Cyanoamino, Alkoxy von 1 bis 4 C-Atomen, Phenoxy, der Rest eines N-haltigen und gegebenenfalls ein weiteres Heteroatom enthaltenden Heterocyclus, wie Pyridinyl oder durch Carboxy oder Aminocarbonyl substituiertes Pyridinyl, ist oder der Rest eines N-haltigen und gegebenenfalls eine weitere Heterogruppe oder Heteroatom enthaltenden gesättigten Heterocyclus, wie Morpholino, Piperidino, Pyrrolidino und Piperazino, ist oder Alkylamino mit einem Alkyl von 1 bis 4 C-Atomen, das durch Substituenten aus der Gruppe Sulfo, Carboxy, Methyl, Ethyl und Ethoxy substituiert sein kann, Dialkylamino mit Alkylresten von 1 bis 4 C-Atomen, die durch Substituenten aus der Gruppe Sulfo, Carboxy, Methyl, Ethyl und Ethoxy substituiert sein können, oder gegebenenfalls im Phenylrest substituiertes Phenylamino ist,
c die Zahl Null oder 1 ist,
G Phenylen ist, das substituiert sein kann,
B Alkylen von 1 bis 6 C-Atomen oder Ethylen-oxy-ethylen ist und
X β-Hydroxyethyl, Vinyl oder Ethyl ist, das in β-Stellung durch einen alkalisch eliminierbaren Substituenten substituiert ist;
Z ist an den Aminorest -NR¹- oder -NR²- gebunden und ist ein heterocyclischer faserreaktiver Rest, der von Y verschieden ist.

2. Azofarbstoff nach Anspruch 1, dadurch gekennzeichnet, daß D der Rest einer allgemeinen Formel (4a), (4b), (4c) oder (4d) 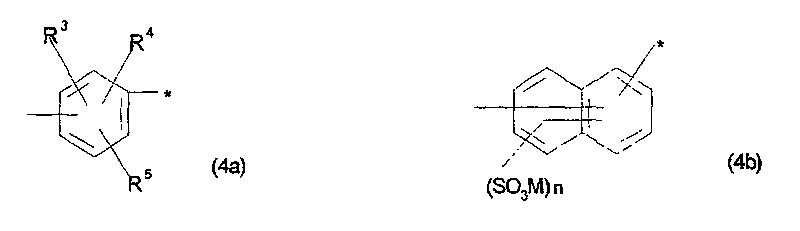 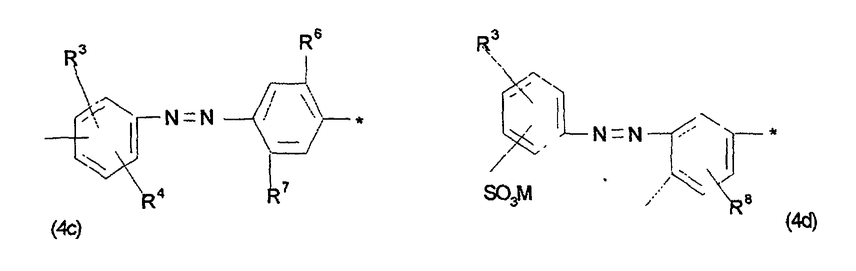 ist, in welchen
R³ Wasserstoff oder Sulfo ist,
R⁴ Wasserstoff oder Sulfo ist,
R⁵ Wasserstoff, Methyl, Ethyl oder Methoxy ist,
n die Zahl Null, 1, 2 oder 3 ist (wobei im Falle von n gleich Null diese Gruppe für Wasserstoff steht),
M die in Anspruch 1 genannte Bedeutung besitzt,
R⁶ Wasserstoff, Alkyl von 1 bis 4 C-Atomen, Alkoxy von 1 bis 4 C-Atomen, Hydroxy oder Sulfo ist,
R⁷ Wasserstoff, Alkyl von1 bis 4 C-Atomen, Alkoxy von 1 bis 4 C-Atomen, Acylamino, Alkylsulfonylamino von 1 bis 4 C-Atomen oder Ureido ist und
R⁸ Wasserstoff, Methyl, Ethyl oder Methoxy ist.

3. Azofarbstoff Anspruch 1 oder 2, dadurch gekennzeichnet, daß K ein Rest der allgemeinen Formel (2a) oder (2b) 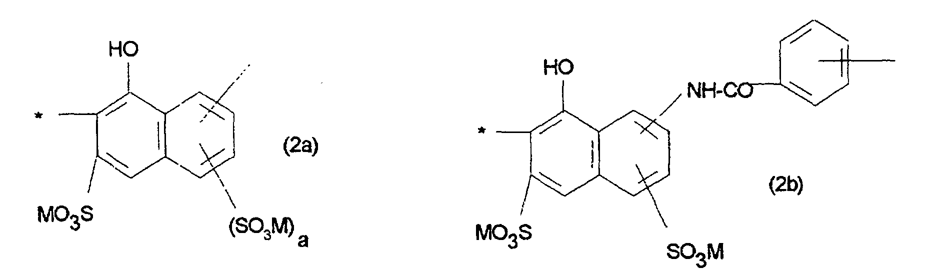 ist, in welchen M, a und ^{*} die in Anspruch 1 genannten Bedeutungen haben.

4. Azofarbstoff nach mindestens einem der Ansprüche 1 bis 3, dadurch gekennzeichnet, daß Y ein Rest der allgemeinen Formel (3a) 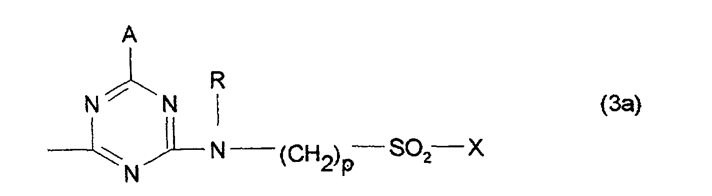 ist, in welcher
A Amino, Cyanoamino, Phenoxy, Methoxy, Ethoxy, Morpholino, Pyrrolidino, Piperazino, Piperidino, 3-Carboxy-pyridinyl, 3-Aminocarbonyl-pyridinyl, Alkylamino mit einem Alkyl von1 bis 4 C-Atomen, das durch 1 oder 2 Substituenten aus der Gruppe Sulfo, Carboxy, Methyl, Ethyl, Methoxy und Ethoxy substituiert sein kann, Dialkylamino mit Alkylresten von 1 bis 4 C-Atomen, von denen eines durch 1 oder 2 Substituenten aus der Gruppe Sulfo, Carboxy, Methyl, Ethyl, Methoxy und Ethoxy substituiert sein kann, Phenylamino oder durch 1 oder 2 Substituenten aus der Gruppe Sulfo, Carboxy, Methyl, Ethyl, Methoxy und Ethoxy substituiertes Phenylamino ist,
R Wasserstoff, Methyl, Ethyl, Phenyl oder durch 1 oder 2 Substituenten aus der Gruppe Methyl, Ethyl und Sulfo substituiertes Phenyl ist,
p für die Zahl 2 oder 3 steht und
X Vinyl, β-Chlorethyl oder β-Sulfatoethyl ist.

5. Azofarbstoff nach mindestens einem der Ansprüche 1 bis 3, dadurch gekennzeichnet, daß Y ein Rest der allgemeinen Formel (3b) 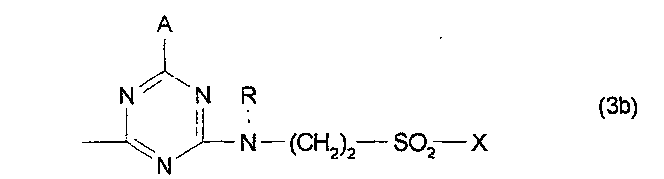 ist, in welcher
A Methoxy, Cyanoamino, Morpholino, 3-Carboxy-pyridinyl oder (β-Sulfatoethyl)-amino ist,
R Phenyl ist und
X Vinyl oder β-Sulfatoethyl bedeutet.

6. Azofarbstoff nach mindestens einem der Ansprüche 1 bis 5, dadurch gekennzeichnet, daß Z ein faserreaktiver fluorhaltiger Pyrimidinyl-6-Rest oder ein Rest der allgemeinen Formel (5) 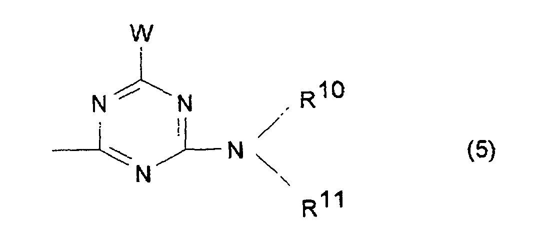 ist, in welcher bedeuten:
W ist Chlor, Fluor oder ein gegebenenfalls substituierter Pyridiniumrest;
R¹⁰ ist Wasserstoff, Alkyl von 1 bis 4 C-Atomen, substituiertes Alkyl von 1 bis 4 C-Atomen, Cycloalkyl mit 5 oder 6 C-Atomen, Phenyl,

7. Azofarbstoff nach Anspruch 1 der allgemeinen Formel (1a) 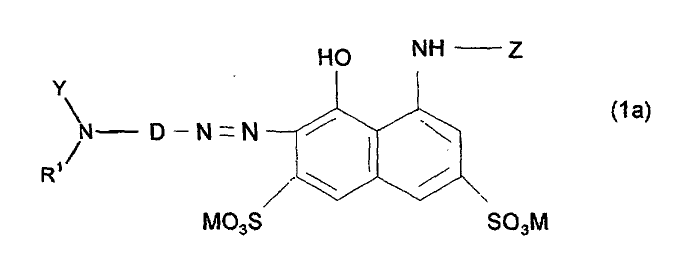 in welcher Y, R¹, D, M und Z eine der in den Ansprüchen 1 bis 6 genannten Bedeutungen haben. Naphthyl oder substituiertes Phenyl oder Naphthyl;
R¹¹ hat eine der für R¹⁰ angegebenen Bedeutungen, oder
die Gruppe -NR¹⁰R¹¹ bildet den N-Morpholino-, N-Piperidino- oder N-Piperazino-Rest.

8. Azofarbstoff nach Anspruch 7, dadurch gekennzeichnet, daß Z der 2-Fluor-4-(N-morpholino)-1,3,5-triazin-6-yl-Rest ist.

9. Azofarbstoff nach Anspruch 1 der allgemeinen Formel (6) 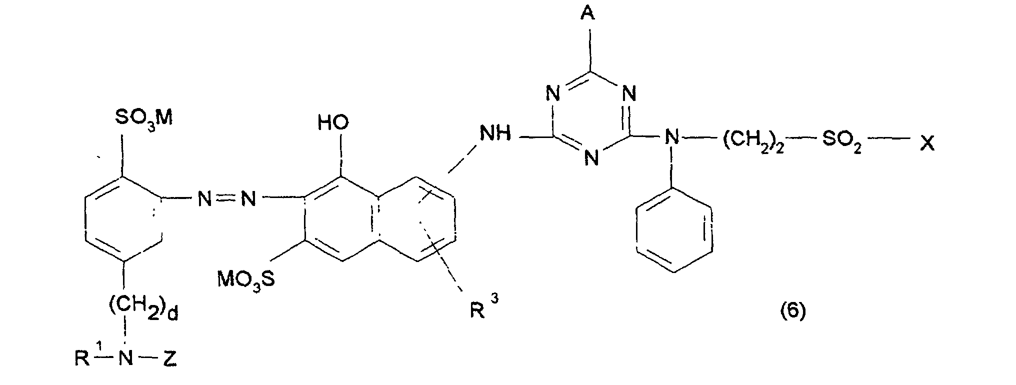 worin
M und d die in Anspruch 1 genannten Bedeutungen haben,
Z eine der in den Ansprüchen 1 oder 6 genannten Bedeutungen besitzt,
R³ Wasserstoff oder Sulfo ist,
X Vinyl oder ß-Sulfatoethyl ist,
R¹ Wasserstoff, Methyl oder Ethyl ist und
A Amino, Cyanoamino, Methoxy, Phenoxy, Sulfophenyl-amino, (β-Sulfoethyl)-amino, 3-Carboxy-pyridinyl oder 3-Aminocarbonyl-pyridinyl ist.

10. Azofarbstoff nach Anspruch 1 der allgemeinen Formel (7) 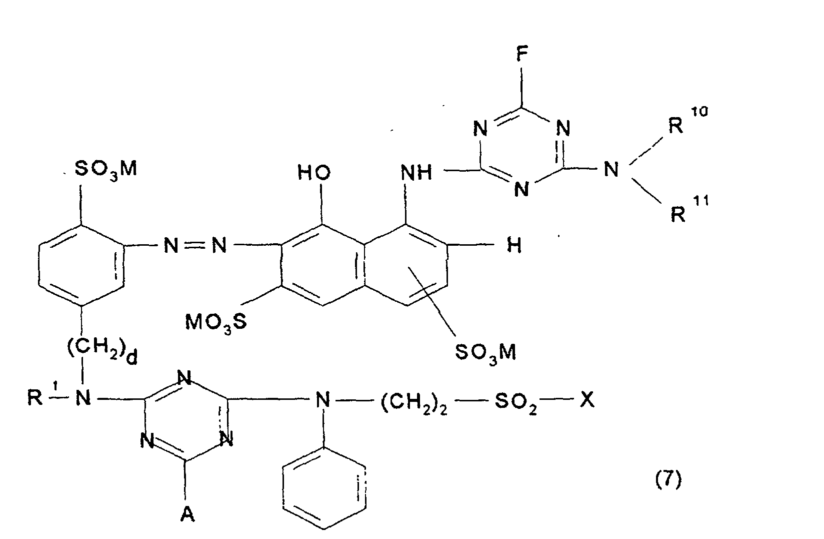 worin bedeuten:
M, d, R¹⁰ und R¹¹ haben die in Anspruch 1 genannten Bedeutungen haben,
X Vinyl oder β-Sulfatoethyl,
R¹ Wasserstoff, Methyl oder Ethyl ist und
A Amino, Cyanoamino, Methoxy, Phenoxy, (β-Sulfoethyl)-amino, Sulfophenyl-amino, 3-Carboxy-pyridinyl oder 3-Aminocarbonyl-pyridinyl ist.

11. Azofarbstoff nach mindestens einem der Ansprüche 1 bis 6, dadurch gekennzeichnet, daß R¹ und R² beide Wasserstoff bedeuten.

12. Azofarbstoff nach mindestens einem der Ansprüche 1 bis 4, 6 bis 8 und 11, dadurch gekennzeichnet, daß X Vinyl oder β-Sulfatoethyl ist.

13. Verfahren zur Herstellung der in Anspruch 1 genannten und definierten Azofarbstoffe der allgemeinen Formel (1), dadurch gekennzeichnet, daß man eine Azoverbindung der allgemeinen Formel (8) 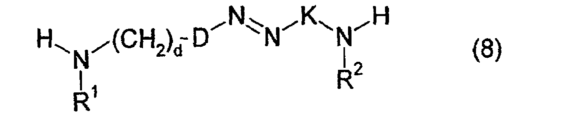 in welcher R¹, R², d, D und K die in Anspruch 1 genannten Bedeutungen haben, in beliebiger Reihenfolge mit je einem Moläquivalent einer Verbindung der allgemeinen Formel Z-Hal, in welcher Z die in Anspruch 1 genannte Bedeutung besitzt und Hal Halogen bedeutet, und mit einer Verbindung der allgemeinen Formel (9) 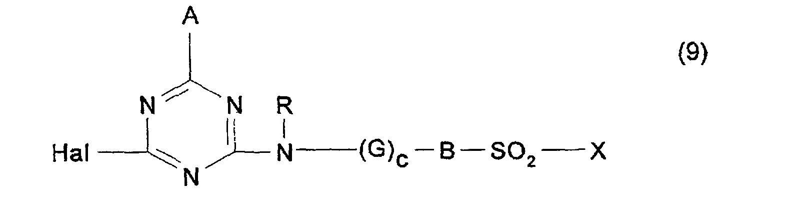 in welcher A, Hal, R, G, c, B und X die in Anspruch 1 genannten Bedeutungen haben, miteinander umsetzt, oder daß man eine Verbindung der allgemeinen Formel (8) in beliebiger Reihenfolge mit je einem Moläquivalent einer Verbindung der oben definierten allgemeinen Formel Z-Hal und einer Verbindung der allgemeinen Formel (10) 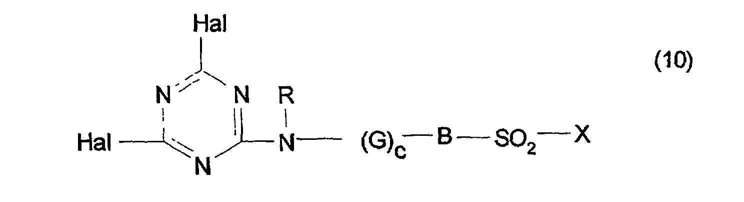 in welchen Z, Hal, R, G, c, B und X die obengenannten Bedeutungen haben, miteinander umsetzt und die so erhaltene Verbindung der allgemeinen Formel (11) 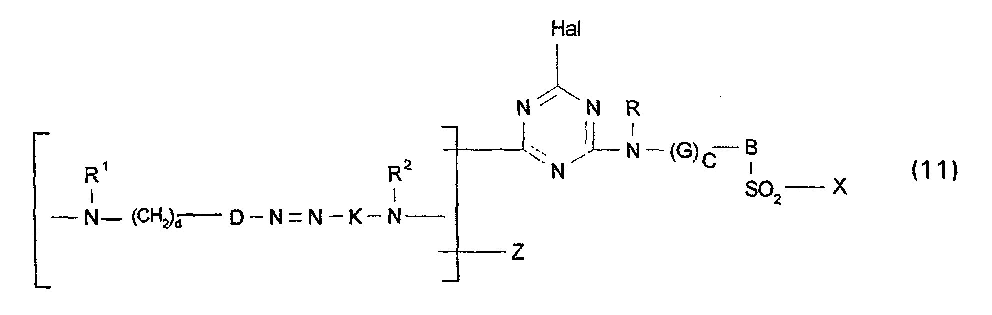 in welcher R¹, R², d, D, K, Hal, R, G, c, B, X und Z die in Anspruch 1 genannten Bedeutungen haben, mit einer Verbindung der allgemeinen Formel H-A mit A der in Anspruch 1 genannten Bedeutung umsetzt, oder daß man Verbindungen der allgemeinen Formeln (12) und (13) 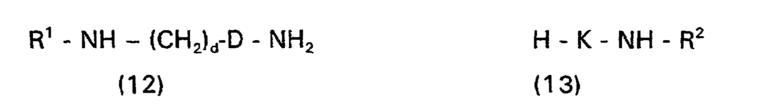 in welchen R¹, d, D, K und R² die obengenannten Bedeutungen haben, alternativ mit je einem Moläquivalent einer Verbindung der allgemeinen Formel (9) und einer Verbindung der allgemeinen Formel Z-Hal umsetzt und die so erhaltene Verbindung der allgemeinen Formel (14a) oder (14b) 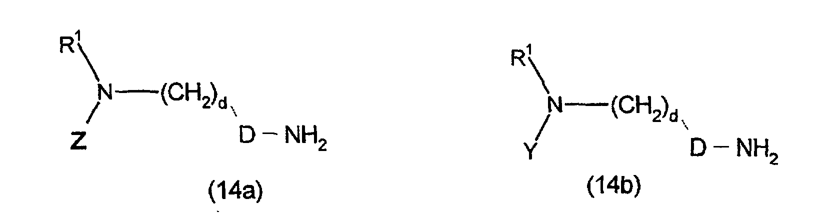 in welchen Z, Y, R¹, d und D die in Anspruch 1 genannten Bedeutungen haben, diazotiert und die erhaltene Diazoniumsalzverbindung mit der Verbindung der allgemeinen Formel (15a) bzw. (15b) 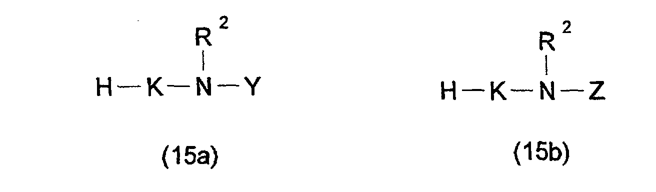 in welcher K, R², Y und Z die in Anspruch 1 genannten Bedeutungen haben, in üblicher Weise kuppelt und gegebenenfalls anschließend weitere Umwandlungsreaktionen in den erhaltenen erfindungsgemäßen Azofarbstoffen der allgemeinen Formel (1) in andere erfindungsgemäße Azofarbstoffe der allgemeinen Formel (1) durchführt.

14. Verwendung eines Farbstoffes von Anspruch 1 oder eines nach
Anspruch 13 hergestellten Farbstoffes zum Färben (einschließlich Bedrucken) von hydroxy- und/oder carbonamidgruppenhaltigem Material, insbesondere Fasermaterial.

15. Verfahren zum Färben (einschließlich Bedrucken) von hydroxy- und/oder carbonamidgruppenhaltigem Material, insbesondere Fasermaterial, bei welchem man einen Farbstoff auf das Material aufbringt und den Farbstoff auf dem Material mittels Wärme oder mit Hilfe eines alkalisch wirkenden Mittels oder mittels beider Maßnahmen fixiert, dadurch gekennzeichnet, daß man als Farbstoff einen Farbstoff von Anspruch 1 oder einen nach Anspruch 13 hergestellten Farbstoff einsetzt.

## Claims

1. An azo dye having the formula (1) 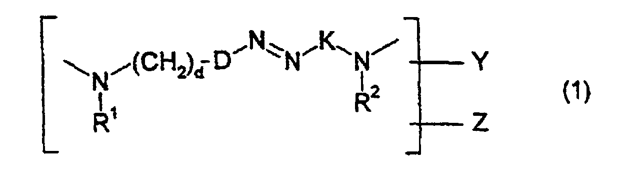 in which
D is the radical of a diazo component from the benzene or naphthalene series,
d is zero or 1;
K is the radical of a coupling component of the formula (2) 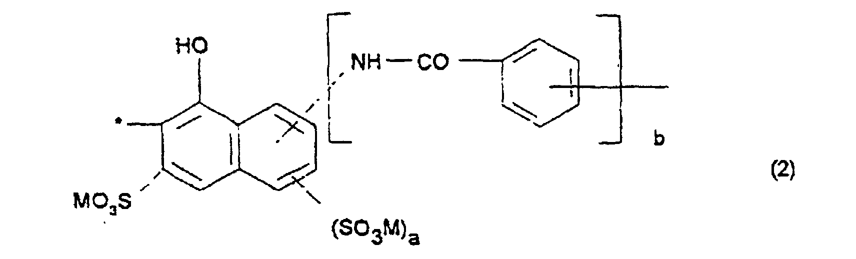 in which
M is hydrogen or an alkali metal,
a is zero or 1 (where, if a is zero, this grouping is hydrogen),
b is zero or 1, and
the bond marked with ^{*} is attached to the azo group,
R¹ is hydrogen or alkyl of 1 to 6 carbon atoms which may be substituted,
R² is hydrogen or alkyl of 1 to 6 carbon atoms which may be substituted,
Y is attached to the amino radical -NR¹- or -NR²- and is a radical of the formula (3) 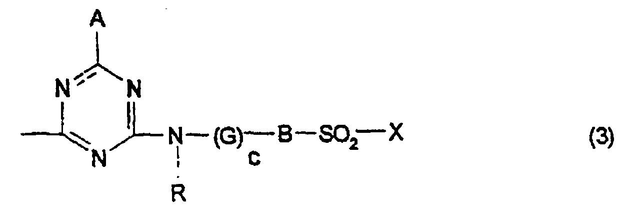 in which
R is hydrogen, alkyl of 1 to 4 carbon atoms which may be substituted or is phenyl which may be substituted, and
A is amino, cyanoamino, alkoxy having 1 to 4 carbon atoms, phenoxy, the radical of an N-containing heterocycle which may contain a further hetero atom, such as pyridinyl or carboxy- or aminocarbonyl-substituted pyridinyl, or is the radical of an N-containing saturated heterocycle which may contain a further hetero group or hetero atom, such as morpholino, piperidino, pyrrolidino and piperazino, or alkylamino having an alkyl of 1 to 4 carbon atoms which may be substituted by substituents selected from the group consisting of sulfo, carboxyl, methyl, ethyl and ethoxy, dialkylamino having alkyl radicals of 1 to 4 carbon atoms which may be substituted by substituents selected from the group consisting of sulfo, carboxyl, methyl, ethyl and ethoxy, or phenylamino which is unsubstituted or substituted in the phenyl radical,
c is zero or 1,
G is phenylene which may be substituted,
B is alkylene having 1 to 6 carbon atoms or is ethyleneoxyethylene and
X is β-hydroxyethyl, vinyl or ethyl which is substituted in the β position by a substituent which can be eliminated by alkali,
Z is attached to the amino radical -NR¹- or -NR²- and is a heterocyclic fiber-reactive radical which is different from Y.

2. An azo dye as claimed in claim 1, wherein
D is the radical of a formula (4a), (4b), (4c) or (4d) 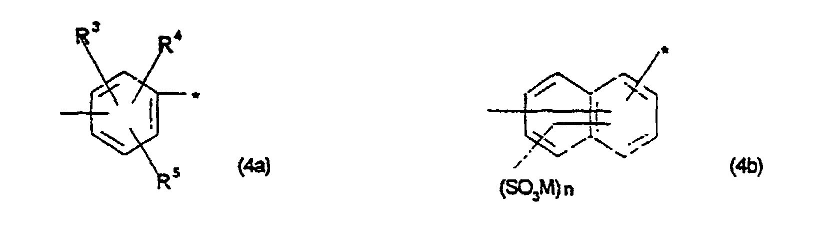 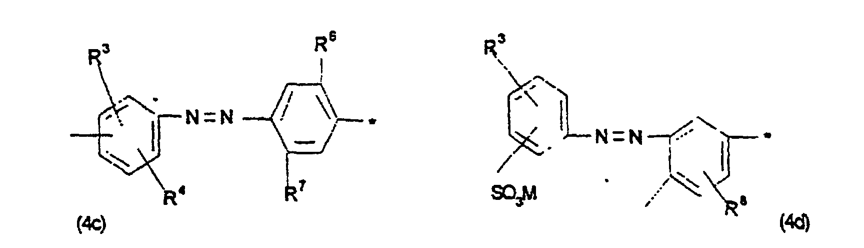 in which
R³ is hydrogen or sulfo,
R⁴ is hydrogen or sulfo,
R⁵ is hydrogen, methyl, ethyl or methoxy,
n is zero, 1, 2 or 3 (where, if n is zero, this group is hydrogen),
M has the meaning given in claim 1,
R⁶ is hydrogen, alkyl having 1 to 4 carbon atoms, alkoxy having 1 to 4 carbon atoms, hydroxyl or sulfo,
R⁷ is hydrogen, alkyl having 1 to 4 carbon atoms, alkoxy having 1 to 4 carbon atoms, acylamino, alkylsulfonylamino having 1 to 4 carbon atoms or ureido, and
R⁸ is hydrogen, methyl, ethyl or methoxy.

3. An azo dye as claimed in claim 1 or 2, wherein
K is a radical of the formula (2a) or (2b) 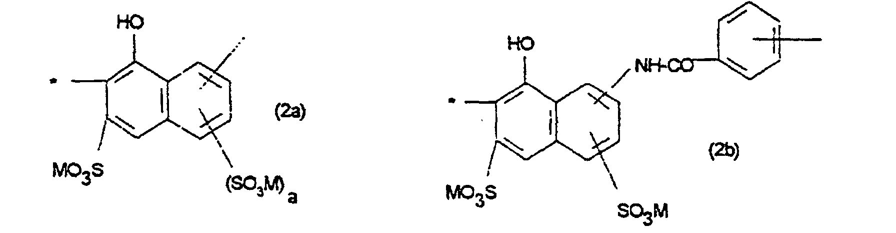
in which M, a and ^{*} have the meanings given in claim 1.

4. An azo dye as claimed in at least one of claims 1 to 3, wherein Y is a radical of the formula (3a) 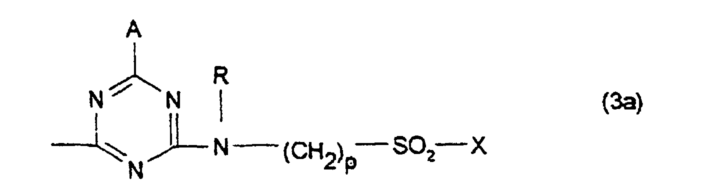 in which
A is amino, cyanoamino, phenoxy, methoxy, ethoxy, morpholino, pyrrolidino, piperazino, piperidino, 3-carboxypyridinyl, 3-aminocarbonylpyridinyl, alkylamino having an alkyl of 1 to 4 carbon atoms which may be substituted by 1 or 2 substituents selected from the group consisting of sulfo, carboxyl, methyl, ethyl, methoxy and ethoxy, dialkylamino having alkyl radicals of 1 to 4 carbon atoms, one of which may be substituted by 1 or 2 substituents selected from the group consisting of sulfo, carboxyl, methyl, ethyl, methoxy and ethoxy, phenylamino or phenylamino which is substituted by 1 or 2 substituents selected from the group consisting of sulfo, carboxyl, methyl, ethyl, methoxy and ethoxy,
R is hydrogen, methyl, ethyl, phenyl or phenyl which is substituted by 1 or 2 substituents selected from the group consisting of methyl, ethyl and sulfo,
p is 2 or 3, and
X is vinyl, β-chloroethyl or β-sulfatoethyl.

5. An azo dye as claimed in at least one of claims 1 to 3, wherein Y is a radical of the formula (3b) 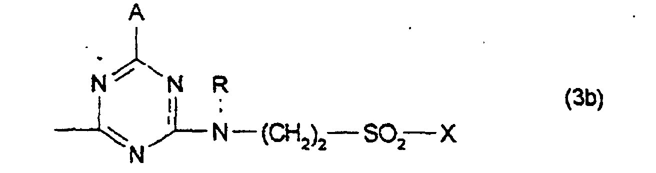 in which
A is methoxy, cyanoamino, morpholino, 3-carboxypyridinyl or (β-sulfatoethyl)amino,
R is phenyl, and
X is vinyl or β-sulfatoethyl.

6. An azo dye as claimed in at least one of claims 1 to 5, wherein Z is a fiber-reactive fluorine-containing pyrimidin-6-yl radical or a radical of the formula (5) 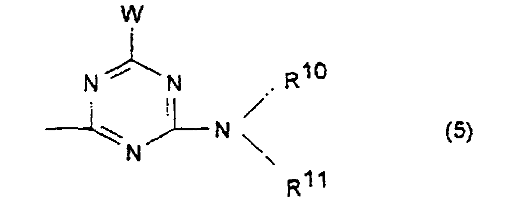 in which
W is chlorine, fluorine or a substituted or unsubstituted pyridinium radical,
R¹⁰ is hydrogen, alkyl having 1 to 4 carbon atoms, substituted alkyl having 1 to 4 carbon atoms, cycloalkyl having 5 or 6 carbon atoms, phenyl, naphthyl or substituted phenyl or naphthyl,
R¹¹ has one of the meanings given for R¹⁰ , or the group -NR¹⁰R¹¹ forms an N-morpholino, N-piperidino or N-piperazino radical.

7. An azo dye as claimed in claim 1 of the formula (1a) 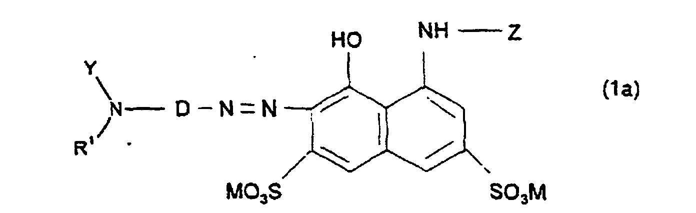 in which Y, R', D, M and Z have one of the meanings given in claims 1 to 6.

8. An azo dye as claimed in claim 7, wherein Z is the 2-fluoro-4-(N-morpholino)-1,3,5-triazin-6-yl radical.

9. An azo dye as claimed in claim 1 of the formula (6) 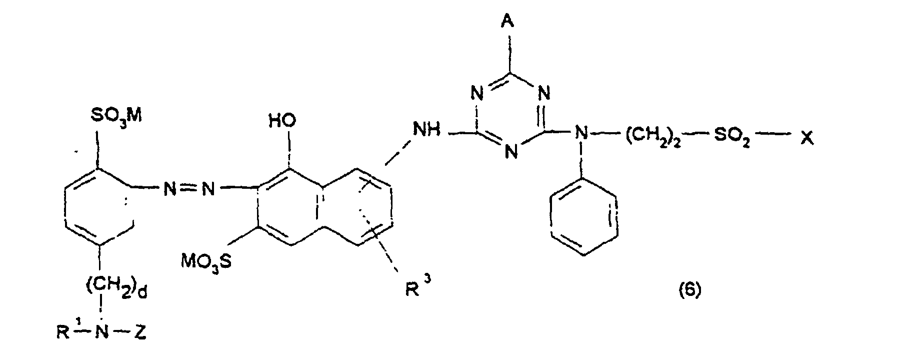 in which
M and d have the meanings given in claim 1,
Z has one of the meanings given in claims 1 or 6,
R³ is hydrogen or sulfo,
X is vinyl or β-sulfatoethyl,
R¹ is hydrogen, methyl or ethyl, and
A is amino, cyanoamino, methoxy, phenoxy, sulfophenylamino, (β-sulfoethyl)amino, 3-carboxypyridinyl or 3-aminocarbonylpyridinyl.

10. An azo dye as claimed in claim 1 of the formula (7) 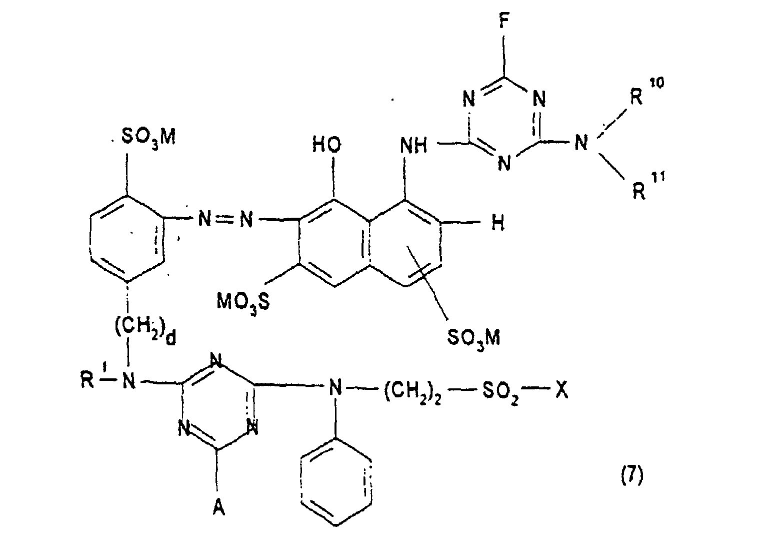 in which
M, d, R¹⁰ and R¹¹ have the meanings given in claim 1,
X is vinyl or β-sulfatoethyl,
R¹ is hydrogen, methyl or ethyl, and
A is amino, cyanoamino, methoxy, phenoxy, (β-sulfoethyl)amino, sulfophenylamino, 3-carboxypyridinyl or 3-aminocarbonylpyridinyl.

11. An azo dye as claimed in at least one of claims 1 to 6, wherein R¹ and R² are both hydrogen.

12. An azo dye as claimed in at least one of claims 1 to 4, 6 to 8 and 11, wherein X is vinyl or β-sulfatoethyl.

13. A process for preparing the azo dyes of the formula (1) mentioned and defined in claim 1, which comprises reacting an azo compound of the formula (8) 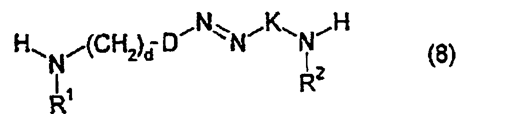 in which R¹, R², d, D and K have the meanings given in claim 1 in any desired order with one mole equivalent each of a compound of the formula Z-Hal in which Z has the meaning given in claim 1 and Hal is halogen and with a compound of the formula (9) 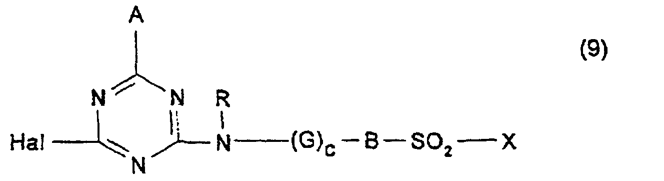 in which A, Hal, R, G, c, B and X have the meanings given in claim 1, or reacting a compound of the formula (8) in any desired order with one mole equivalent each of a compound of the formula Z-Hal defined above and a compound of the formula (10) 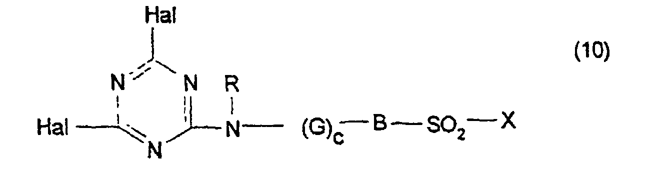 in which Z, Hal, R, G, c, B and X have the abovementioned meanings and reacting a compound of the formula (11) thus obtained 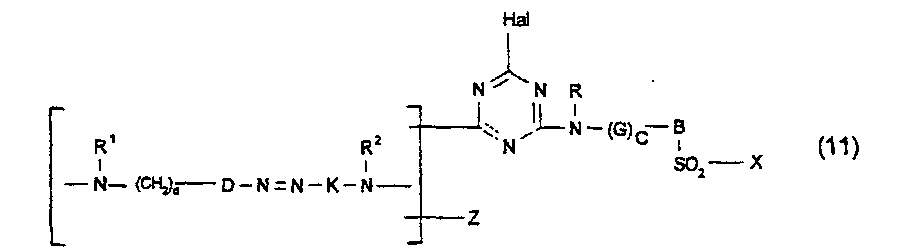 in which R¹, R², d, D, K, Hal, R, G, c, B, X and Z have the meanings given in claim 1 with a compound of the formula H-A where A has the meaning given in claim 1,
or reacting compounds of the formulae (12) and (13) 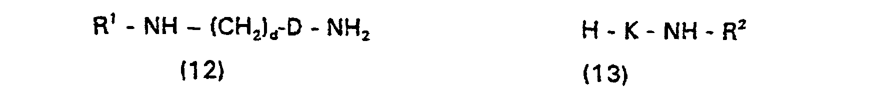 in which R¹, d, D, K and R² have the abovementioned meanings alternatively with one mole equivalent each of a compound of the formula (9) and a compound of the formula Z-Hal and diazotizing the compound thus obtained of the formula (14a) or (14b) 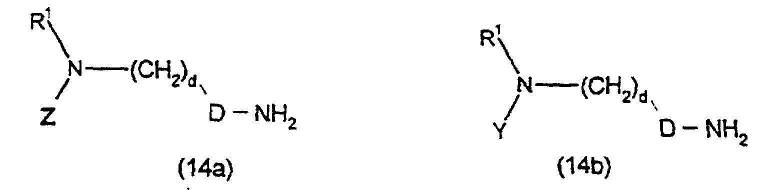 in which Z, Y, R¹, d and D have the meanings given in claim 1 and coupling the resulting diazonium salt compound onto a compound of the formula (15a) or (15b) 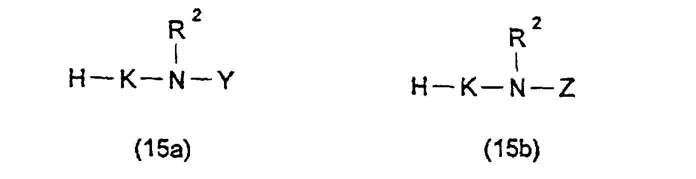 in which K, R², Y and Z have the meanings given in claim 1, in a usual manner and then, if desired, carrying out further transformation reactions in the resulting azo dyes of the formula (1) according to the invention to give other azo dyes of the formula (1) according to the invention.

14. Use of a dye as claimed in claim 1 or of a dye prepared as claimed in claim 13 for dyeing (including printing) hydroxyl- and/or carboxamido-containing material, in particular fiber material.

15. A process for dyeing (including printing) hydroxyl- and/or carboxamido-containing material, in particular fiber material, in which a dye is applied to the material and the dye is fixed on the material by means of heat or by means of an alkaline agent or by means of both measures, which comprises using as the dye a dye as claimed in claim 1 or a dye prepared as claimed in claim 13.

## Revendications

1. Colorant azoïque de formule générale (1) 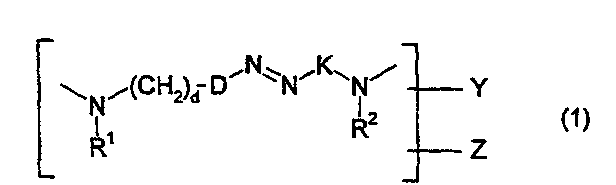 dans laquelle :
D représente le radical d'un composant diazoïque de la série du benzène ou du naphtalène ;
d est le nombre zéro ou 1 ;
K est le radical d'un composant de couplage de formule générale (2) 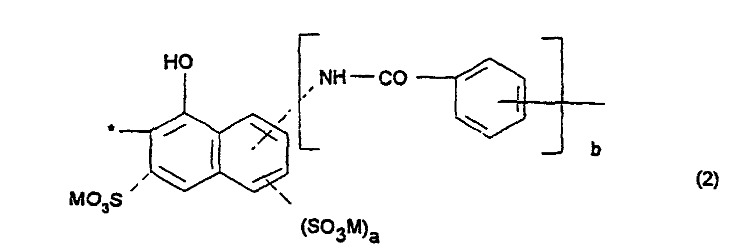
dans laquelle
M représente un hydrogène ou un métal alcalin,
a représente le nombre zéro ou 1 (ce groupement représentant un hydrogène dans le cas où a vaut zéro),
b représente le nombre zéro ou 1 et la liaison marquée ^{*} est liée au groupe azoïque ;
R¹ représente un hydrogène ou un alkyle ayant de 1 à 6 atomes de carbone, qui peut être substitué ;
R² représente un hydrogène ou un alkyle ayant de 1 à 6 atomes de carbone, qui peut être substitué ;
Y est lié au radical amino -NR¹- ou -NR²- et représente un radical de formule générale (3) 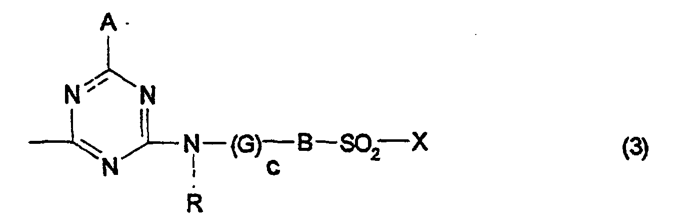 dans laquelle
R représente un hydrogène, un alkyle ayant de 1 à 4 atomes de carbone, qui peut être substitué, ou un phényle, qui peut être substitué, et
A représente un amino, un cyanoamino, un alcoxy ayant de 1 à 4 atomes de carbone, un phénoxy, le radical d'un hétérocycle azoté et renfermant éventuellement un autre hétéroatome, tel qu'un pyridinyle ou un pyridinyle substitué par un carboxy ou un aminocarbonyle, ou représente le radical d'un hétérocycle saturé azoté et renfermant éventuellement un autre hétérogroupe ou hétéroatome tel qu'un morpholino, un pipéridino, un pyrrolidino et pipérazino, ou représente un alkylamino avec un alkyle ayant de 1 à 4 atomes de carbone, qui peut être substitué par des substituants parmi le groupe constitué d'un sulfo, d'un carboxy, d'un méthyle, d'un éthyle et d'un éthoxy, un dialkylamino avec des radicaux alkyle ayant de 1 à 4 atomes de carbone, qui peuvent être substitués par des substituants parmi le groupe constitué d'un sulfo, d'un carboxy, d'un méthyle, d'un éthyle et d'un éthoxy ou un phénylamino éventuellement substitué sur le radical phényle,
c représente le nombre zéro ou 1,
G représente un phénylène qui peut être substitué,
B représente un alkylène ayant de 1 à 6 atomes de carbone ou un éthylène-oxy-éthylène, et
X représente un β-hydroxyéthyle, un vinyle ou un éthyle, qui est substitué en position β par un substituant pouvant être éliminé en milieu alcalin ;
Z est lié au radical amino -NR¹- ou -NR²- et représente un radical hétérocyclique réactif vis-à-vis de la fibre, qui est différent de Y.

2. Colorant azoïque selon la revendication 1, caractérisé en ce que
D représente le radical de formule générale (4a), (4b) , (4c) ou (4d) 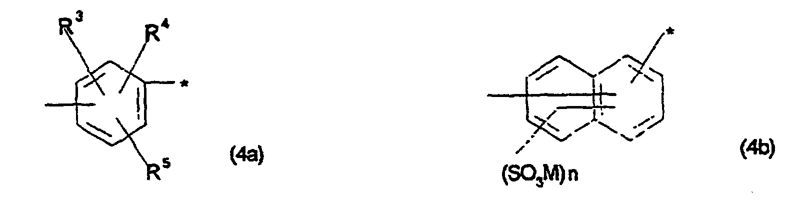 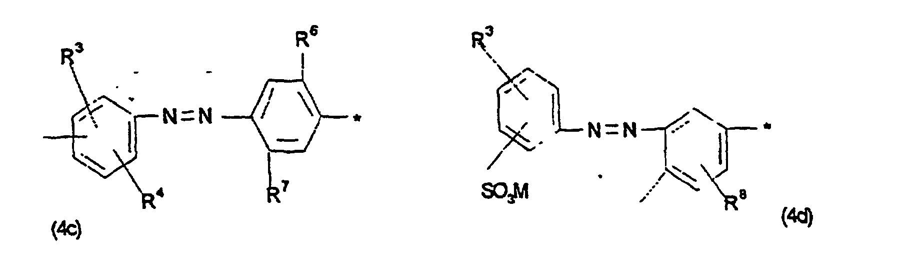
dans lesquelles
R³ représente un hydrogène ou un sulfo,
R⁴ représente un hydrogène ou un sulfo,
R⁵ représente un hydrogène, un méthyle, un éthyle ou un méthoxy,
n représente le nombre zéro, 1, 2 ou 3 (ce groupe désignant un hydrogène dans le cas où n vaut zéro),
M a la signification mentionnée à la revendication 1,
R⁶ représente un hydrogène, un alkyle ayant de 1 à 4 atomes de carbone, un alkoxy ayant de 1 à 4 atomes de carbone, un hydroxy ou un sulfo,
R⁷ représente un hydrogène, un alkyle ayant de 1 à 4 atomes de carbone, un alkoxy ayant de 1 à 4 atomes de carbone, un acylamino, un alkylsulfonylamino ayant de 1 à 4 atomes de carbone ou un uréido et
R⁸ représente un hydrogène, un méthyle, un éthyle ou un méthoxy.

3. Colorant azoïque selon la revendication 1 ou 2, caractérisé en ce que
K représente un radical de formules générales (2a) ou (2b) 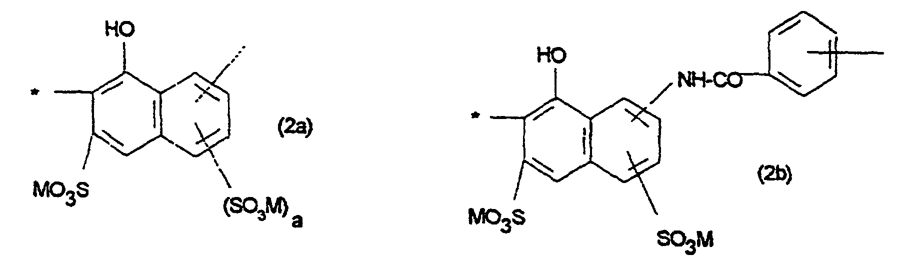
dans lesquelles M, a et ^{*} ont les significations mentionnées à la revendication 1.

4. Colorant azoïque selon au moins l'une des revendications 1 à 3, caractérisé en ce que Y représente un radical de formule générale (3a) 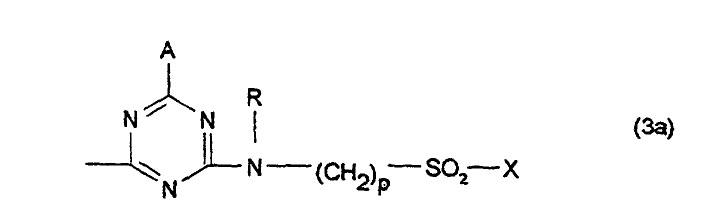 dans laquelle
A représente un amino, un cyanoamino, un phénoxy, un méthoxy, un éthoxy, un morpholino, un pyrrolidino, un pipérazino, un pipéridino, un 3-carboxypyridinyle, un 3-aminocarbonylpyridinyle, un alkylamino avec un alkyle ayant de 1 à 4 atomes de carbone, qui peut être substitué par 1 ou 2 substituants parmi le groupe constitué d'un sulfo, d'un carboxy, d'un méthyle, d'un éthyle, d'un méthoxy et d'un éthoxy, un dialkylamino avec des radicaux alkyle ayant de 1 à 4 atomes de carbone, dont l'un peut être substitué par un ou deux substituants parmi le groupe constitué d'un sulfo, d'un carboxy, d'un méthyle, d'un éthyle, d'un méthoxy et d'un éthoxy, un phénylamino ou un phénylamino substitué par 1 ou 2 substituants parmi le groupe constitué d'un sulfo, d'un carboxy, d'un méthyle, d'un éthyle, d'un méthoxy et d'un éthoxy,
R représente un hydrogène, un méthyle, un éthyle, un phényle ou phényle substitué par 1 ou 2 substituants parmi le groupe constitué d'un méthyle, d'un éthyle et d'un sulfo,
p désigne le nombre 2 ou 3, et
X représente un vinyle, un β-chloroéthyle ou un β-sulfatoéthyle.

5. Colorant azoïque selon au moins l'une des revendications 1 à 3, caractérisé en ce que Y représente un radical de formule générale (3b) 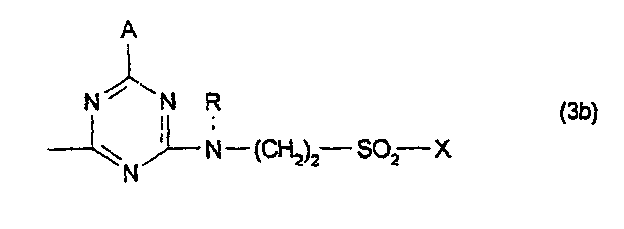 dans laquelle
A représente un méthoxy, un cyanoamino, un morpholino, un 3-carboxypyridinyle ou (β-sulfatoéthyl)-amino,
R représente un phénvle et
X représente un vinyle ou un β-sulfatoéthyle.

6. Colorant azoïque selon au moins l'une des revendications 1 à 5, caractérisé en ce que Z représente un radical 6-pyrimidinyl fluoré réactif vis-à-vis de la fibre ou un radical de formule générale (5) 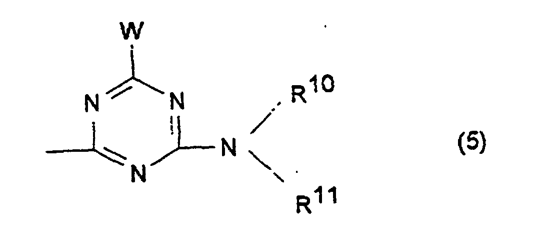 dans laquelle :
W représente un chlore, un fluor ou un radical pyridinium éventuellement substitué ;
R¹⁰ représente un hydrogène, un alkyle ayant de 1 à 4 atomes de carbone, un alkyle substitué ayant de 1 à 4 atomes de carbone, un cycloakyle ayant 5 ou 6 atomes de carbone, un phényle, un naphtyle ou un phényle ou naphtyle substitué ;
R¹¹ a l'une des significations indiquées pour R¹⁰, ou le groupe -NR¹⁰R¹¹ forme le radical N-morpholino, N-pipéridino ou N-pipérazino.

7. Colorant azoïque selon la revendication 1 de formule générale (1a) 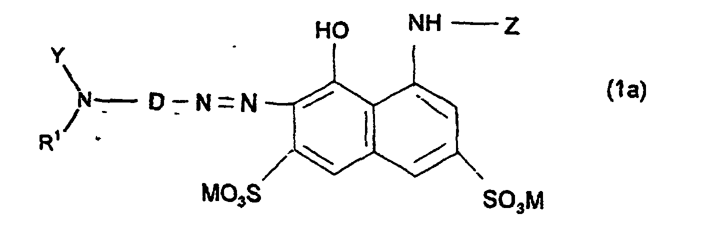 dans laquelle Y, R¹, D, M et Z ont l'une des significations mentionnées dans les revendications 1 à 6.

8. Colorant azoïque selon la revendication 7, caractérisé en ce que Z représente le radical 2-fluoro-4-(N-morpholino)-1,3,5-triazin-6-yle.

9. Colorant azoïque selon la revendication 1 de formule générale (6) 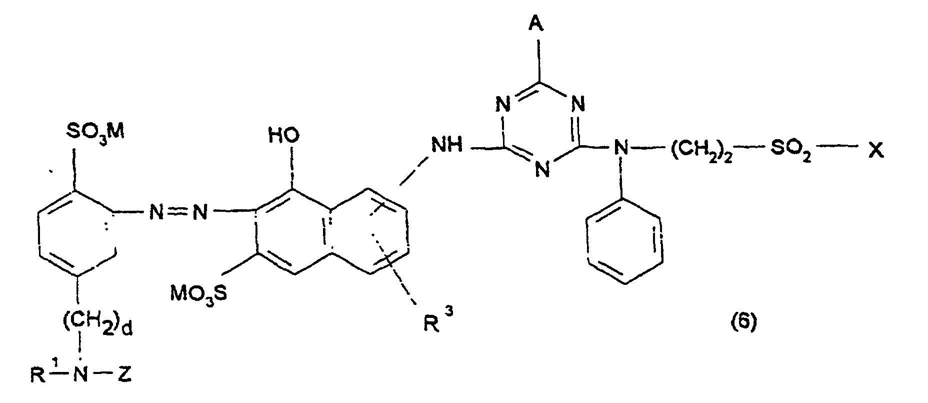 dans laquelle
M et d ont les significations mentionnées à la revendication 1,
Z a l'une des significations mentionnées dans les revendications 1 ou 6,
R³ représente un hydrogène ou un sulfo,
X représente un vinyle ou un β-sulfatoéthyle,
R¹ représente un hydrogène, un méthyle ou éthyle, et
A représente un amino, un cyanoamino, un méthoxy, un phénoxy, un sulfophénylamino, un (β-sulfoéthyl)-amino, un 3-carboxypyridinyle ou un 3-aminocarbonylpyridinyle.

10. Colorant azoïque selon la revendication 1 de formule générale (7) 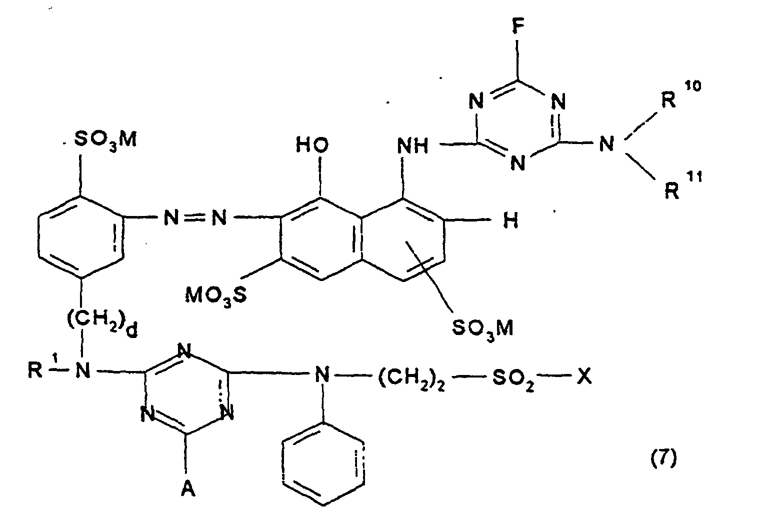 dans laquelle :
M, d, R¹⁰ et R¹¹ ont les significations mentionnées à la revendication 1,
X représente un vinyle ou un β-sulfatoéthyle,
R¹ représente un hydrogène, un méthyle ou un éthyle, et
A représente un amino, un cyanoamino, un méthoxy, un phénoxy, un (β-sulfoéthyl)-amino, un sulfophénylamino, un 3-carboxypyridinyle ou un 3-aminocarbonylpyridinyle.

11. Colorant azoïque selon au moins l'une des revendications 1 à 6, caractérisé en ce que R¹ et R² représentent tous deux un hydrogène.

12. Colorant azoïque selon au moins l'une des revendications 1 à 4, 6 à 8 et 11, caractérisé en ce que X représente un vinyle ou un β-sulfatoéthyle.

13. Procédé de préparation des colorants azoïques de formule générale (1) mentionnés et définis à la revendication 1, caractérisé en ce que l'on fait réagir ensemble un composé azoïque de formule générale (8) 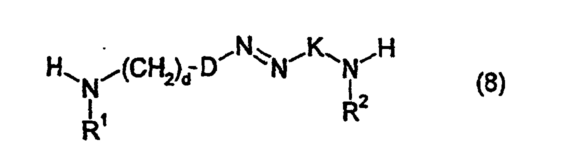 dans laquelle R¹, R², d, D et K ont les significations mentionnées à la revendication 1, dans un ordre quelconque avec, dans chaque cas, un équivalent molaire d'un composé de formule générale Z-Hal, dans laquelle Z a la signification mentionnée à la revendication 1 et Hal représente un halogène, et d'un composé de formule générale (9) 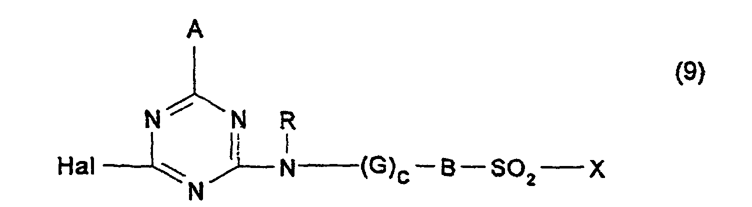 dans laquelle A, Hal, R, G, c, B et X ont les significations mentionnées à la revendication 1, ou en ce que l'on fait réagir ensemble un composé de formule générale (8) dans un ordre quelconque avec, dans chaque cas, un équivalent molaire d'un composé de formule générale Z-Hal définie ci-dessus et d'un composé de formule générale (10) 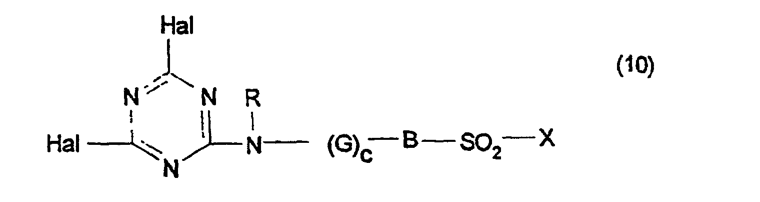 dans laquelle Z, Hal, R, G, c, B et X ont les significations susmentionnées, et l'on fait réagir le composé de formule générale (11) ainsi obtenu 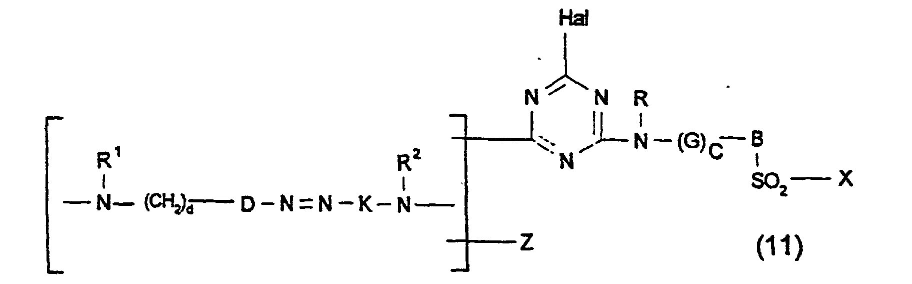 dans laquelle R¹, R², d, D, K, Hal, R, G, c, B, X et Z ont les significations mentionnées à la revendication 1, avec un composé de formule générale H-A dans laquelle A a la signification mentionnée à la revendication 1,
ou en ce que l'on fait réagir des composés de formules générales (12) et (13) 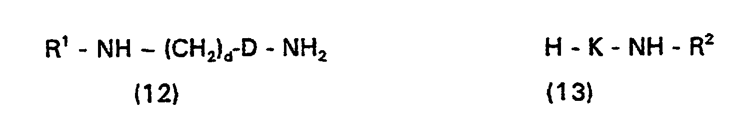 dans lesquelles R¹, d, D, K et R² ont les significations susmentionnées, en variante avec, dans chaque cas, un équivalent molaire d'un composé de formule générale (9) et d'un composé de formule générale Z-Hal, et l'on procède à la diazotation du composé de formules générales (14a) ou (14b) ainsi obtenu 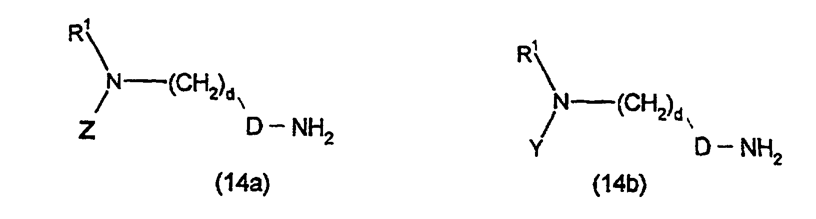 dans lesquelles Z, Y, R¹, d et D ont les significations mentionnées à la revendication 1, et l'on procède au couplage habituel du composé sel de diazonium obtenu avec le composé de formule générale (15a), respectivement (15b) 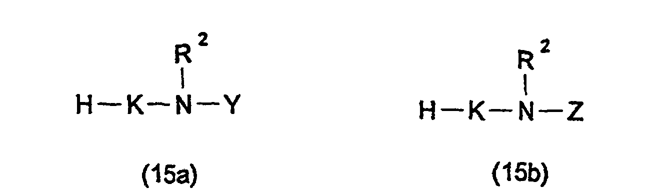 dans laquelle K, R², Y et Z ont les significations mentionnées à la revendication 1, et on réalise ensuite éventuellement d'autres réactions de transformation des colorants azoïques de formule générale (1) obtenus selon l'invention pour donner d'autres colorants azoiques de formule générale (1) selon l'invention.

14. Utilisation d'un colorant selon la revendication 1 ou d'un colorant préparé selon la revendication 13 pour la teinture (y compris l'impression) d'une matière renfermant des groupes hydroxy et/ou carboxamide, en particulier d'une matière fibreuse.

15. Procédé de teinture (y compris d'impression) d'une matière renfermant des groupes hydroxy et/ou carboxamide, en particulier d'une matière fibreuse, dans lequel on applique un colorant sur la matière et on fixe le colorant sur la matière par la chaleur ou à l'aide d'un agent alcalin ou au moyen des deux mesures ; caractérisé en ce que l'on utilise, en tant que colorant, un colorant selon la revendication 1 ou un colorant préparé selon la revendication 13.
